Europäisches Patentamt

European Patent Office

Office européen des brevets

(19)

(11)  EP 0 593 980 B1

(12)  EUROPÄISCHE PATENTSCHRIFT

(45) Veröffentlichungstag und Bekanntmachung des Hinweises auf die Patenterteilung:
07.01.1998  Patentblatt 1998/02

(51) Int Cl.$^6$: **G01M 11/00**

(21) Anmeldenummer: 93116175.6

(22) Anmeldetag: 06.10.1993

(54) **Verfahren und Einrichtung für Messungen an mehreren Lichtwellenleitern**

Procedure and device for performing measurements on several optical fibres

Procédé et dispositif pour exécuter des mesures sur plusieurs fibres optiques

(84) Benannte Vertragsstaaten:
AT BE CH DE FR GB IT LI NL SE

(30) Priorität: 20.10.1992  DE 4235313
19.05.1993  DE 4316874
24.08.1993  DE 4328464

(43) Veröffentlichungstag der Anmeldung:
27.04.1994  Patentblatt 1994/17

(73) Patentinhaber: SIEMENS AKTIENGESELLSCHAFT
80333 München (DE)

(72) Erfinder:
• Ruegenberg, Gervin
D-81377 München (DE)
• Kossat, Rainer
D-83229 Aschau (DE)

(56) Entgegenhaltungen:
EP-A- 0 582 831          US-A- 4 639 130
US-A- 4 812 646

• PATENT ABSTRACTS OF JAPAN vol. 11, no. 299 (P-621)(2746) 29. September 1987 & JP-A-62 091 832 (FUJIKURA LTD)

**Beschreibung**

Die Erfindung betrifft ein Verfahren für Messungen an mehreren Lichtwellenleitern, wobei Licht sendeseitig in die jeweils zu messenden Lichtwellenleiter eingekoppelt wird und wobei jeweils empfangsseitig ein Teil dieses Lichtes ausgekoppelt und ausgewertet wird, wobei sendeseitig ein Sende-Strahlungsfeld mit seinem Lichtfleck über Einkoppel-Abschnitte der zu messenden Lichtwellenleiter zeitlich nacheinander bewegt und in diese eingekoppelt wird, wobei empfangsseitig der sendeseitigen Einkopplung zugeordnete Empfangs-Strahlungsfelder der zu messenden Lichtwellenleiter in ihrer zeitlichen Verteilung zueinander erfaßt werden, und wobei diese zeitliche Verteilung zur Auswertung bereitgestellt wird.

Aus der älteren, nicht vorveröffentlichten EP 0 582 831 A1 ist eine Einrichtung für Messungen an mehreren Lichtwellenleitern bekannt, bei der aus mindestens einem optischen Sendeelement jeweils ein Sende-Strahlungsfeld mit seinem Leuchtfleck entlang der Einkoppelabschnitte der zu messenden Lichtwellenleiter in diese zeitlich nacheinander einkoppelbar ist. Auf der Empfangsseite werden mit Hilfe eines optischen Empfängers Empfangs-Strahlungsfelder der zu messenden Lichtwellenleiter erfaßt und daraus unterscheidbare Meßsignale erzeugt. Diese Meßsignale sind in einer Auswerteeinrichtung getrennt auswertbar.

Aus der EP 0 411 956 A2 ist eine Meßeinrichtung zur Beurteilung einer Mehrfaser-Verbindungsstelle bekannt. Sie weist einen optischen Schalter auf, dessen Schaltwege bzw. Übertragungskanäle jeweils mit äquidistant angeordneten Meß-Lichtwellenleitern stirnseitig fest verspleißt sind. Sendeseitig wird jeweils ein Meßsignal aus einem optischen Sender zeitlich nacheinander in die Schaltwege des optischen Schalters eingespeist und empfangsseitig mit einem Empfangselement eines optischen Empfängers aufgenommen und getrennt ausgewertet. Dadurch, daß der optische Sender mit dem optischen Schalter sowie die Meß-Lichtwellenleiter mit den Schaltwegen bzw. Übertragungskanälen des optischen Schalters fest verbunden sind, ist der Aufwand für die An- bzw. Abkopplung der Meß-Lichtwellenleiter hoch. Die bekannte Meßeinrichtung ist auf die feste Ankopplung des optischen Senders an die äquidistant angeordneten Meß-Lichtwellenleiter abgestellt und beschränkt. Bei schwankenden bzw. variierenden Koppelverhältnissen, wie sie z.B. bei optischen Übertragungsstrecken mit Lichtwellenleiter-Bändchen durch nicht äquidistant angeordnete Lichtwellenleiter, durch unterschiedliche Farbaufträge oder durch verschiedene Beschichtungen (Coatings) der Lichtwellenleiter auftreten können, ist die bekannte Meßeinrichtung kaum zu gebrauchen.

Der Erfindung liegt die Aufgabe zugrunde, einen Weg aufzuzeigen, wie die Koppelverhältnisse für Messungen an mehreren Lichtwellenleitern in einfacher Weise verbessert werden können.

Gemäß der Erfindung wird diese Aufgabe bei einem Verfahren der eingangs genannten Art dadurch gelöst, daß aufgrund dieser zeitlichen Verteilung der Empfangs-Strahlungsfelder sendeseitig der Lichtfleck des Sende-Strahlungsfeldes derart gesteuert wird, daß aufgrund dieser zeitlichen Verteilung der Empfangs-Strahlungsfelder während der Bewegung des Lichtflecks über die Einkoppel- Abschnitte der zu messenden Lichtwellenleiter die Koppelverhältnisse sende- und/oder empfangsseitig weitgehend unabhängig von Lichtwellenleiter-Koppeleigenschaften gemacht werden.

Gegenüber der bei der EP 0 411 956 A2 angewandten starren Ankopplung der Sendeseite an die Lichtwellenleiter mittels Schaltern bietet die Erfindung vielfältige Möglichkeiten, zusätzliche Informationen zum Beispiel über die Lage oder den Zustand der Lichtwellenleiter zu gewinnen. Darüber hinaus ist der bei der Erfindung eingeschlagene Weg der Ankopplung mittels eines Sende-Strahlungsfeldes in der Praxis wesentlich einfacher und schneller zu realisieren als die Ankopplung mittels fester optischer Leitungen und zusätzlich eingefügter optischer Schalter. Durch eine Zuordnung zwischen dem Sende-Strahlungsfeld auf der einen Seite und den Empfangs-Strahlungsfeldern auf der anderen Seite im Hinblick auf deren zeitliche Verteilung lassen sich detaillierte Informationen zum Beispsiel über den Zustand, die Lage, das Dämpfungsverhalten usw. der einzelnen Lichtwellenleiter gewinnen und diese können somit für verschiedene Anwendungsfälle zur weiteren Auswertung bereitgestellt werden.

Es wird also mittels der zeitlichen Verteilung der Empfangs-Strahlungsfelder sendeseitig der Lichtfleck des Sende-Strahlungsfeldes gesteuert. Dadurch kann eine Art "Rückkopplung" zwischen Sende- und Empfangsseite hergestellt werden, so daß das jeweilige Empfangs-Strahlungsfeld für jeden zu messenden Lichtwellenleiter individuell beeinflußt werden kann. Auf diese Weise sind z.B. die Empfangs-Strahlungsfelder unabhängig von den sende- und/oder empfangsseitigen Koppelverhältnissen vorgebbar und auch in gewissen Grenzen kontrolliert einhaltbar. Dies spielt zum Beispiel besonders bei Messungen an mehreren Lichtwellenleitern eine Rolle, die sich in ihren Koppeleigenschaften voneinander unterscheiden. Ursache dafür können beispielsweise unterschiedliche Farbaufträge (zum Beispiel rot, grün,blau), voneinander verschiedene Farb-Auftragsstärken, unterschiedliche Beschichtungen (Coatings) oder aber auch voneinander verschiedene Fasergeometrien (z.B. Kernexzentrizitäten) sein. Durch die zeitliche Auflösung der Empfangs-Strahlungsfelder während der Bewegung des Lichtflecks über die Einkoppel-Abschnitte der zu messenden Lichtwellenleiter können die Koppelverhältnisse sende- und/oder empfangsseitig weitgehend unabhängig von Lichtwellenleiter-Positionen, insbesondere von deren Kernlagen, gemacht werden. Das Sende-Strahlungsfeld braucht jeweils nicht in seiner spezifischen, räumlichen Zuordnung zu den zu messenden Lichtwellenleitern stehen.

Dieser Vorteil ist besonders bei Messungen an Lichtwellenleiter-Bändchen (bzw. optischen Bandleitungen) von Bedeutung.

Insgesamt betrachet können also während der Bewegung des Lichtflecks über die Einkoppel- Abschnitte der zu messenden Lichtwellenleiter die Koppelverhältnisse sende- und/oder empfangsseitig weitgehend unabhängig von Lichtwellenleiter-Koppeleigenschaften gemacht werden.

Gemäß einer zweckmäßigen Weiterbildung der Erfindung wird aus der zeitlichen Verteilung der Empfangs-Strahlungsfelder die örtliche Lage der Lichtwellenleiter bestimmt und zur Auswertung bereitgestellt. Die örtliche Lage der Lichtwellenleiter spielt in verschiedener Hinsicht eine besondere Rolle. Beispielsweise kann es wichtig sein, die örtliche Lage der Lichtwellenleiter innerhalb eines Lichtwellenleiter-Bändchens zu kennen, weil diese Information sonst nur sehr schwer anderweitig zu gewinnen ist.

Gemäß einer weiteren zweckmäßigen Weiterbildung der Erfindung wird aus der gemessenen zeitlichen Verteilung der Empfangs-Strahlungsfelder vorzugsweise die zeitliche Abfolge derjenigen Zeitintervalle bestimmt, zu denen Licht in den zu messenden Lichtwellenleiter während der sendeseitigen Bewegung des Lichtflecks geführt wird. Die Zeitintervalle aus dieser Referenzmessung markieren jeweils in etwa den Ort des Licht führenden Lichtwellenleiter-Kernes. So kann zum Beispiel für nachfolgende, eigentliche Messungen an den Lichtwellenleitern das Sende-Strahlungsfeld entsprechend der aufgenommenen Abfolge von Licht führenden Zeitintervallen bzw. Einkoppel-Zeitintervallen eingeschaltet (getastet) werden. Der Lichtfleck beleuchtet somit nur während dieser spezifischen Einkoppel-Zeitintervalle sendeseitig die Einkoppel-Abschnitte der zu messenden Lichtwellenleiter, während er in den übrigen Zeiten seiner Bewegung ausgeschaltet werden kann. Die sendeseitige Einkopplung des Sende-Strahlungsfeldes mit seinem Lichtfleck wird also in einer Art Pulsbetrieb durchgeführt. Dadurch ergeben sich vielfältige Möglichkeiten hinsichtlich einer besseren Ausnutzung des vom Sender abgestrahlten Lichtes. Beispielsweise kann der Sender selbst durch den Pulsbetrieb besser ausgenutzt und somit das Sende-Strahlungsfeld mit höherer Lichtleistung in die jeweils zu messenden Lichtwellenleiter eingespeist werden. Es geht somit weniger Lichtenergie nutzlos verloren. Auch kann unter Umständen die für die eigentliche Messung benötigte sendeseitige mittlere Lichtleistung in gewissem Umfang verringert werden, so daß insbesondere bei Verwendung eines Lasers als Senderelement Probleme der Augensicherheit gegebenenfalls entschärft werden können.

Gemäß einer vorteilhaften Weiterbildung der Erfindung kann die ermittelte örtliche Lage der Lichtwellenleiter dargestellt und/oder aufgezeichnet werden. Ein derartiger Anwendungsfall der Erfindung ist insbesondere dann von Interesse, wenn zum Beispiel im Rahmen einer Fertigungseinrichtung für Lichtwellenleiter-Bändchen deren Lage innerhalb der gemeinsamen Umhüllung fortlaufend kontrolliert und gegebenenfalls registriert werden soll. Insbesondere im Hinblick auf die notwendigen Spleißvorgänge werden an die genaue Lage der Lichtwellenleiter innerhalb des Bändchens hohe Anforderungen gestellt, weil nur bei einer weitgehend gleichbleibenden Positionierung der Lichtwellenleiter auch der Spleißvorgang entsprechend vereinfacht und exakter durchgeführt werden kann. Die aus der zeitlichen Verteilung der Empfangs-Strahlungsfelder erfindungsgemäß gewonnene einfache Aussage über die räumliche Lage der Lichtwellenleiter bzw. Lichtwellenleiter-Kerne ermöglicht hier eine einfache Durchführung der Maßnahmen zur Qualitätssicherung. In diesem Zusammenhang ist es auch von besonderem Interesse, daß die Aussage der Erfindung in erster Linie auch eine Aussage über die Lage der Lichtwellenleiter-Kerne liefert, wobei darauf hinzuweisen ist, daß mit anderen Mitteln die Bestimmung der Lage der Lichtwellenleiter-Kerne nur sehr schwer und relativ umständlich durchgeführt werden kann. Das gemäß der Erfindung bestimmte Empfangs-Strahlungsfeld des einzelnen Lichtwellenleiters liegt auch genau dort, wo später zum Beispiel bei einem Spleißvorgang die etwa aufeinander auszurichtenden Kerne der Lichtwellenleiter liegen, so daß die Erfindung auch unmittelbar eine Aussage ermöglicht, wo die geometrisch beste Lichtführung im Lichtwellenleiter erfolgt.

Gemäß einer weiteren zweckmäßigen Ausführungsform der Erfindung wird aus der zeitlichen Verteilung der Empfangs-Strahlungsfelder jeweils deren Lichtleistung bestimmt und zur Auswertung bereitgestellt. Die so gewonnene zusätzliche Information läßt Beurteilungen insbesondere im Hinblick auf zum Beispielunterschiedliche Übertragungsdämpfungen der einzelnen Lichtwellenleiter, etwaige unterschiedliche Positionierungen und Zuordnungen, sowie zum Beispiel auch über die Qualität von Spleißverbindungen zu.

Mittels dieser empfangsseitig selektiv aufgenommenen Lichtleistungen kann gemäß einer vorteilhaften Weiterbildung der Erfindung sendeseitig der Lichtfleck des Sende-Strahlungsfeldes gesteuert werden. Dadurch läßt sich für jeden zu messenden Lichtwellenleiter zum Beispiel eine bestimmte Sendeleistung individuell so einstellen, daß sich für diesen empfangsseitig ein bestimmter Leistungspegel bzw. eine vorgegebene Lichtleistung erreichen läßt. Vorteilhaft kann insbesondere die Sendeseite dabei so eingestellt werden, daß sich die empfangsseitig aufgenommenen Empfangs-Strahlungsfelder in ihrer Lichtleistung insgesamt nur geringfügig voneinander unterscheiden. Auf diese Weise wird jeweils das Signal-Rauschverhältnis individuell für diejenigen der zu messenden Lichtwellenleiter verbessert, bei denen ursprünglich die Intensität der Empfangs-Strahlungsfelder gering bzw. sehr gering war. Auch kann auf diese Weise eine Übersteuerung der empfangsseitigen Auswertevorrichtung bei denjenigen Lichtwellenleitern vermieden werden, die sehr hohe Empfangs-Strahlungsfelder liefern. Durch die Einstellung etwa gleich hoher Empfangspegel entfällt zudem auch eine sonst notwendige, aufwendige Umschaltung von Verstärkerstufen im Empfänger.

Gemäß einer weiteren zweckmäßigen Weiterbildung der Erfindung können die so bestimmten Lichtleistungen der einzelnen Lichtwellenleiter dargestellt und/ oder aufgezeichnet werden. Dies ist insbesondere für solche Anwendungsfälle von Interesse, wo etwa die Qualität einer bereits durchgeführten Spleißverbindung beurteilt werden soll. Die gemessenen einzelnen Lichtleistungen, die für die Bedienungsperson zum Beispiel auf einer Anzeigeeinrichtung (Display) dargestellt werden, ermöglichen eine unmittelbare Beurteilung der Güte der Spleißverbindung. Neben einer optischen Anzeige kann auch eine fortlaufende Registrierung der gemessenen Amplitudenwerte durchgeführt werden.

Die Erfindung betrifft auch eine Einrichtung für Messungen an mehreren Lichtwellenleitern mit einer optischen Sende/Koppeleinrichtung, die an die jeweils zu messenden Lichtwellenleiter ankoppelbar ist, sowie mit einem optischen Empfänger, der mindestens ein Empfangselement aufweist, dem eine Auswerteeinrichtung zugeordnet ist, wobei die Sende/Koppeleinrichtung derart ausgebildet ist, daß sendeseitig jeweils ein Sende-Strahlungsfeld mit seinem Lichtfleck über Einkoppel-Abschnitte der zu messenden Lichtwellenleiter zeitlich nacheinander bewegbar und in diese einkoppelbar ist, wobei im optischen Empfänger das Empfangselement so ausgerichtet und ausgebildet ist, daß dieses jeweils der sendeseitigen Einkopplung zugeordnete Empfangs-Strahlungsfelder der zu messenden Lichtwellenleiter in ihrer zeitlichen Verteilung erfaßt, daraus Empfangssignale erzeugt, und diese einer Auswerteeinrichtung (AE1) zuführt, und wobei mit der empfangsseitigen Auswerteeinrichtung sendeseitig eine Ansteuervorrichtung für die Sende-/Koppeleinrichtung derart verbunden und ausgebildet ist, daß mittels der zeitlichen Verteilung der Empfangs-Strahlungsfelder sendeseitig der Lichtfleck des Sende-Strahlungsfeldes so gesteuert ist, daß aufgrund dieser zeitlichen Verteilung der Empfangs-Strahlungsfelder während der Bewegung des Lichtflecks über die Einkoppel- Abschnitte der zu messenden Lichtwellenleiter die Koppelverhältnisse sende- und/ oder empfangsseitig weitgehend unabhängig von Lichtwellenleiter-Koppeleigenschaften gemacht werden.

Die Erfindung betrifft auch ein Verfahren für Messungen an mehreren Lichtwellenleitern, wobei Licht sendeseitig in die jeweils zu messenden Lichtwellenleiter eingekoppelt wird und wobei jeweils empfangsseitig ein Teil dieses Lichtes ausgekoppelt und ausgewertet wird, wobei sendeseitig ein Sende-Strahlungsfeld mit seinem Lichtfleck über Einkoppel-Abschnitte der zu messenden Lichtwellenleiter zeitlich nacheinander bewegt und in diese eingekoppelt wird, wobei empfangsseitig der sendeseitigen Einkopplung zugeordnete Empfangs-Strahlungsfelder der zu messenden Lichtwellenleiter in ihrer zeitlichen Verteilung zueinander erfaßt werden, wobei diese zeitliche Verteilung zur Auswertung bereitgestellt wird, und wobei der Lichtfleck des Sende-Strahlungsfeldes derart erzeugt wird, daß er am Einkoppelort eine größere räumliche Ausdehnung senkrecht zur Ausbreitungsrichtung des Sende-Strahlungsfeldes als in seine Abtastrichtung aufweist, daß aufgrund dieser räumlichen Abbildung des Lichtflecks während der Bewegung des Lichtflecks über die Einkoppel- Abschnitte der zu messenden Lichtwellenleiter die Koppelverhältnisse sende- und/oder empfangsseitig weitgehend unabhängig von Lichtwellenleiter-Koppeleigenschaften gemacht werden.

Dadurch, daß die räumliche Ausdehnung des Sende-Strahlungsfeldes am Einkoppelort und damit sein Lichtfleck senkrecht zur Ausbreitungsrichtung des Sende-Strahlungsfeldes größer als in Abtastrichtung des Lichtfleckes ist, d.h. der Lichtfleck erstreckt sich senkrecht zur Ausbreitungsrichtung des Sende-Strahlungsfeldes ungleichmäßig, ist weitgehend sichergestellt, daß die Kerne der Lichtwellenleiter auch bei voneinander abweichenden Kernlagen weitgehend vollständig ausgeleuchtet bzw. erfaßt werden. Eine individuelle, exakte Führung und Ausrichtung des Lichtfleckes LF auf den jeweiligen Lichtwellenleiterkern, wie sie zum Beispie 1 bei einem sehr kleinen punktförmigen Lichtfleck in der Größenordnung eines Lichtwellenleiter-Kerns (ca. 10 µm) notwendig ist, ist somit nicht erforderlich. Vielmehr kann Licht unabhängig von der jeweiligen Kern-Position in den Kern des jeweiligen Lichtwellenleiters mit ausreichend hoher Lichtleistung eingekoppelt werden. Unterschiedliche Kernlagen z.B. aufgrund von Toleranzen bzw. Schwankungen der Fasergeometrien sowie unterschiedlich dicken Beschichtungshüllen (Coatings) der zu messenden Lichtwellenleiter können auf diese Weise nicht zu einer Beeinträchtigung der Lichteinkopplung mit dem Lichtfleck führen. Durch die Vorzugsrichtung des Lichtfleckes senkrecht zur Ausbreitungsrichtung des Sende-Strahlungsfeldes werden die Kerne der Lichtwellenleiter vom wandernden Lichtfleck zuverlässig getroffen bzw. abgetastet und mit optimaler Lichtleistung jeweils selektiv bzw. individuell optimal ausgeleuchtet, so daß das Licht mit hohem Wirkungsgrad, das heißt hoher Lichtleistung, in die Kerne eingekoppelt werden kann. Insbesondere ist diese Abbildung des Lichtleitfleckes bei Lichtwellenleiter-Bändchen von Bedeutung, da dort die Lichtwellenleiter z.B. unterschiedliche Durchmesser aufweisen oder von einer verschieden dicken Außenhülle AH1 umgeben sein können, so daß die Lichtwellenleiter in ihr unterschiedliche Raumpositionen einnehmen.

Insbesondere weist der Lichtfleck zur zuverlässigen Lichteinkopplung eine etwa schlank ovale, ellipsenförmige bzw. streifenförmige Geometrie bzw. Querschnittsform in einer Einkoppel-Ebene senkrecht zur Ausbreitungsrichtung des Sende-Strahlungsfeldes und senkrecht zur Abtastrichtung des Lichtflecks auf.

Die Erfindung betrifft weiterhin eine Einrichtung für Messungen an mehreren Lichtwellenleitern mit einer optischen Sende-/Koppeleinrichtung, die an die jeweils zu messenden Lichtwellenleiter ankoppelbar ist, sowie mit einem optischen Empfänger, der mindestens ein Empfangselement aufweist, dem eine Auswerteeinrichtung zugeordnet ist, wobei die Sende/Koppeleinrichtung derart ausgebildet ist, daß sendeseitig jeweils ein Sende-Strahlungsfeld mit seinem Lichtfleck über Einkoppel-Abschnitte der zu messenden Lichtwellenleiter zeitlich nacheinander bewegbar und in diese einkoppelbar ist, wobei im optischen Empfänger das Empfangselement so ausgerichtet und ausgebildet ist, daß dieses jeweils der sendeseitigen Einkopplung zugeordnete Empfangs-Strahlungsfelder der zu messenden Lichtwellenleiter in ihrer zeitlichen Verteilung erfaßt, daraus Empfangssignale erzeugt, und diese einer Auswerteeinrichtung zuführt, und wobei in der Sende-/Koppeleinrichtung Mittel zur Abbildung des Sende-Strahlungsfeldes derart vorgesehen sind, daß der von ihnen erzeugte Lichtfleck am Einkoppelort eine solche größere räumliche Ausdehnung senkrecht zur Ausbreitungsrichtung des Sende-Strahlungsfeldes als in seine Abtastrichtung aufweist, so daß aufgrund dieser räumlichen Abbildung des Lichtflecks während der Bewegung des Lichtflecks über die Einkoppel- Abschnitte der zu messenden Lichtwellenleiter die Koppelverhältnisse sende- und/oder empfangsseitig weitgehend unabhängig von Lichtwellenleiter-Koppeleigenschaften gemacht werden.

Die Erfindung betrifft weiterhin ein Verfahren für Messungen an mehreren Lichtwellenleitern, wobei Licht sendeseitig in die jeweils zu messenden Lichtwellenleiter eingekoppelt wird und wobei jeweils empfangsseitig ein Teil dieses Lichtes ausgekoppelt und ausgewertet wird, wobei sendeseitig ein Sende-Strahlungsfeld mit seinem Lichtfleck über Einkoppel-Abschnitte der zu messenden Lichtwellenleiter zeitlich nacheinander bewegt und in diese eingekoppelt wird, wobei empfangsseitig der sendeseitigen Einkopplung zugeordnete Empfangs-Strahlungsfelder der zu messenden Lichtwellenleiter in ihrer zeitlichen Verteilung zueinander erfaßt werden, wobei diese zeitliche Verteilung zur Auswertung bereitgestellt wird, und wobei aufgrund dieser Registrierung der zeitlichen Verteilung der Empfangs-Strahlungsfelder bei nachfolgenden Messungen empfangsseitige Steuervorgänge derart ausgelöst werden, daß aufgrund dieser zeitlichen Verteilung der Empfangs-Strahlungsfelder während der Bewegung des Lichtflecks über die Einkoppel- Abschnitte der zu messenden Lichtwellenleiter die Koppelverhältnisse sende- und/oder empfangsseitig weitgehend unabhängig von Lichtwellenleiter-Koppeleigenschaften gemacht werden.

Die Erfindung betrifft weiterhin auch eine Einrichtung für Messungen an mehreren Lichtwellenleitern mit einer optischen Sende-/Koppeleinrichtung, die an die jeweils zu messenden Lichtwellenleiter ankoppelbar ist, sowie mit einem optischen Empfänger, der mindestens ein Empfangselement aufweist, dem eine Auswerteinrichtung zugeordnet ist, wobei die Sende/Koppeleinrichtung derart ausgebildet ist, daß sendeseitig jeweils ein Sende-Strahlungsfeld mit seinem Lichtfleck über Einkoppel-Abschnitte der zu messenden Lichtwellenleiter zeitlich nacheinander bewegbar und in diese einkoppelbar ist, wobei im optischen Empfänger das Empfangselement so ausgerichtet und ausgebildet ist, daß dieses jeweils der sendeseitigen Einkopplung zugeordnete Empfangs-Strahlungsfelder der zu messenden Lichtwellenleiter in ihrer zeitlichen Verteilung erfaßt, daraus Empfangssignale erzeugt, und diese einer Auswerteeinrichtung zuführt, und wobei Steuermittel vorgesehen sind, die aufgrund dieser Registrierung der zeitlichen Verteilung der Empfangs- Strahlungsfelder bei nachfolgenden Messungen empfangsseitige Steuervorgänge derart auslösen, daß aufgrund dieser zeitlichen Verteilung der Empfangs-Strahlungsfelder während der Bewegung des Lichtflecks über die Einkoppel-Abschnitte der zu messenden Lichtwellenleiter die Koppelverhältnisse sende- und/oder empfangsseitig weitgehend unabhängig von Lichtwellenleiter-Koppeleigenschaften gemacht werden.

Die Erfindung betrifft weiterhin ein Verfahren für Messungen an mehreren Lichtwellenleitern, wobei Licht sendeseitig in die jeweils zu messenden Lichtwellenleiter eingekoppelt wird und wobei jeweils empfangsseitig ein Teil dieses Lichtes ausgekoppelt und ausgewertet wird, wobei sendeseitig ein Sende-Strahlungsfeld mit seinem Lichtfleck über Einkoppel-Abschnitte der zu messenden Lichtwellenleiter zeitlich nacheinander bewegt und in diese eingekoppelt wird, wobei empfangsseitig der sendeseitigen Einkopplung zugeordnete Empfangs-Strahlungsfelder der zu messenden Lichtwellenleiter in ihrer zeitlichen Verteilung zueinander erfaßt werden, wobei diese zeitliche Verteilung zur Auswertung bereitgestellt wird, und wobei die Fokussierungsfläche des Sende-Strahlungsfeldes gegenüber einer senkrecht zur Strahlungsrichtung gedachten Ebene in Richtung auf die Einkoppelfläche des Einkoppel-Abschnitts derart geneigt wird, daß aufgrund dieser Neigung der Fokussierungsfläche des Sende- Strahlungsfelds während der Bewegung des Lichtflecks über die Einkoppel- Abschnitte der zu messenden Lichtwellenleiter die Koppelverhältnisse sende- und/oder empfangsseitig weitgehend unabhängig von Lichtwellenleiter-Koppeleigenschaften gemacht werden.

Die Erfindung betrifft auch eine Einrichtung für Messungen an mehreren Lichtwellenleitern mit einer optischen Sende-/Koppeleinrichtung, die an die jeweils zu messenden Lichtwellenleiter ankoppelbar ist, sowie mit einem optischen Empfänger, der mindestens ein Empfangselement aufweist, dem eine Auswerteeinrichtung zugeordnet ist, wobei die Sende/Koppeleinrichtung derart ausgebildet ist, daß sendeseitig jeweils ein Sende-Strahlungsfeld (SF) mit seinem Lichtfleck über Einkoppel-Abschnitte der zu messenden Lichtwellenleiter zeitlich nacheinander bewegbar und in diese einkoppelbar ist, wobei im optischen Empfänger das Empfangselement so ausgerichtet und ausgebildet ist, daß dieses jeweils der sendeseitigen Einkopplung zugeordnete Empfangs-Strahlungsfelder der zu messenden Lichtwellenleiter in ihrer zeitlichen Verteilung erfaßt, daraus Empfangssignale erzeugt, und diese einer Auswerteeinrichtung zugeführt, und wobei mindestens ein Abbildungsmittel vorgesehen ist, das die Fokussierungsfläche des Sende-Strahlungsfeldes gegenüber einer senkrecht zur Strahlungsrichtung (x) gedachten Ebene (y,z) in Richtung auf die Einkoppelfläche des Einkoppel-Abschnitts derart neigt, daß aufgrund dieser Neigung der Fokussierungsfläche des Sende- Strahlungsfelds während der Bewegung des Lichtflecks über die Einkoppel- Abschnitte der zu messenden Lichtwellenleiter die Koppelverhältnisse sende- und/oder empfangsseitig weitgehend unabhängig von Lichtwellenleiter-Koppeleigenschaften gemacht werden.

Die Erfindung betrifft auch ein Verfahren für Messungen an mehreren Lichtwellenleitern, wobei Licht sendeseitig in die jeweils zu messenden Lichtwellenleiter eingekoppelt wird und wobei jeweils empfangsseitig ein Teil dieses Lichtes ausgekoppelt und ausgewertet wird, wobei sendeseitig ein Sende-Strahlungsfeld mit seinem Lichtfleck über Einkoppel-Abschnitte der zu messenden Lichtwellenleiter zeitlich nacheinander bewegt und in diese eingekoppelt wird, wobei empfangsseitig der sendeseitigen Einkopplung zugeordnete Empfangs-Strahlungsfelder der zu messenden Lichtwellenleiter in ihrer zeitlichen Verteilung zueinander erfaßt werden, wobei diese zeitliche Verteilung zur Auswertung bereitgestellt wird, und wobei der Lichtfleck des Sende-Strahlungsfeldes entlang der Längsachse des zu messenden Lichtwellenleiters derart hin- und herbewegt wird, daß aufgrund dieser Hin- und Herbewegung des Lichtflecks während der Bewegung des Lichtflecks über die Einkoppel-Abschnitte der zu messenden Lichtwellenleiter die Koppelverhältnisse sende- und/oder empfangsseitig weitgehend unabhängig von Lichtwellenleiter-Koppeleigenschaften gemacht werden.

Die Erfindung betrifft auch ein Einrichtung für Messungen an mehreren Lichtwellenleitern mit einer optischen Sende-/Koppeleinrichtung, die an die jeweils zu messenden Lichtwellenleiter ankoppelbar ist, sowie mit einem optischen Empfänger, der mindestens ein Empfangselement aufweist, dem eine Auswerteeinrichtung zugeordnet ist, wobei die Sende/Koppeleinrichtung derart ausgebildet ist, daß sendeseitig jeweils ein Sende-Strahlungsfeld mit seinem Lichtfleck über Einkoppel-Abschnitte der zu messenden Lichtwellenleiter zeitlich nacheinander bewegbar und in diese einkoppelbar ist, wobei im optischen Empfänger das Empfangselement so ausgerichtet und ausgebildet ist, daß dieses jeweils der sendeseitigen Einkopplung zugeordnete Empfangs-Strahlungsfelder der zu messenden Lichtwellenleiter in ihrer zeitlichen Verteilung erfaßt, daraus Empfangssignale erzeugt, und diese einer Auswerteeinrichtung zugeführt, und wobei eine Ablenkeinrichtung vorgesehen ist, die den Lichtfleck des Sende-Strahlungsfeldes entlang der Längsachse des zu messenden Lichtwellenleiters derart hin- und herbewegt, daß aufgrund dieser Hin- und Herbewegung des Lichtflecks während der Bewegung des Lichtflecks über die Einkoppel-Abschnitte der zu messenden Lichtwellenleiter die Koppelverhältnisse sende- und/oder empfangsseitig weitgehend unabhängig von Lichtwellenleiter-Koppeleigenschaften gemacht werden.

Sonstige Weiterbildungen der Erfindung sind in den Unteransprüchen wiedergegeben.

Die Erfindung und ihre Weiterbildungen werden nachfolgend anhand von Zeichnungen näher erläutert. Es zeigen:

Fig. 1    in teilweise perspektivischer Darstellung den schematischen Gesamtaufbau einer Meßeinrichtung zur Durchführung des erfindungsgemäßen Verfahrens,

Fig. 2    ein Ausführungsbeispiel zum sendeseitigen Aufbau der Meßeinrichtung nach Figur 1 im Detail,

Fig. 3    in schematischer Darstellung einen ersten Sendepegel für eine sendeseitige Einkopplung nach Figur 1,

Fig. 4    einen zugehörigen Empfangspegel zum Sendepegel von Figur 3,

Fig. 5    einen zweiten Sendepegel für die sendeseitige Einkopplung nach Fig. 1,

Fig. 6    einen dritten Sendepegel für die sendeseitige Einkopplung nach Figur 1,

Fig. 7    einen vierten Sendepegel für die sendeseitige Einkopplung nach Fig. 1,

Fig. 8    einen zu den Sendepegeln der Figuren 6 und 7 zugehörigen Empfangspegel.

Fig. 9    in schematischer Darstellung eine Scan- bzw. Abtastebene bei der sendeseitigen Einkopplung,

Fig. 10   in schematischer Darstellung eine Einkoppel-Ebene senkrecht zur Zeichenebene von Figur 9 mit zugehörigem Lichtfleck

Fig. 11   in teilweise perspektivischer Darstellung eine Abwandlung der Meßeinrichtung nach Fig.1 zur Durchführung des erfindungsgemäßen Verfahrens,

Fig. 12   den Verlauf einer sendeseitigen, sinusförmigen Strahlablenk-Bewegung mit der Meßeinrichtung nach Fig. 11,

Fig. 13   einen zur Strahlablenk-Bewegung nach Fig. 12 zugehörigen Empfangspegel vier zu messender Lichtwellenleiter,

Fig. 14   einen weiteren Empfangspegel vier zu messender Lichtwellenleiter bei einer sendeseitigen, linearen Strahlablenk-Bewegung mit der Meßeinrichtung nach Fig. 11 in vergrößerter Darstellung,

Fig. 15   in vergrößerter Darstellung die Empfangspegel zweier bnachbarter Lichtwellenleiter nach Figur 13,

Fig. 16    schematisch den Zeitrahmen eines empfangsseitigen Integrators im optischen Empfänger der Meßeinrichtung nach Figur 11,

Fig. 17    in schematischer Darstellung eine Einkoppel-ebene x, z nach Fig. 2, in der der Einkoppel-Abschnitt eines zu messenden Lichtwellenleiters mit einer zugeordneten Fokussierungslinie verläuft,

Fig. 18    in vergrößerter Darstellung schematisch eine für einen Lichtwellenleiter-Kern optimiert eingestellte Fokussierungsfläche nach Fig. 17,

Fig. 19    schematisch in perspektivischer Darstellung zwei durch Astigmatismus erzeugte Fokussierungsflächen zur sendeseitigen Lichteinkopplung gemäß Fig. 2,

Fig. 20    eine ortsabhängige Abstrahlcharakteristik des Sende-Strahlungsfeldes am Einkoppelort bei einer sendeseitigen Einkoppeleinrichtung nach Fig. 2,

Fig. 21    schematisch einen unscharfen Lichtfleck entlang des jeweiligen Einkoppel-Abschnitts bei einer sendeseitigen Lichteinkopplung ohne Glaskeil nach Fig. 2,

Fig. 22    schematisch einen scharf auf den jeweiligen Einkoppel-Abschnitt abgebildeten Lichtfleck bei einer sendeseitigen Lichteinkopplung mit Glaskeil nach Figur 2 und

Fig. 23    schematisch in perspektivischer Darstellung eine für zwei unterschiedliche Kernlagen zu messender Lichtwellenleiter eingestellte Fokussierungsfläche nach Fig. 17.

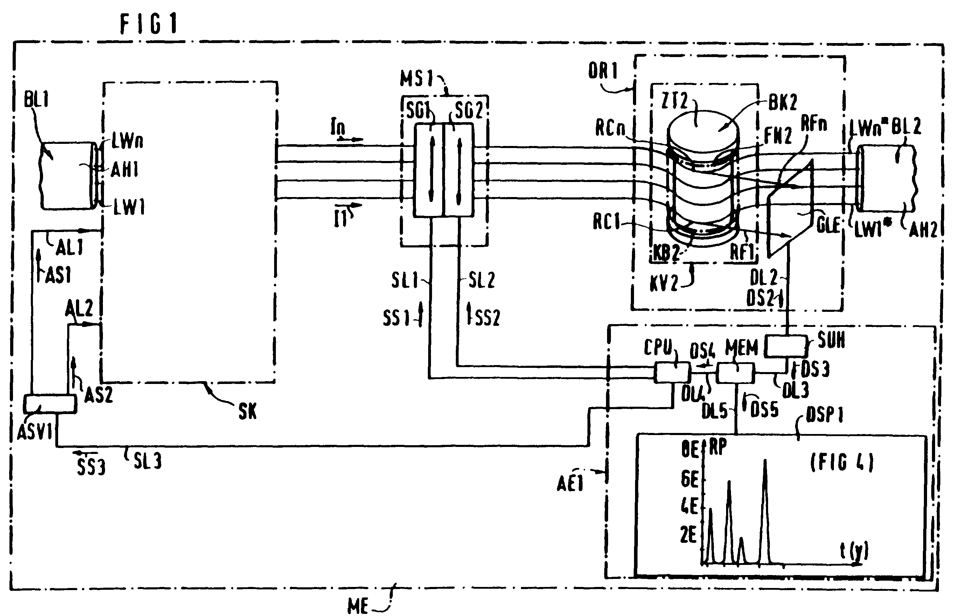

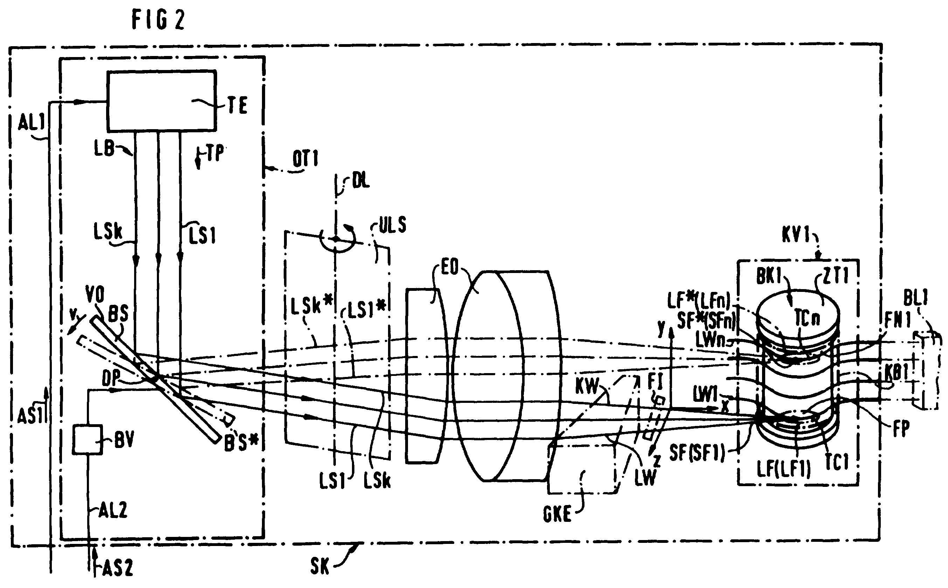

Figur 1 zeigt eine erfindungsgemäße Meßeinrichtung ME, die als Komponenten eine Sende-/Koppeleinrichtung SK mit einem optischen Sender OT1 samt zugehöriger Koppelvorrichtung KV1 (vgl. Figur 2), eine ihr zugeordnete Ansteuervorrichtung ASV1, einen optischen Empfänger OR1 und eine Auswerteeinrichtung AE1 aufweist. Diese Komponenten können zusammen mit einer strichpunktiert eingerahmten Mehrfach-Spleißeinrichtung MS1 zweckmäßigerweise zu einem Meßkoffer z.B. eines Lichtwellenleiter-Spleißgerätes oder eines Dämpfungsmeßgerätes zusammengefaßt sein. Die Erfindung kann neben diesem besonders vorteilhaften Anwendungsgebiet auch zur selektiven Bestimmung weiterer optischer Übertragungskenngrößen wie z.B von Phasenlaufzeiten, Impulsantworten, Streckendämpfungen, usw., sowie bei einer Vielzahl weiterer Problemstellungen der Mehrfasertechnik wie z.B. zur Lichtwellenleiter-Identifizierung, zur Fertigungssteuerung und Fertigungsüberwachung von Lichtwellenleiter-Bändchen, zur Qualitätskontrolle, zur Bestimmung von Fasergeometrien und optischen Güteeigenschafrten, usw. eingesetzt werden. Für nachfolgende Ausführungen wird jeweils auf die Transmissions- bzw. Spleißdämpfungsmessung bei Lichtwellenleiter-Spleißgeräten Bezug genommen.

In Figur 1 stehen sich in der Mehrfach-Spleißeinrichtung MS1 eine erste Bandleitung BL1 (Lichtwellenleiter-Bändchen) mit Lichtwellenleitern LW1 bis LWn und eine zweite, mit ihr zu verschweißende Bandleitung BL2 mit Lichtwellenleitern LW1* bis LWn* gegenüber. Die Lichtwellenleiter LW1 bis LWn der Bandleitung BL1 sind nahezu parallel in einer flachen, im Querschnitt etwa rechteckförmigen, äußeren Umhüllung AH1 (aus Kunststoffmaterial) eingebettet, die im linken Teil von Figur 1 angedeutet und im übrigen Figurenteil zugunsten der Übersichtlichkeit weggelassen worden ist. Entsprechend dazu sind die Lichtwellenleiter LW1* bis LWn* der Bandleitung BL2 von einer ähnlich ausgebildeten äußeren Umhüllung AH2 umgeben, die im rechten Teil von Figur 1 andeutungsweise dargestellt und dann weggelassen worden ist. Zweckmäßigerweise ist für die äußeren Umhüllungen AH1 und AH2 ein zumindest teilweise optisch transparentes Material gewählt, um eine weitgehend dämpfungsarme Ein- und/oder Auskopplung von Licht zu gewährleisten.

Um sendeseitig Licht in die zu messenden Lichtwellenleiter LW1 bis LWn einzukoppeln, wird die Sende-/Koppelvorrichtung SK an einen beliebig vorgebbaren Streckenabschnitt der Bandleitung BL1 im linken Teil von Figur 1 angekoppelt. Zur Lichteinkopplung werden die Lichtwellenleiter LW1 bis LWn, wie aus Figur 2 ersichtlich ist, in der Koppelvorrichtung KV1 etwa bogenförmig bzw. gekrümmt geführt. Hierzu ist im vorliegenden Ausführungsbeispiel ein etwa zylinderförmiger Biegedorn ZT1 eines Biegekopplers BK1 vorgesehen. Der Biegekoppler BK1 weist zur seitlichen Lagesicherung bzw. zur Führung der Bandleitung BL1 am Umfang seines Zylinders ZT1 eine Führungsnut FN1 auf, deren Breite etwa der Breite der in sie eingelegten Bandleitung bzw. dem Lichtwellenleiter-Bändchen BL1 entspricht.

Der optische Sender OT1 weist mindestens ein Sendeelement TE auf, beispielsweise eine Laserdiode oder einen Laser, das im gezeichneten Ausführungsbeispiel ein nahezu paralleles Lichtbündel bzw. einen Parallelstrahl LB in Richtung auf einen als Ablenkvorrichtung vorgesehenen drehbaren bzw. schwenkbaren Spiegel BS mit einer Sendeleistung TP abstrahlt. In Fig. 2 sind der Übersichtlichkeit halber nur drei von k Lichtstrahlen LS1 bis LSk des Lichtbündels LB eingezeichnet.

Das Lichtbündel LB trifft im optischen Sender OT1 auf den zur Hauptabstrahlungsrichtung quergestellten bzw. gekippten, drehbaren Spiegel BS auf. Von dessen verspiegelter Oberfläche VO werden die Lichtstrahlen LS1 bis LSk reflektiert und nahezu parallel nebeneinander auf eine Einkoppeloptik EO, insbesondere ein Linsensystem, zwischen dem optischen Sender OT1 und der Koppelvorrichtung KV1 gelenkt. Die Einkoppeloptik EO bündelt, d.h. fokussiert, die Lichtstrahlen LS1 bis LSk zu einem Sende-Strahlungsfeld SF, dessen Lichtfleck LF in einen Koppelbereich bzw. Krümmungsbereich KB1 des Biegekopplers BK1 abgebildet wird. Der Koppelbereich KB1, in dem die Lichtwellenleiter LW1 bis LWn gekrümmt geführt sind, ist in Figur 2 strichpunktiert eingerahmt angedeutet.

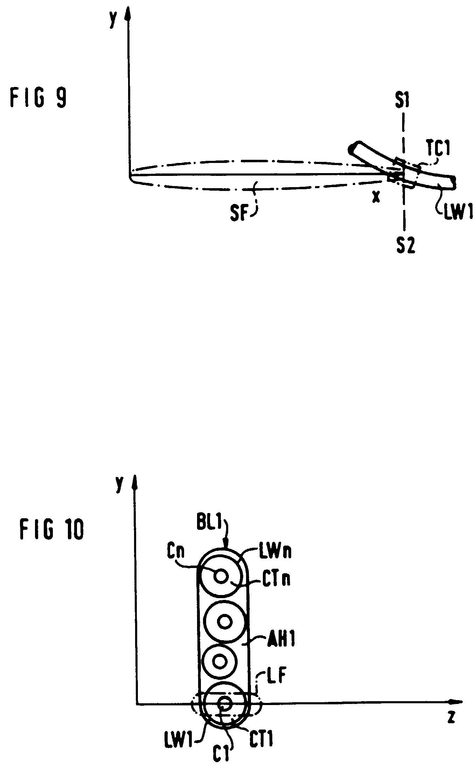

Eine Einkoppelebene ist in diesem Koppelbereich KB1 mit einem y, z-Koordinatensystem definiert. Die von der y- und z-Achse aufgespannte Einkoppelebene liegt etwa senkrecht zur Zeichenebene und damit senkrecht zur Ausbreitungsrichtung x des jeweiligen Sende-Strahlungsfeldes SF. Die y-Achse kennzeichnet dabei eine Abtastrichtung für den Lichtfleck bzw. Leuchtfleck LF quer zur Längsrichtung (axialen Erstreckung) der Bandleitung BL1. Der Lichtfleck LF zeigt in der Einkoppelebene y, z bevorzugt eine nahezu streifenförmige bzw. linienförmige oder schlank ovale Gestalt (vgl. Figur 9 und 10). Zur Erzeugung des Lichtflecks LF können im Strahlengang des Lichtbündels LB zweckmäßigerweise Spiegel oder geeignete Blenden (z.B. eine Schlitzblende) als Abbildungs-Mittel für das Sende-Strahlungsfeld SF vorgesehen sein. Hierdurch können in zuverlässiger Weise Toleranzen in der Lage der Lichtwellenleiter vorzugsweise in z-Richtung, wie sie beispielsweise durch eine variierende Bändchendicke oder Unterschiede in den Lichtwellenleiter-Durchmessern hervorgerufen werden können, ausgeglichen werden. Dazu wird für den Lichtfleck LF in z-Richtung am Einkoppelort bzw. in der Einkoppelebene eine räumliche Ausdehnung gewählt, die vorteilhaft mindestens gleich der halben Dicke des Lichtwellenleiter-Bändchens BL1 ist, insbesondere zwischen 100 μm und 200 μm. Es genügt im allgemeinen eine Ausdehnung des Lichtflecks LF in z-Richtung am Einkoppelort in der Größenordnung der Dicke der Lichtwellenleiter bzw. der Dicke des Lichtwellenleiter-Bändchens BL1. Die Beleuchtungsfeldbreite des Lichtflecks LF in Abtastrichtung y ist vorzugsweise am Einkoppelort kleiner gewählt als der Lichtwellenleiter-Außendurchmesser (insbesondere z.B. unter etwa 250 μm), so daß mit hoher Lichtleistung Licht in den jeweiligen Lichtwellenleiter-Kern eingekoppelt werden kann. Die Strahlbreite des Lichtflecks LF in y-Richtung sollte am Einkoppelort zweckmäßigerweise mindestens gleich dem Kerndurchmesser des jeweiligen Lichtwellenleiters gewählt werden, insbesondere falls bereits eine Ausrichtung des Sende-Strahlungsfeldes auf den jeweiligen Lichtwellenleiterkern am Einkoppelort erfolgt und das Sende-Strahlungsfeld am jeweiligen Einkoppelort feststeht. Für den Fall eines stetig wandernden Sende-Strahlungsfeldes über den jeweiligen Einkoppelort ist die Strahlbreite des Lichtflecks LF in y-Richtung vorteilhaft auch kleiner als der Kerndurchmesser des jeweiligen Lichtwellenleiters gewählt, so daß der vorzugsweise linienförmige Lichtfleck LF während der Strahlbewegung über den Einkoppelort den Kern des jeweiligen Lichtwellenleiters kontinuierlich überstreicht und beleuchtet. Damit können Abstrahlverluste in die Zwischenräume von Lichtwellenleiter-Kern zu Lichtwellenleiter-Kern weitgehend vermieden werden. Das Sende-Strahlungsfeld SF weist zweckmäßigerweise am Einkoppelort im Dreidimensionalen ein etwa längliches Beleuchtungsfeld auf, dessen räumliche Ausdehnung in z-Richtung größer als in Abtast-Richtung y gewählt ist. Nähere Einzelheiten zur räumlichen Gestalt des Lichtflecks LF sind in den Figuren 9 und 10 beschrieben.

Figur 2 zeigt eine Schrägstellung des drehbaren Spiegels bzw. Ablenkspiegels BS, bei der das Sende-Strahlungsfeld SF mit seinem Lichtfleck bzw. Leuchtfleck LF beispielsweise einen Einkoppelabschnitt TC1 entlang des gekrümmt geführten Lichtwellenleiters LW1 beleuchtet und nahezu tangential in dessen Kern eingekoppelt wird. Der jeweilige Einkoppelabschnitt z.B. TC1 und damit der tatsächliche Einkoppelort in den Kern des jeweiligen Lichtwellenleiters z.B. LW1 wird dabei zweckmäßigerweise im Endbereich der Krümmung des jeweils bogenförmig geführten Lichtwellenleiters z. B. LW1 am Übergang zu dessen geradlinigen Streckenabschnitt beleuchtet, so daß Abstrahlverluste bzw. eine unerwünschte Lichtauskopplung aufgrund eines weiteren gekrümmten Verlaufs des Lichtwellenleiters weitgehend vermieden sind. Der tatsächliche Einkoppelort für die Lichteinkopplung ist zweckmäßigerweise etwa einem Krümmungswinkel von 8 Grad abweichend von derjenigen Stelle entlang des gekrümmt geführten Lichtwellenleiters z.B. LW1 zugeordnet, an der der Lichtwellenleiter vom zylinderförmigen Biegedorn ZT1 des Biegekopplers BK1 abhebt und diesen geradlinig verläßt.

Zweckmäßigerweise erstreckt sich dabei der jeweils vom Lichtfleck LF getroffene Einkoppel-Abschnitt z.B. TC1 bis zu einer Länge von etwa 1 mm entlang des jeweiligen Lichtwellenleiters z.B. LW1. Der beleuchtete Einkoppel-Abschnitt TC1 ist mit einer etwa ovalen, strichpunktiert eingezeichneten Umrahmung angedeutet. In dieser Koppelposition des Sende-Strahlungsfeldes SF mit seinem Lichtfleck LF wird nur dem Lichtwellenleiter LW1 in eindeutiger Weise ein Sende-Strahlungsfeld SF1 mit einem Lichtfleck LF1 individuell zugeordnet.

Der schräg gestellte Ablenkspiegel BS wird nun im Strahlengang des Lichtbündels LB mittels einer Betätigungsvorrichtung BV um seinen Drehpunkt DP verdreht bzw. gekippt, d.h. sein Winkel zu den Lichtstrahlen LS1 bis LS3 verändert. Die Betätigungsvorrichtung BV (vgl. Figur 1) wird dabei von einer Ansteuervorrichtung ASV1 mittels eines Steuersignals AS2 über eine Steuerleitung AL2 bedient. Die Ansteuerung der Betätigungsvorrichtung BV erfolgt beispielhaft in der Weise, das der Ablenkspiegel BS ausgehend von seiner Koppelposition für den Lichtwellenleiter LW1 kontinuierlich bzw. stetig mindestens bis in eine strichpunktiert dargestellte Einkoppelposition BS* für den Lichtwellenleiter LWn verdreht wird. Die Drehbewegung des Spiegels BS um den Drehpunkt DP im Strahlengang des Lichtbündels LB ist durch einen Pfeil V symbolisch angedeutet. Durch die stetige Drehbebewegung des Spiegels BS werden die Lichtstrahlen LS1 bis LS3 abgelenkt bzw. geschwenkt und von der Einkoppeloptik EO derart abgebildet, daß ihr zugehöriges Sende-Strahlungsfeld SF den Koppel- bzw. Krümmungsbereich KB1 zeitlich nacheinander linear überstreicht bzw. beleuchtet. Zweckmäßig kann ebenfalls eine gerasterte, d.h. schrittweise, Verdrehung des Ablenkspiegels BS sein, so daß das Sende-Strahlungsfeld SF mit seinem Lichtfleck LF schrittweise, d.h. stufenweise, den Koppelbereich KB1 abtastet. Bei einer schrittweisen Abtastung mit dem Lichtfleck LF sind die Abtastschritte zweckmäßigerweise gleich oder kleiner dem Abstand zweier benachbarter Lichtwellenleiter-Kerne gewählt. Das Sende-Strahlungsfeld SF bewegt sich translatorisch parallel zur Ebene, in der die Lichtwellenleiter LW1 bis LWn liegen, d.h. es durchfährt bzw. durchscannt mit seinem Lichtfleck LF zeitlich nacheinander den gesamten Koppelbereich KB1 in Abtast-Richtung y. Die durch den drehbaren Spiegel BS bewirkte Winkeländerung wird also in eine lineare Verschiebung des Lichtflecks LF in y-Richtung umgesetzt. Das Sende-Strahlungsfeld SF wandert mit seinem Lichtfleck LF beispielsweise beim Lichtwellenleiter LW1 beginnend stetig oder schrittweise über den Koppelbereich KB1 in y-Richtung auf den Lichtwellenleiter LWn zu, d. h. anschaulich in Figur 2: Das Sende-Strahlungsfeld SF tastet aufgrund der Drehbebewegung des Ablenkspiegels BS quer zur axialen Erstreckung der gekrümmt geführten Lichtwellenleiter LW1 bis LWn von unten nach oben über den Koppelbereich KB1. Die obere Koppelposition des Sende-Strahlungsfeldes SF ist mittels strichpunktiert eingezeichneter Lichtstrahlen LS1* bis LSk* veranschaulicht, die dem verdrehten Ablenkspiegel BS* zugeordnet sind. Deren zugehöriges Sende-Strahlungsfeld ist mit SF∗ sowie dessen Lichtfleck mit LF* bezeichnet. Das Sende-Strahlungsfeld SF∗ wird dabei mit seinem Lichtfleck LF* als ein dem Lichtwellenleiter LWn individuell zugeordnetes Sende-Strahlungsfeld SFn mit zugehörigem Lichtfleck LFn in dessen Kern annähernd tangential eingekoppelt.

Um in die zu messenden Lichtwellenleiter LW1 bis LWn unterscheidbare Meßsignale I1 bis In (vgl. Figur 1) mit möglichst großer Intensität bzw. Lichtleistung einkoppeln zu können, wird der Lichtfleck LF des Sende-Strahlungsfeldes SF während seiner Bewegung in Abtast-Richtung y sequentiell vorzugsweise nur in einen der Lichtwellenleiter-Kerne eingekoppelt und nicht in mehrere. Jedem Lichtwellenleiter LW1 bis LWn ist somit in eindeutiger Weise ein Sende-Strahlungsfeld SF1 bis SFn mit jeweils einem individuellen Lichtfleck LF1 bis LFn zugeordnet, der die gekrümmt geführten Lichtwellenleiter LW1 bis LWn entlang zugehöriger Einkoppel-Abschnitte TC1 bis TCn beleuchtet.

Die Drehachse des Spiegels BS einerseits und die Einkoppelbereiche TC1 bis TCn andererseits sind dabei zweckmäßigerweise jeweils etwa in den Brennpunkten der Einkoppeloptik EO angeordnet, um eine möglichst fokussierte Lichteinkopplung hoher Leistung zu erreichen.

Insgesamt betrachtet wird aufgrund der selektiven Einkopplung durch die' Schwenkbewegung des Sende-Strahlungsfeldes SF auf der Sendeseite eine zeitliche Auflösung bzw. selektive Aktivierung der einzelnen zu messenden Lichtwellenleiter LW1 bis LWn erreicht. Dabei spielt die tatsächliche räumliche Lage der zu messenden Lichtwellenleitern keine Rolle.

Anstelle des drehbaren Ablenkspiegels BS kann auch ein rotierender Spiegel verwendet werden. Weiterhin kommt ein Strahlablenksystem mit einem linear beweglichen Spiegel oder eine Bewegung des Sendeelementes selber in Betracht, was eine entsprechend angepaßte Einkoppeloptik EO erfordert. Ebenso könnte anstelle der Strahlablenkvorrichtung eine Strahlausblendvorrichtung, zum Beispiel eine durchlaufende Schlitzblende, verwendet werden. Als Antriebselemente für die Betätigung der Strahlablenkvorrichtung eignen sich z.B. Eigenresonanzscanner (Torsionsstabscanner, Torsionsbandscanner), Galvanometerscanner, piezoelektrische Scanner, usw.. Während Eigenresonzscanner eine feste Frequenz aufweisen, ist bei Galvanometerscannern und piezoelektrischen Scannern die Frequenz variabel. Die Antriebselemente unterscheiden sich weiterhin in den Wellenbildern, mit denen eine Abtastung möglich ist. Vorteilhaft können eventuelle Störungen der mechanischen Strahlablenkvorrichtung auch durch Verwendung eines akusto/elektro-optischen Ablenkelementes vermieden werden.

Gegebenenfalls können die Meßsignale I1 bis In auch direkt über die offenen Stirnseiten der Lichtwellenleiter LW1 bis LWn in deren Kerne eingespeist werden, sofern diese zugänglich sind. Die Meßsignale I1 bis In können vorteilhaft in Figur 1 aus einem eigens vorgesehenen Meßsender, wie z.B. dem Sendeelement TE stammen, aber auch Nachrichtensignale aus den Lichtwellenleitern LW1 bis LWn sein. Im optischen Sender OT1 können vorteilhaft zur selektiven, unterscheidbaren Einkopplung der Meßsignale I1 bis In auch mehrere Sende-Elemente vorgesehen sein, die vorzugsweise in Form einer Zeile bzw. eines Arrays (Senderfeld) zusammengefaßt sind. Eine selektive Meßsignal-Einkopplung kann dann vorteilhaft durch eine An-Steuerung dieser Sendeelemente mittels der Ansteuervorrichtung ASV1 im Multiplexbetrieb erreicht werden. In diesem Fall gilt für die Anzahl der Sendeelemente in Bezug auf die Zahl der zu messenden Lichtwellenleiter LW1 bis LWn: je größer die Zahl der Sendeelemente gewählt wird, desto größer ist die erreichbare zeitliche Auflösung, d.h. desto größer ist die Annäherung an die dort beschriebene kontinuierliche bzw. stetige Lichteinkopplung von Figur 2. Dazu sind zweckmäßigerweise mindestens soviele Sendeelemente vorgesehen wie Lichtwellenleiter zu messen sind. Im allgemeinen genügen etwa zwei bis vier Mal soviele Sendeelemente.

In Figur 1 laufen die eingekoppelten Meßsignale I1 bis In in den zu messenden Lichtwellenleitern LW1 bis LWn über die Mehrfach-Spleißeinrichtung MS1 zur Empfangsseite. Dort wird ein Anteil von ihnen in einer zweiten Koppelvorrichtung KV2 (analog aufgebaut zur Koppelvorrichtung KV1) von dem optischen Empfänger OR1 z.B. mittels eines zweiten Biegekopplers BK2 in etwa tangentialer Richtung ausgekoppelt. Die Lichtwellenleiter LW1* bis LWn* der zweiten Bandleitung BL2 sind dazu in einer Führungsnut FN2 um einen Zylinder ZT2 analog zur Sendeseite gekrümmt herumgelegt. Dadurch treten den Sende-Strahlungsfeldern SF1 bis SFn zugeordnete Empfangs-Strahlungsfelder RF1 bis RFn, die jeweils individuell den zu messenden Lichtwellenleitern LW1 bis LWn zugeordnet sind, aus deren Kerne entlang bogenförmiger Auskoppel-Abschnitte RC1 bis RCn in den Koppelbereich KB2 des Biegekopplers BK2 aus. Da durch die Verschiebebewegung des Lichtfleckes LF zeitlich nacheinander die Meßsignale I1 bis In selektiv in den Kernen der Lichtwellenleiter LW1 bis LWn hervorgerufen werden, erscheinen auch deren zugeordnete Empfangs-Strahlungsfelder RF1 bis RFn in entsprechender zeitlicher Reihenfolge, d.h. hier: Das Empfangs-Strahlungsfeld RF1 für den Lichtwellenleiter LW1 wird zuerst empfangen. Es folgen anschließend der Reihe nach die Empfangs-Strahlungsfelder RF2 bis RFn - 1, bis schließlich zuletzt das dem Lichtwellenleiter LWn zugeordnete Empfangs-Strahlungsfeld RFn im Koppelbereich KB2 eintrifft und dort austritt. Die Empfangs-Strahlungsfelder RF1 bis RFn werden zeitlich nacheinander, d.h. sequentiell, von einem gemeinsamen, vorzugsweise feststehend angeordneten, lichtempfindlichen Element GLE zumindest teilweise erfaßt bzw. aufgenommen und von diesem jeweils in ein elektrisches Meßsignal DS2 umgewandelt. Bei digitaler Signalauswertung wird das Meßsignal DS2 über eine Signalleitung DL2 an ein Digitalisierglied SUH einer Auswerteeinrichtung AE1 übertragen. Dieses Digitalisierglied SUH tastet die zeitlich nacheinander eintreffenden elektrischen Meßsignale DS2 in kurzen Zeitabständen ab, digitalisiert diese Abtastwerte und überträgt digitalisierte Meßsignale DS3 über eine Leitung DL3 an einen Meßwertspeicher MEM in der Auswerteeinrichtung AE1. Aus diesem Meßwertspeicher MEM werden die aufgezeichneten, digitalisierten Meßdaten über eine Leitung DL5 als ein Signal DS5 an eine Anzeigeeinrichtung DSP1, z.B. einem Display, weitergeleitet und dort visuell dargestellt.

Bei Verwendung eines großflächigen Empfangselementes GLE, das alle zu messenden Lichtwellenleiter erfaßt, ist es empfangsseitig nicht erforderlich, z.B. das Empfangselement GLE für eine selektive, unterscheidbare Aufnahme der Empfangs-Strahlungsfelder RF1 bis RFn entsprechend den zeitlich nacheinander aktivierten Lichtwellenleiter LW1 bis LWn zu verschieben. Ein individuelles Ausrichten des Empfangselementes GLE auf den jeweils aktivierten Lichtwellenleiter entfällt somit. Dennoch kann es gegebenenfalls für eine weitergehende Ortsauflösung der Empfangs-Strahlungsfelder RF1 bis RFn auch vorteilhaft sein, mehrere Empfangselemente, insbesondere in Zeilen- oder Arrayform anstelle des gemeinsamen Empfangselementes GLE, vorzugsweise feststehend, anzubringen. Als Empfangselemente eignen sich z.B. herkömmliche Fotodioden, CCD-Elemente, Diodenarrays, Diodenzeilen, usw.

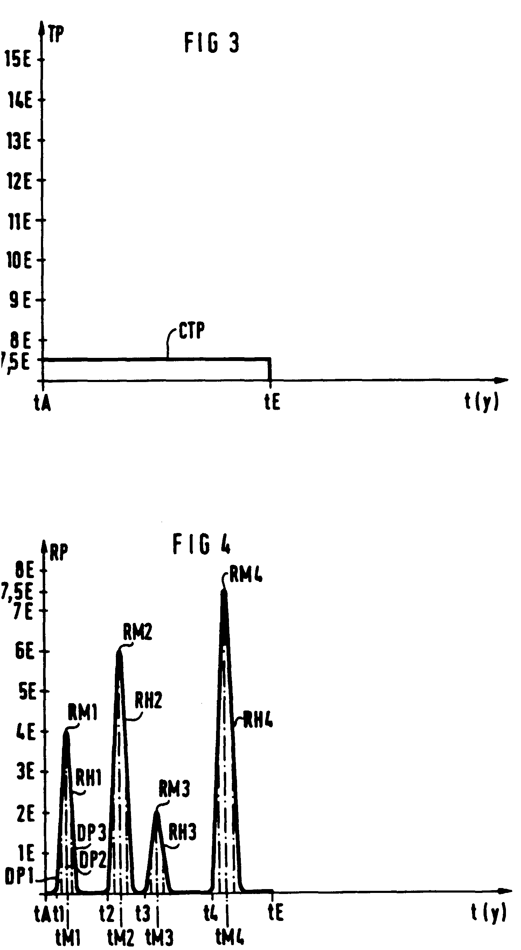

Zur Bestimmung und Auswertung der Koppelverhältnisse in der Meßeinrichtung ME wird zweckmäßigerweise zunächst mindestens eine Referenzmessung durchgeführt. Zu diesem Zweck kann sendeseitig das Sende-Strahlungsfeld SF einen Sendepegel TP aufweisen, der einen beliebig vorgebbaren zeitlichen Verlauf zeigt. Beispielsweise wird in Figur 3 die Sendeseite mit einem annähernd zeitlich konstanten Sendepegel CTP betrieben, d.h., während der Lichtfleck LF über den Koppelbereich KB1 des Biegekopplers BK1 wandert, beleuchtet dieser zugehörige Einkoppel-Abschnitte TC1 bis TCn entlang der gekrümmt geführten Lichtwellenleiter LW1 bis LWn mit einer nahezu konstanten Sendeleistung bzw. einem nahezu konstantem Sendepegel CTP. Die in Figur 3 gezeigte, zeitlich konstante Intensitäts- bzw. Leistungsverteilung TP für das Sende-Strahlungsfeld SF ist während dessen Verschiebebewegung beginnend beim Lichtwellenleiter LW1 zum Zeitpunkt tA etwas über den Lichtwellenleiter LWn hinaus bis zum Zeitpunkt tE über der dazu benötigten Verschiebezeit t fortlaufend aufgezeichnet. Dabei entspricht die Verschiebezeit t dem Verschiebeweg y. Während der Zeitdauer tE-tA durchwandert der Lichtfleck LF den Koppelbereich K61, so daß die Einkoppel-Abschnitte TC1 bis TCn jeweils durch die ihnen individuell zugeordneten Lichtflekken LF1 bis LFn mit einer zeitlich konstanten Beleuchtungs-Feldstärke von etwa CTP = 7,5 E (1E $\triangleq$ 1 Lichteinheit) bestrahlt werden. Die den Lichtwellenleitern LW1 bis LWn individuell zugeordneten, d.h. effektiv für sie wirksam werdenden, Sende-Strahlungsfelder SF1 bis SFn weisen also einen konstanten Sendepegel im Verschiebezeitintervall tE-tA auf.

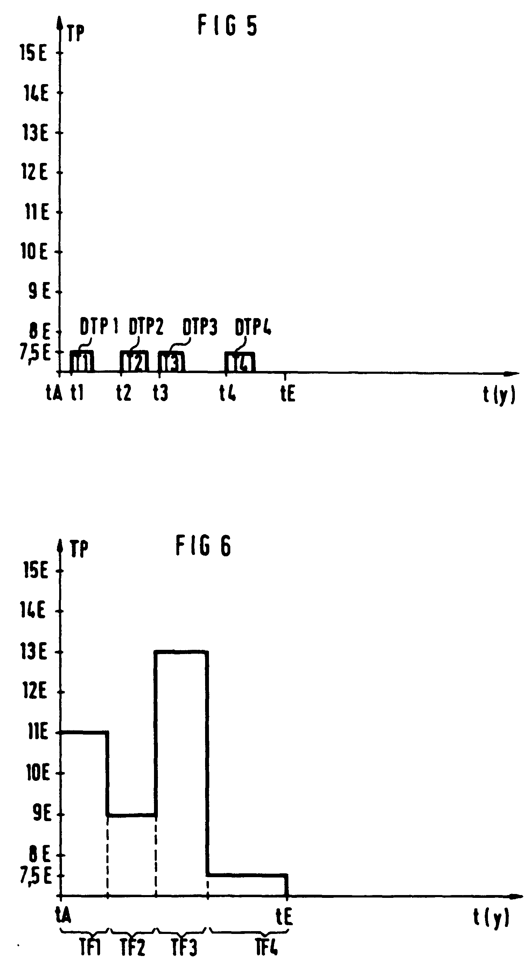

Empfangsseitig (vgl. Figur 4) wird im optischen Empfänger OR1 der Reihe nach für die Empfangs-Strahlungsfelder RF1 bis RFn eine zugehörige zeitliche Intensitäts- bzw. Leistungsverteilung, d.h. zeitliche Verteilung, RP während der Zeitdauer tE-tA aufgenommen, wie sie beim sequentiellen sendeseitigen Einkoppeln des Sende-Strahlungsfeldes SF bzw. der individuell zugeordneten Sende-Strahlungsfelder SF1 bis SFn entsteht. Die Lichteinkopplung beginnt dabei beim Lichtwellenleiter LW1 und endet beim Lichtwellenleiter LWn, wobei hier n = 4 ist. Bei einer nahezu linearen Verschiebebewegung des Lichtflecks LF entspricht dabei die zeitliche Verteilung RP der Empfangs-Strahlungsfelder RF1 bis RFn annähernd der örtlichen Lage der Lichtwellenleiter, insbesondere der Lichtwellenleiter-Kerne.

In der Anzeigeeinrichtung DSP1 der Auswerteeinrichtung AE1 sowie in der zugehörigen vergrößerten Darstellung von Figur 4 ist die zeitliche Verteilung bzw. der Empfangspegel RP der Empfangs-Strahlungsfelder RF1 bis RFn mit n = 4 aufgetragen. Bei einem sendeseitigen Durchlauf des Sende-Strahlungsfeldes SF erscheinen in der Anzeigevorrichtung DSP1 zeitlich nacheinander selektive, unterscheidbare Empfangspegel RH1 bis RH4, die jeweils individuell den Lichtwellenleitern LW1 bis LW4 eindeutig zugeordnet sind. Die selektiven Empfangspegel RH1 bis RH4 stellen bei digitaler Signalauswertung jeweils Einhüllende bzw. Interpolierte für die digitalisierten, abgetasteten Meßsignale dar, d. h. sie entsprechen der zeitlichen Verteilung der Empfangs-Strahlungsfelder RF1 bis RF4 für den Fall einer kontinuierlichen bzw. stetigen sendeseitigen Einkopplung. Beispielsweise umgibt der dem Lichtwellenleiter LW1 zugeordnete Empfangspegel RH1 drei diskrete, strichpunktiert eingezeichnete, Empfangswerte DP1, DP2 und DP3. Entsprechend den insgesamt vorgesehenen vier Lichtwellenleitern LW1 bis LW4 bzw. LW1* bis LW4* in den Bandleitungen BL1 bzw. BL2 ergeben sich die gegebenenfalls vier unterschiedlichen Einhüllenden RH1 bis RH4 mit jeweils drei diskreten Empfangswerten, wobei die Maxima der Einhüllenden RH1 bis RH4 mit RM1 bis RM4 bezeichnet sind.

Die vier Einhüllenden bzw. Empfangspegel RH1 bis RH4 unterscheiden sich hier in ihrer zeitlichen Lage bzw. Position zueinander sowie durch ihre unterschiedlich großen Maxima RM1 bis RM4, d.h. durch ihre Pegelschwankungen. So weisen die Maxima RM1 bis RM4 der Empfangspegel RH1 bis RH4 beispielhaft folgende Werte zu Zeitpunkten tMl bis tM4 auf der Empfangs-Leistungsskala für die zeitliche Verteilung RP auf.

$$RM1 = 4 \, E$$
$$RM2 = 6 \, E$$
$$RM3 = 2 \, E$$
$$RM4 = 7,5 \, E \text{ (Grenzfall mit 100\% Ein- und Auskopplung)}$$

(1E $\triangleq$ 1 Lichteinheit)

Das dem Lichtwellenleiter LW3 zugeordnete Empfangs-Strahlungsfeld RF3 weist den Empfangspegel RH3 mit dem niedrigsten Maximum RM3 auf, während das dem Lichtwellenleiter LW4 zugeordnete Empfangs-Strahlungsfeld RF4 den am höchsten liegenden Empfangspegel RH4 mit RM4 = 7,5 E innerhalb der zu messenden Gruppe der vier Lichtwellenleiter LW1 bis LW4 besitzt. Während in der Lichtwellenleiter-Kombination LW4/LW4* Licht nahezu ideal, d.h. ohne Dämpfungsverluste, eingekoppelt, geführt und ausgekoppelt wird, weist das Lichtwellenleiter-Paar (LW3/LW4* die größte Dämpfung auf. Es bestehen also Unterschiede in der Höhe der Empfangspegel RH1 bis RH4 bzw. deren Maxima RM1 bis RM4, wobei sich für die Maxima RM4 und RM3 eine maximale Pgelschwankung um den Faktor RM4/RM3 = 3,75 ergibt.

Aus der Momentaufnahme der zeitlichen Verteilung RP von Figur 4 ist weiterhin ersichtlich, daß der Empfangspegel bzw. die Intensitäts-/Leistungsverteilung RH3 etwas nach links auf den Empfangspegel RH2 zu versetzt ist und nicht mittig zwischen den beiden Empfangspegeln RH2 und RH4 liegt. Da im Falle einer ideal zeitlinearen Strahlbewegung die zeitliche Verteilung RP der Empfangs-Strahlungsfelder RF1 bis RF4 der örtlichen Verteilung bzw. Lage der Kerne der Lichtwellenleiter LW1 bis LW4 weitgehend entspricht, d.h. jeweils den Ort maximaler Lichtführung wiedergibt, kann aus der zeitlichen Verteilung RP geschlossen werden, daß der Lichtwellenleiter LW3 bzw. LW3* räumlich auf den Lichtwellenleiter LW2 zu etwas verschoben liegt. Diese Beziehung zwischen der Zeit und der örtlichen Lage der Lichtwellenleiter ist auch bei schrittweiser Abtastung mit gleichen Abtastschritten gegeben. Auch nichtlineare Abtastbewegungen des Sendestrahls sind möglich, solange ein definierter Zusammenhang zwischen der sendeseitigen einkopplung und der empfangsseitigen Auskopplung besteht.

Die unterschiedlich hohen Maxima RM1 bis RM4 sowie die nicht äquidistante Lage der Leistungs- bwz. Empfangspegel RH1 bis RH4 können unterschiedliche Ursachen haben:

Zum einen können die Koppelfaktoren sendeseitig, an der Ausrichtstelle in der Mehrfach-Spleißeinrichtung MS1, sowie empfangsseitig für jeden einzelnen zu messenden Lichtwellenleiter individuell voneinander verschieden sein. So können beispielsweise unterschiedliche Färbungen der Lichtwellenleiter in der Bandleitung BL1 bzw. BL2 wie z.B. rot, grün, gelb, blau oder verschieden starke Farbaufträge sowie unterschiedliche Beschichtungen (Coatings) unterschiedliche Koppelfaktoren, d.h. unterschiedliche Ein- und Auskoppeldämpfungen für jeden Lichtwellenleiter, zur Folge haben. Unterschiede in den Koppelfaktoren können auch beispielsweise dadurch entstehen, daß Lichtwellenleiter aus unterschiedlichen Fertigungs- bzw. Ziehprozeßchargen und damit gegebenenfalls voneinander verschiedenen Lichtführungseigenschaften und Fasergeometrien zu einem Lichtwellenleiter-Bändchen zusammengefaßt werden. Daneben werden die Koppelverhältnisse auch durch die Lagetoleranzen der Lichtwellenleiter in den Krümmungen der Biegekoppler beeinflußt. Die Pegelunterschiede bzw. Pegelschwankungen (typisch sind 10 dB) würden empfangsseitig im optischen Empfänger OR1 von Lichtwellenleiter zu Lichtwellenleiter unterschiedliche Verstärkungen notwendig machen. Das Umschalten auf individuelle Verstärkungsfaktoren für jeden einzelnen Lichtwellenleiter würde daher einen zusätzlichen, hohen elektronischen sowie zeitlichen Aufwand bedeuten. Zudem würde sich aufgrund der Schwankungen des Empfangspegels bzw. der zeitlichen Verteilung RP auf der Empfängerseite nur ein relativ schlechtes Signal-/ /Rauschverhältnis ergeben, da eine optimale Aussteuerung jeweils nur für eine der Lichtwellenleiter-Kombinationen durchgeführt werden kann und sendeseitig aufgrund der geringen Abmessungen der Lichtwellenleiter-Kerne in der Regel nur relativ kleine Lichtleistungen in die Lichtwellenleiter-Kerne eingekoppelt und dort geführt werden können.

Zum anderen wird die zeitliche Verteilung RP auch durch die örtliche Position der Lichtwellenleiter LW1 bis LW4 in der Bandleitung BL1 bzw. durch die örtliche Lage der Lichtwellenleier LW1* bis LW4* in der Bandleitung BL2 sowie durch deren Zuordnung zueinander in der Mehrfach-Spleißeinrichtung MS1 beeinflußt.

Um in einem ersten Anwendungsfall beispielsweise nachfolgende, eigentliche Messungen an den Lichtwellenleitern LW1 bis LWn bzw. LW1* bis LWn* von diesen Koppelverhältnissen in der erfindungsgemäßen Meßeinrichtung ME weitgehend unabhängig zu machen, wird zweckmäßig die zeitliche Verteilung RP der Empfangs-Strahlungsfelder RF1 bis RFn z.B. mittels einer Recheneinheit CPU in der Auswerteeinrichtung AE1 von Figur 1 ausgewertet und für nachfolgende, eigentliche Messungen zur optimalen, sendeseitigen Einkopplung verwertet. Dazu ist die empfangsseitige Recheneinheit CPU mit der sendeseitigen Ansteuervorrichtung ASV1 für die Sende-/Koppelvorrichtung SK über eine Leitung SL3 verbunden, d.h. die Sendeseite ist gewissermaßen mit der Empfangsseite "rückgekoppelt" (vgl. Figur 1). Die Ansteuervorrichtung ASV1 empfängt Steuersignale SS3 über die Leitung SL3 von der Recheneinheit CPU, setzt diese in Steuersignale AS1 um und steuert damit den optischen Sender OT1, vorzugsweise dessen Sendeelement TE, über eine Leitung AL1.

Zur Verbesserung der sendeseitigen Einkopplung kommen mehrere Steuerkriterien in Betracht, die aus der zeitlichen Verteilung RP aus Figur 4 als Information über den Zustand der Lichtwellenleiter LW1 bis LWn bzw. LW1* bis LWn*, insbesondere über deren Koppelverhältnisse, gewonnen werden können.

1. Aus der zeitlichen Verteilung RP von Figur 4 geht hervor, daß nicht zu allen Zeiten t im Zeitintervall tE-tA während der Verschiebebewegung des Sende-Strahlungsfeldes SF Licht in die Kerne der Lichtwellenleiter LW1 bis LWn mit n = 4 eingestrahlt wird. Deshalb kann aus der zeitlichen Verteilung RP ermittelt werden, zu welchen Einkoppel-Zeiten bzw. in welchen Zeitabständen jeweils überhaupt Lichtleistung in den Lichtwellenleiter-Kernen geführt wird.

Zur Festlegung von Einkoppelzeiten werden beispielsweise in der zeitlichen Verteilung RP von Figur 4 jeweils ansteigende Flanken der Empfangspegel RH1 bis RH4 aufgesucht. Deren Abstände vom Startzeitpunkt tA der sendeseitigen Einkopplung legen somit diejenigen Einkoppelzeiten t1, t2, t3 und t4 fest, ab denen tatsächlich Licht in die Kerne der Lichtwellenleiter LW1 bis LW4 eingekoppelt wird. Aus diesem Grund reicht es zum Betrieb der Meßeinrichtung ME bereits aus, mit der Ansteuervorrichtung ASV1 das Sendeelement TE entsprechend der empfangsseitigen zeitlichen Abfolge der Empfangs-Strahlungsfelder RF1 bis RFn zu tasten (vgl. Figur 5) , d.h. nur zu den Einkoppelzeitpunkten t1, t2, t3 und t4 einzuschalten, während einer bestimmten Zeitdauer bzw. während eines Einkoppel-Zeitintervalles T1 bis T4 das Licht LB abzustrahlen und dann wieder auszuschalten. Die sendeseitige zeitliche Abfolge zur Lichteinkopplung ist also der zuvor empfangsseitig aufgezeichneten, zeitlichen Abfolge bzw. Verteilung der Empfangs-Strahlungsfelder angepaßt. Die Einkoppel-Zeitintervalle T1 bis T4 sind dabei vorzugsweise nur etwa so lang gewählt, wie Licht auch jeweils tatsächlich auf die Einkoppel-Abschnitte TC1 bis TC4 (d.h. die Kerne) der Lichtwellenleiter LW1 bis LW4 trifft bzw. fällt. Zweckmäßigerweise wird das Sende-Strahlungsfeld SF während Einkoppel-Zeitintervallen (z.B. T1) jeweils zwischen 1 und 10% der Dauer tE - tA der Bewegung des Lichtfleckes LF in die zu messenden Lichtwellenleiter LW1 bis LWn eingekoppelt. Für die aufeinanderfolgenden Einkoppelpunkte t1 bis t4 des Sende-Strahlungsfeldes SF werden jeweils zweckmäßigerweise Zeitabstände wie z.B. t2 - t1 zwischen 3% und 30% der Gesamtdauer tE - tA eines Durchlaufs des Lichtflecks LF gewählt.

Figur 5 veranschaulicht dieses pulsartige Ein- und Ausschalten des Sendeelementes TE mittels der Ansteuervorrichtung ASV1 (vgl. Figur 1). Der zeitliche Verlauf TP des Sende-Strahlungsfeldes SF weist somit während seiner Verschiebebewegung über den Freiraum zwischen zwei benachbarten Lichtwellenleitern jeweils eine Sendepause auf. Die Dauer der Einkoppel-Zeitintervalle T1 bis T4, während derer das Sendeelement TE eingeschaltet ist und somit das Strahlungsfeld SF Licht in die Lichtwellenleiter LW1 bis LW4 einkoppelt, hängt bei stetiger Lichtfleck-Bewegung von der Geschwindigkeit ab, mit der die Strahlablenkvorrichtung den Strahl über die einzelnen Fasern lenkt, und damit bei einer zweckmäßigerweise perio dischen Betätigung von deren Frequenz und Amplitude, weiterhin aber auch von der Geometrie des Leuchtflecks LF. Bei zweckmäßiger Wahl der Leuchtfleckgröße und der Amplitude wird bei einer angenommenen Wiederholfrequenz von beispielsweise 1 kHz das Sende-Strahlungsfeld SF während der Einkoppel-Zeitintervalle T1 bis T4 zwischen 10 und 100 μs in die zu messenden Lichtwellenleiter LW1 bis LWn mit n = 4 eingekoppelt, wobei sich für die Einkoppelzeitpunkte t1, t2, t3, t4 Zeitabstände zwischen 30 und 300 μs ergeben.

Durch die gezielte Ansteuerung, d.h. Aktivierung bzw. Deaktivierung, des Sendeelementes TE wird erreicht, daß die Leistung des Sendeelementes TE wesentlich besser ausgenutzt werden kann. Während bei gängigen Sendeelementen wie z.B. Leuchtdioden oder Halbleiterlasern hauptsächlich thermische Effekte deren maximal nutzbare Leistung begrenzen, wird das Sendeelement TE durch den Pulsbetrieb, d.h. das Sendeelement TE wird jeweils nur während der kurzen Einkoppel-Zeitintervalle T1 bis T4 eingeschaltet, weit weniger belastet, so daß es während der kurzen Einschaltdauern T1 bis T4 mit erhöhtem Strom betrieben und somit eine höhere Lichtleistung in die Lichtwellenleiter-Kerne eingekoppelt werden kann. Da der optische Sender OT1 nicht im Dauerbetrieb Licht abstrahlt, kann vorteilhaft im Mittel eine geringere Lichtleistung abgegeben werden, so daß insbesondere bei Verwendung eines Lasers als Sendeelement Probleme der Augensicherheit vorteilhaft entschärft werden können.

Für den Betrieb der Meßeinrichtung ME reicht es somit aus, daß die zeitliche Verteilung des Sendepegels TP während der Bewegung des Lichtfleckes LF über den Koppelbereich KB1, d.h. während der Zeitdauer tE - tA jeweils nur zeitlich begrenzt in Einkoppel-Zeitintervallen T1 bis T4 die Einkoppel-Abschnitte TC1 bis TCn mit individuellen Sendepegeln DTP1 bis DTP4 beleuchtet, wobei DTP1 bis DTP4 = 7,5 E = konstant ist, um in etwa die Empfangspegel RH1 bis RH4 von Figur 4 zu erhalten. Für etwa gleich große Kerndurchmesser der Lichtwellenleiter LW1 bis LW4, wie sie annähernd in der Bandleitung BL1 bzw. BL2 vorliegen, sind die Einkoppel Zeitintervalle T1 bis T4 zweckmäßigerweise auch in etwa gleich lang gewählt, d.h. T1 = T2 = T3 = T4.

Den Lichtwellenleitern LW1 bis LW4 sind also zu den Einkoppelzeitpunkten tl bis t4 jeweils individuelle Sende-Strahlungsfelder SF1 bis SF4 mit jeweils gleichen Sendepegeln DTP1 bis DTP4 (= 7,5 E) während der Beleuchtungs- bzw. Einkoppel-Zeitintervalle T1 bis T4 zugeordnet. Der Lichtfleck LF des Sende-Strahlungsfeldes SF wird mittels der zeitlichen bzw. der korrespondierenden örtlichen Lage (vgl. Figur 4) der empfangsseitig gemessenen Empfangs-Strahlungsfelder RF1 bis RF4 gesteuert. Empfangsseitig ergibt sich dann die gleiche zeitliche Verteilung RP der Empfangs-Strahlungsfelder RF1 bis RF4, wie sie in Figur 4 für den Fall eines stetig wandernden, kontinuierlich strahlenden Lichtflecks LF dargestellt ist. Der Pulsbetrieb kann vorteilhaft auch dadurch realisiert werden, daß der Ablenkspiegel BS (Figur 1) sprunghaft (schrittweise) verdreht wird, so daß nur die durch die Einkoppelzeiten t1 bis t4 gekennzeichneten Einkoppelorte mit dem Lichtfleck LF abgetastet werden.

2. Figur 6 zeigt einen weiteren, mit Hilfe der Ansteuervorrichtung ASV1 gesteuerten Sendepegel TP im Zeitintervall tE - tA. Aus der zeitlichen Verteilung RP des Empfangspegels von Figur 4 bestimmt die Recheneinheit CPU jeweils deren Lichtleistungen. Als Maß für die Lichtleistung kann beispielsweise der jeweilige Empfangswert der Maxima RM1 bis RM4 dienen. Zur Festlegung der Lichtleistung kann gegebenenfalls auch jeweils die Fläche unter den selektiven Empfangspegeln RH1 bis RH4 herangezogen werden. Mittels dieser Lichtleistungen steuert die Ansteuervorrichtung ASV1 sendeseitig die Intensität bzw. Sendeleistung des Lichtflecks LF derart, daß empfangsseitig für die Lichtwellenleiter LW1 bis LW4 annähernd gleich hohe Empfangspegel, beispielsweise mit Maxima bei etwa 8E erreicht werden. Dazu berechnet die Recheneinheit CPU z.

B. jeweils aus den unterschiedlich großen Maxima RM1 bis RM4 von Figur 4 individuell für jede Faser bzw. für jeden Lichtwellenleiter diejenige Sendeleistung in zugeordneten Zeitintervallen TF1 bis TF4 von Figur 6, die für die zugehörigen, gewünschten Empfangsmaxima (beispielsweise von 8E auf der Empfangs-Lichtleistungsskala von Figur 4) erforderlich ist. Die Mitten der als zusammenhängend dargestellten Zeitintervalle TF1 bis TF4 entsprechen dabei jeweils in etwa den Positionen, in denen Licht in die Kerne der Lichtwellenleiter LW1 bis LW4 eingekoppelt wird. Anstelle einer stetigen Abtast-Bewegung kann der Lichtfleck LF im Pulsbetrieb analog Figur 5 betrieben werden. Dann haben die Rechtecke nach Figur 6 die gleiche Amplitude jedoch mit Zeitdauern jeweils nur von T1 bis T4.

Die Ansteuervorrichtung ASV1 erhält zur Steuerung des Sendepegels TP nach Figur 6 von der Recheneinheit CPU über die Steuerleitung SL3 den Befehl, das Sendeelement TE so anzusteuern, daß der über den Koppelbereich KB1 bewegte Lichtfleck LF ab dem Startzeitpunkt tA, d.h. beginnend mit der Einkopplung beim Lichtwellenleiter LW1, während des Einkoppel-Zeitintervalls TF1 mit einer Beleuchtungs-Feldstärke von näherungsweise 11 E strahlt. Dies führt empfangsseitig für den Lichtwellenleiter LW1 zu einem Empfangspegel OH1 (vgl. Figur 8) mit einem Maximum OM1 knapp unterhalb des gewünschten Empfangspegels von 8 E. Im Zeitintervall TF2 weist die Recheneinheit CPU die Ansteuervorrichtung ASV1 an, das Sendeelement TE mit dem niedrigeren Sendepegel TP = 9 E zu betreiben. Empfangsseitig wird dann für das zugehörige Empfangs-Strahlungsfeld RF2 ein Empfangspegel OH2 mit einem angestrebten Maximum OM2 von ungefähr 8 E registriert (vgl. Figur 8). Findet die Recheneinheit CPU beim Durchsuchen der zeitlichen Verteilung RP den Empfangspegel RH3 für das Empfangs-Strahlungsfeld RF3 mit dem in der Gruppe kleinsten Maximum RM3 = 2 E, so wird die Sendeseite durch die empfangsseitige Rückkopplung angewiesen, im Zeitintervall TF3 den Lichtfleck LF mit einer höheren Lichtleistung von ca. 13 E zu versorgen. Im Zeitintervall TF4 wird schließlich sendeseitig der Sendepegel TP auf ca. 7,5 E abgesenkt. Empfangsseitig resultieren somit durch die stufenartige Steuerung des Sendepegels TP für alle vier Empfangs-Strahlungsfelder RF1 bis RF4 näherungsweise Empfangspegel OH1 bis OH4 mit Maxima OM1 bis OM4 wie sie in Figur 8 dargestellt sind. Das Umschalten des Sendepegels TP auf die verschiedenen Sendestufen bzw. Leistungsniveaus erfolgt dabei ungefähr in der Mitte zwischen zwei benachbarten Lichtwellenleitern, also zu den Zeitpunkten

$$\frac{tM1 + tM2}{2}, \qquad \frac{tM2 + tM3}{2}, \qquad \frac{tM3 + tM4}{2}$$

Der Sendepegel TP wird also mittels der Lichtleistungen RH1 bis RH4 der Empfangs-Strahlungsfelder RF1 bis RF4 derart korrigiert bzw. gesteuert, daß empfangsseitig gewünschte bzw. vorgegebene Lichtleistungen für die Empfangs-Strahlungsfelder RF1 bis RF4 näherungsweise gemessen werden können. Die Sendeseite wird somit mittels einer Art "Rückkopplungsschleife" von der Empfangsseite leistungsgesteuert betrieben. Dadurch erreicht man, daß die Koppelverhältnisse in der erfindungsgemäßen Meßeinrichtung ME in gewissem Umfang unabhängig von äußeren Einflußfaktoren für nachfolgende Messungen werden, wie z.B. von unterschiedlichen Farbaufträgen (z.B. rot, grün, gelb, blau) auf den zu messenden Lichtwellenleitern LW1 bis LW4. Wird die Sendeleistung individuell für jeden Lichtwellenleiter so eingestellt und optimiert, daß sich empfangsseitig näherungsweise gleich hohe, Empfangspegel von ungefähr 8 E ergeben, so kann hierdurch besonders das Signal-/Rauschverhalten von Lichtwellenleitern mit ungünstigen Koppelbedingungen erheblich verbessert werden. So wird beispielsweise die Lichtleistung des Empfangs-Strahlungsfeldes SF3 für die Lichtwellenleiter-Kombination LW3/LW3* etwa an das Pegelniveau des am wenigsten gedämpften Strahlungsfeldes SF4 angeglichen. Außerdem wird eine schnellere bzw. genauere Messung ermöglicht. Denn durch die Einstellung gleich hoher Empfangspegel entfällt eine sonst notwendige, aufwendige Umschaltung von Verstärkerstufen im optischen Empfänger OR1, da die einzelnen Lichtwellenleiter in der Regel mit stark unterschiedlichen Koppelfaktoren beaufschlagt sind. Der Sendepegel TP kann vorteilhaft so eingestellt werden, daß gerade soviel Lichtleistung zur Verfügung steht, wie bei dem jeweiligen Lichtwellenleiter für eine optimale Auswertung im optischen Empfänger OR1 und in den nachfolgenden Auswerteeinrichtungen (z.B. SUH) erforderlich ist.

3. Die beiden vorgestellten Steuergrößen nach 1) bzw. 2) können unabhängig voneinander sowie mit besonderem Vorteil auch in Kombination zur Steuerung des Lichtfleckes LF herangezogen werden. Aus der zeitlichen Verteilung RP der Empfangs-Strahlungsfelder RF1 bis RF4 zueinander wird von der Recheneinheit CPU sowohl die zeitliche (entspricht der örtlichen) Lage der Empfangs-Strahlungsfelder RF1 bis RF4 bestimmt, als auch deren zugehörige Lichtleistungen, z.B. charakterisiert durch die Maxima RM1 bis RM4 (vgl. Figur 4).

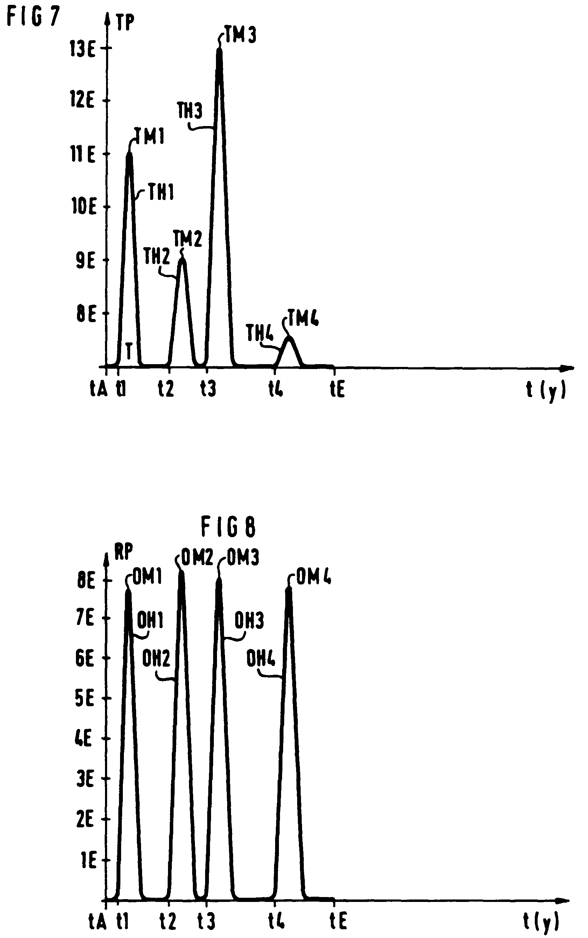

Wie in Figur 7 dargestellt ist, wird der Sendepegel TP derart gesteuert, daß der Lichtfleck LF jeweils nur am Ort des lichtführenden Lichtwellenleiter-Kernes eingeschaltet ist, d.h. nur entsprechend der aus der Referenzmessung von Figur 4 gewonnenen empfangsseitigen Abfolge von lichtführenden Einkoppel-Zeitintervallen
t1 bis t1 + T, t2 bis t2 + T, t3 bis t3 + T,
t4 bis t4 + T.

Der Lichtfleck LF beleuchtet jeweils nur während dieser spezifischen Einkoppel-Zeitintervalle sendeseitig die Einkoppel-Abschnitte TC1 bis TC4 der zu messenden Lichtwellenleiter LW1 bis LW4, während er in den übrigen Zeiten seiner Bewegung ausgeschaltet ist. Zu den Einkoppel-Zeitpunkten t1, t2, t3 und t4 wird der Lichtfleck LF bezüglich seiner Lichtleistung bzw. Beleuchtungsfeldstärke aufgrund der in der Referenzmessung gewonnen Lichtleistungen RM1 bis RM4 (vgl. Figur 4) derart verändert, daß sich Empfangspegel OH1 bis OH4 wie in Figur 8 ergeben. Der dem Lichtwellenleiter LW1 zugeordnete Lichtfleck LF1 (bzw. dessen zugeordnetes Sende-Strahlungsfeld SF1) bekommt deshalb näherungsweise eine maximale Sendeleistung DM1 = 11 E zugewiesen, um empfangsseitig ungefähr eine maximale Empfangsleistung OM1 von 8 E zu empfangen. Die den übrigen drei Lichtwellenleitern LW2 bis LW4 individuell zugeordneten Lichtflekke LF2 bis LF4 (bzw. deren zugehörige Sende-Strahlungsfelder SF2 bis SF4) werden bezüglich ihrer maximalen Sendeleistungen DM2 bis DM4 etwa wie folgt eingestellt:

TM2 = 9 E
TM3 = 13 E
TM4 = 7,5 E

Die zeitliche bzw. örtliche Verteilung des Gesamt-Sendepegels TP weist somit während der Bewegung des Lichtfleckes LF im Zeitintervall tE - tA selektive Sendepegel DH1 bis DH4 auf, die gewissermaßen invers zu den Empfangspegeln RH1 bis RH4 von Figur 4 ergänzt worden sind, um die gewünschten, etwa gleich großen Empfangspegel OH1 bis OH4 von Figur 8 zu erhalten. Die resultierenden Maxima OM1 bis OM4 dieser Empfangspegel OH1 bis OH4 unterscheiden sich nur geringfügig, vorwiegend auf grund der Meßfehler in der Referenzmessung, voneinander, d.h. die Empfangspegel OH1 bis OH4 sind mit einem geringen Anfangsfehler aus der Referenzmessung behaftet.

Bei der Sendersteuerung nach Figur 7 wird also eine Amplitudenmodulation und zusätzlich eine Pulsfrequenzmodulation der Sendeimpulse TH1 bis TH4 durchgeführt.

Dies erlaubt zum einen eine bessere Ausnutzung der Lichtleistung des Sendeelementes TE. Durch den Pulsbetrieb können weitaus höhere Lichtleistungen in die Kerne der Lichtwellenleiter eingekoppelt werden, da thermische Effekte, wie sie z.B. bei Leuchtdioden oder Halbleiterlasern auftreten, vermindert sind. Dadurch kann empfangsseitig, insbesondere bei Einstellung etwa gleich hoher Empfangspegel, ein verbessertes Signal-/ Rauschverhältnis erzielt werden. Dies ermöglicht vorteilhaft eine schnellere bzw. genauere Messung der Meßsignale I1 bis In in den Lichtwellenleitern LW1 bis LWn, da ein zeitaufwendiges Umschalten sonst notwendiger Verstärkerstufen im optischen Empfänger OR1 entfällt. Dies führt zu einer Kostenersparnis auf der Sendeseite sowie auf der Empfangsseite, da sendeseitig gängige Leuchtdioden (LED's) mittlerer Lichtleistung sowie empfangsseitig lichtempfindliche Elemente ohne nachgeordnete, aufwendige Verstärkerstufen eingesetzt werden können. Zum anderen wird durch die individuelle, sendeseitige Leistungssteuerung für jeden Lichtwellenleiter LW1 bis LWn jeweils gerade soviel Lichtleistung zur Verfügung gestellt, wie bei dem jeweiligen Lichtwellenleiter für eine optimale Auswertung im optischen Empfänger OR1 erforderlich ist. Dies könnte sonst nur durch eine aufwendige Umschaltung von Verstärkerstufen im Empfänger OR1 erreicht werden, was technische Probleme, z.B. unterschiedliche Offset-Spannungen, mit sich bringen würde. Im Mittel reicht somit bereits eine geringere Gesamt-Lichtleistung zum Betrieb der erfindungsgemäßen Meßeinrichtung aus, so daß insbesondere bei Verwendung eines Lasers als Sendeelement Probleme der Augensicherheit entschärft werden können. Bei der Anwendung der Erfindung in tragbaren, batteriebetriebenen Geräten fällt zusätzlich noch die Energieersparnis ins Gewicht, die durch den erheblich verringerten mittleren Leistungsbedarf des Sendeelementes ermöglicht wird. Damit kann als Stromversorgung eine kleinere, leichtere und kostengünstigere Batterie verwendet werden.

Mit den in Figur 8 aufgezeichneten Empfangspegeln OH1 bis OH4 kann z.B. der Ausrichtvorgang für die beiden Bandleitungen BL1 und BL2 in der Mehrfach-Spleißeinrichtung MS1 (vgl. Figur 1) durchgeführt werden. Zum Verschieben der beiden Bandleitungen BL1 und BL2 gegeneinander sind in der Mehrfach-Spleißeinrichtung MS1 zwei Stellglieder SG1 und SG2 vorgesehen. Diese können von der Recheneinheit CPU aus über Steuerleitungen SL1 bzw. SL2 mittels Steuersignale SS1 bzw. SS2 betätigt bzw. relativ zueinander verfahren werden. Die Recheneinheit CPU kann vorteilhaft anhand der im Meßwertspeicher MEM zeitlich nacheinander einlaufenden Datensätze DS3 auf die Abhängigkeit der Durchgangsdämpfung am Übergang zwischen den Bandleitungen BL1 und BL2 (in der Mehrfach-Spleißeinrichtung MS1) von der Bewegung der Stellglieder SG1 und SG2 schließen. Da diese Abhängigkeit für jede Faser einzeln gemessen wird, kann sie vorteilhaft zur optimalen Ausrichtung der Fasern verwendet werden. Weiterhin können die Meßwerte zweckmäßigerweise für die Steuerung des Spleißvorgangs sowie zur Bestimmung der erzielten Spleißdämpfung benutzt werden.

Gemäß den Ausführungen zu den Figuren 1 bis 8 kann das erfindungsgemäße Verfahren besonders zur Optimierung der individuellen, selektiven Einkoppelleistung für jeden zu messenden Lichtwellenleiter, insbesondere in einem Lichtwellenleiter-Bändchen herangezogen werden. Dies wird dadurch erreicht, daß zunächst in mindestens einer Referenzmessung bzw. in einer Art Eichvorgang ein beliebiger Sendepegel jeweils in die zu messenden Lichtwellenleiter eingekoppelt wird, und empfangsseitig die charakteristische zeitliche Verteilung der zugehörigen Empfangs-Strahlungsfelder aufgenommen und festgehalten wird. Aus dieser zeitlichen Verteilung können verschiedene Kriterien zur Steudene Kriterien zur Steuerung des sendeseitigen Einkoppel-Lichtfleckes, wie z.B. seine Beleuchtungs-Feldstärke, seine Größe und Form, seine Einschalt- und/oder seine Ausschaltzeitpunkte, usw. bestimmt werden. Durch diese Art "Rückkopplung" der Sendeseite mit der Empfangsseite lassen sich die Koppelverhältnisse für jeden zu messenden Lichtwellenleiter individuell in gewissem Umfang beeinflussen, so daß bestimmte Empfangspegel vorgebbar und auch annähernd einhaltbar sind. Von Vorteil kann es auch sein, Anfangsfehler aus der Referenzmessung durch Iteration, d.h. z.B. durch Mittelung mehrerer Referenzmessungen, weitgehend zu eliminieren.

Die Steuerung des Lichtfleckes LF kann auch zu einer Regelschleife ergänzt sein, deren Rgelgrößen in analoger Weise zu den Figuren 1 bis 8 aus der zeitlichen Verteilung bestimmt und bereitgestellt werden. Die Ansteuervorrichtung für die Sende- /Koppeleinrichtung SK weist dann zweckmäßigerweise eine Regelschaltung mit innerer Rückkopplung auf.

Darüber hinaus ist das erfindungsgemäße Verfahren bzw. die zugehörige, erfindungsgemäße Meßeinrichtung auch zur Lösung einer Vielzahl weiterer Problemstellungen der Einfaser- und der Mehrfasertechnik einsetzbar. So kann beispielsweise die Meßeinrichtung ME in Figur 1 auch Bestandteil einer Fertigungslinie für Lichtwellenleiter-Bändchen sein und zur Fertigungssteuerung bzw. Fertigungsüberwachung der Lichtwellenleiter-Bändchen herangezogen werden. Die Lichtwellenleiter LW1 bis LWn werden von links kommend nach rechts durch die Meßeinrichtung ME hindurch abgezogen und durchlaufen dabei vor der Sende-/Koppelvorrichtung SK zusätzlich einen Extruder. Dieser Extruder umgibt die nahezu parallel nebeneinander geführten Lichtwellenleiter LW1 bis LWn erst mit einer äußeren Umhüllung AH1, wie sie zur Veranschaulichung im linken Teil von Figur 1 angedeutet ist. Das so hergestellte Lichtwellenleiter-Bändchen BL1 läuft dann in der Sende-/Koppelvorrichtung SK in der Koppelvorrichtung KV1 über den zylinderförmigen Biegedorn ZT1 des Biegekopplers BK1, der als z.B. bewegliche Rolle ausgebildet ist. Beim Durchlaufen der Koppelvorrichtung KV1 wird mittels des optischen Senders OT1 ein Prüflicht LB (kontinuierlich oder in bestimmten Zeitabständen) zeitlich nacheinander in die zu messenden Lichtwellenleiter LW1 bis LWn gemäß den Figuren 1 und 2 eingekoppelt. Nach Durchlaufen einer vorgebbaren Prüfstrecke (die Mehrfach-Spleißeinrichtung MS1 ist hierbei wegzulassen) des Lichtwellenleiter-Bändchens BL1 werden mit dem optischen Empfänger OR1 von Figur 1 Lichtanteile aus dem Prüflicht bzw. Meßsignalen I1 bis In entnommen und der Auswerteeinrichtung AE1 zugeführt. Dazu wird das Lichtwellenleiter-Bändchen BL1 analog zur Sendeseite ebenfalls über einen z.B. als bewegliche Rolle ausgebildeten Zylinder ZT2 im Biegekoppler BK2 gezogen, so daß mittels des lichtempfindlichen Elementes GLE des optischen Empfängers OR1 die zeitliche Verteilung RP der ausgekoppelten Empfangs-Strahlungsfelder RF1 bis RFn erfaßt und in dem Meßwertspeicher MEM der Auswerteeinrichtung AE1 aufgezeichnet bzw. abgelegt werden kann. Zusätzlich wird die zeitliche Verteilung RP in der Anzeigevorrichtung DSP1 der Auswerteeinrichtung AE1 visuell dargestellt. Auf diese Weise ist die zeitliche Verteilung RP zur Auswertung bereitgestellt. Aus der festgehaltenen zeitlichen Verteilung RP der Empfangs-Strahlungsfelder RF1 bis RFn können nun Aussagen sowie Informationen über verschiedene Zustände der Lichtwellenleiter LW1 bis LWn im Lichtwellenleiter-Bändchen BL1 gewonnen werden:

1. Aus der zeitlichen Verteilung RP kann z.B. die örtliche Lage bzw. Position der Lichtwellenleiter LW1 bis LWn mit n = 4 im Lichtwellenleiter-Bändchen BL1 bestimmt werden. Die Empfangspegel RH1 bis RH4 sind den Lichtwellenleitern LW1 bis LW4 im Lichtwellenleiter-Bändchen BL1 individuell in eindeutiger Weise zugeordnet. Deren Maxima RM1 bis RM4 kennzeichnen jeweils die Orte maximaler Lichtführung in den Lichtwellenleitern LW1 bis LWn mit n = 4, das heißt deren Kernlagen. Aus der Momentaufnahme der Anzeigevorrichtung DSP1 von Figur 1 ergibt sich somit, daß der Lichtwellenleiter LW3 etwas nach links auf den Lichtwellenleiter LW2 zu versetzt in der äußeren Umhüllung AH1 liegt, so daß die Lichtwellenleiter LW1 bis LWn mit n = 4 nicht äquidistant in der äußeren Umhüllung AH1 eingebettet sind. Die Recheneinheit CPU stellt diesen abweichenden Zustand für den Lichtwellenleiter LW3 fest und weist daraufhin die Ansteuervorrichtung ASV1 über die Steuerleitung SL3 an, den Extrusionsvorgang im Extruder über eine eigens vorgesehene, in Figur 1 nicht dargestellte, Steuerleitung entsprechend zu korrigieren. Dadurch ist es möglich, ein Lichtwellenleiter-Bändchen herzustellen, in dessen äußerer Umhüllung die Lichtwellenleiter in vorgebbare Positionen exakt einbringbar sind. Zugleich läßt sich die örtliche Verteilung der Lichtwellenleiter-Kerne präzise angeben, was zum Beispiel für Qualitätssicherungsmaßnahmen eine Rolle spielt sowie die Handhabung mit den Lichtwellenleiter-Bändchen insbesondere bei Spleißvorgängen vereinfacht.

2. Um zu erreichen, daß die Lichtwellenleiter LW1 bis LWn mit n = 4 durch den Extrusionsprozeß mit einer gleichmäßig dicken Außenhülle AH1 umgeben werden, werden die Maxima RM1 bis RM4 der gemessenen Empfangspegel RH1 bis RH4 von Figur 4 analysiert. Aus den unterschiedlich hohen Empfangspegeln RH1 bis RH4 in der Momentaufnahme der Anzeigevorrichtung DSP1 kann geschlossen werden, daß die Lichtwellenleiter-Bändchendicke quer zur Längsachse der Lichtwellenleiter LW1 bis LWn mit n = 4 unterschiedlich ist bzw. schwankt. Das Empfangs-Strahlungsfeld RF3, das dem Lichtwellenleiter LW3 zugeordnet ist, weist in der Momentaufnahme den niedrigsten Empfangspegel RH3 auf. Daraus kann geschlossen werden, daß der Lichtwellenleiter LW3 sendeseitig die stärkste Dämpfung erfährt. Dies deutet auf eine stärkere Beschichtung am Ort des Lichtwellenleiters LW3 hin. Zur Kontrolle und Steuerung des Beschichtungsprozesses bestimmt die Recheneinheit CPU die Leistungspegel, das heißt z.B. die Maxima RM1 bis RM4, aus der zeitlichen Verteilung RP. Die Recheneinheit CPU steuert dabei mittels der Ansteuervorrichtung ASV1 den Beschichtungsvorgang so, daß die Leistungspegel RH1 bis RH4 etwa gleich hoch, das heißt innerhalb eines vorgebbaren Toleranzbereiches, liegen. Auf diese Weise sind die Lichtwellenleiter LW1 bis LWn von einer gleich dikken Außenhülle AH1 quer zu ihrer Längsachse eingebettet, auch wenn die Lichtwellenleiter voneinander verschiedene Durchmesser haben sollten. Darüber hinaus können die Leistungsmaxima RM1 bis RM4 zur Qualitätsbeurteilung des Fertigungsprozesses für das jeweils hergestellte Lichtwellenleiter-Bändchen aufgezeichnet und registriert werden.

3. Stammen die Lichtwellenleiter LW1 bis LWn mit n = 4 aus unterschiedlichen Fertigungschargen, das heißt sie weisen unterschiedliche Fasergeometrien und Fasereigenschaften auf, so können diese mittels der zeitlichen Verteilung RP exakt dokumentiert werden und für die Fertigung des Lichtwellenleiter-Bändchens BL1 sowie für nachfolgende Fertigungsschritte bzw. weiteren Anwendungen verwertet werden. Insbesondere kennzeichnet und repräsentiert die zeitliche Verteilung RP den individuellen Zustand der Lichtwellenleiter LW1 bis LWn in der Bandleitung BL1 oder einer Gruppe loser nebeneinander liegender einzelner Lichtwellenleiter LW1 bis LW4. Aus der zeitlichen Verteilung RP können deshalb vorteilhaft Bezugsgrößen sowie Referenzwerte für nachfolgende Meßaufgaben mit dem Lichtwellenleiter-Bändchen BL1 oder der Gruppe von Lichtwellenleitern gewonnen werden.

Darüber hinaus kann das erfindungsgemäße Verfahren z.B. auch in einer Färbelinie sowie bei sonstigen Coating- bzw. Beschichtungs-Verfahren für Lichtwellenleiter eingesetzt werden. Dabei kann der Beschichtungsvorgang für jeden einzelnen Lichtwellenleiter individuell aufgrund der Meßinformation aus der zeitlichen Verteilung aufgenommen, beurteilt und gesteuert werden.

Zusätzlich bietet das erfindungsgemäße Verfahren auch die Möglichkeit, aus der zeitlichen Verteilung RP der Empfangs-Strahlungsfelder RF1 bis RFn automatisch die Anzahl der einzelnen sendeseitig beleuchteten Lichtwellenleiter LW1 bis LWn zu erkennen. Dies kann beispielsweise bei Lichtwellenleiter-Bündeln mit einer größeren Anzahl von mehr oder weniger losen Lichtwellenleitern von Bedeutung sein. Von besonderem Vorteil ist es, daß der Zustand jedes einzelnen Lichtwellenleiters bzw. jeder einzelnen Lichtleitfaser aus der zeitlichen Verteilung in eindeutiger Weise entnommen werden kann. Aufgrund der gemessenen Empfangspegel in der zeitlichen Verteilung sowie ihrer Zuordnung zueinander ist es vorteilhaft möglich, jeden einzelnen Lichtwellenleiter innerhalb dieser Gruppe in eindeutiger Weise zu identifizieren. Dies spielt beispielsweise bei räumlich weit voneinander entfernten Enden zweier Gruppen mit mehreren Lichtwellenleitern eine Rolle, deren Lichtwellenleiter in eindeutiger Weise jeweils zu korrespondierenden Lichtwellenleiter-Paaren miteinander verbunden werden sollen. Desweiteren kann beispielsweise mit dem erfindungsgemäße Meßverfahren auch eine Ausrichtung der beiden Bandleitungen BL1 und BL2 in Figur 1 überwacht und gesteuert werden. Dazu werden die beiden Bandleitungen BL1 und BL2 zweckmäßigerweise gegeneinander hin und her verschoben ("Jitter-Bewegung"), so daß mittels der zeitlichen Veränderung der Empfangspegel in der zeitlichen Verteilung RP Aufschlüsse über die gegenseitige Lage korrespondierender Lichtwellenleiter bzw. Lichtwellenleiter-Kombinationen, wie z.B. LW1/LW1*, gewonnen werden können.

Weiterhin kann das erfindungsgemäße Verfahren vorteilhaft auch Informationen über Lichtführungseigenschaften sowie Fasergeometrien der Lichtwellenleiter bzw. Lichtleitfasern selbst liefern. Beispielsweise kann aus der zeitlichen Verteilung der gemessenen Empfangs-Strahlungsfelder jeweils der Ort maximaler Lichtführung in den zugeordneten Lichtwellenleitern, das heißt deren Kern-Lagen, in eindeutiger Weise lokalisiert werden. Aus den Leistungspegeln in der zeitlichen Verteilung können vielfältige Übertragungs-Kenngrößen für Lichtwellenleiter, wie zum Beispiel Phasenlaufzeiten, Durchgangsdämpfungen, Transmissionsdämpfungen, Spleißdämpfungen, Exzentrizitäten des Faser-Kernes, usw. bestimmt werden.

Die Figuren 9 und 10 veranschaulichen die räumliche Gestalt des Lichtfleckes LF. Figur 9 legt analog zu Figur 2 eine Scan- bzw. Abtast-Ebene mit den Koordinatenachsen x und y fest. Die x-Achse kennzeichnet die Strahlrichtung bzw. Ausbreitungsrichtung des Sende-Strahlungsfeldes SF. Die y-Achse weist in die Abtast- bzw. Verschieberichtung des Sende-Strahlungsfeldes SF quer zur Längsachse der zu messenden Lichtwellenleiter LW1 bis LWn im Koppelbereich KB1. In Figur 9 ist zur Veranschaulichung nur ein gekrümmtes Teilstück des Lichtwellenleiters LW1 eingezeichnet, während die restlichen, zu messenden Lichtwellenleiter LW2 bis LWn weggelassen worden sind. Das Sende-Strahlungsfeld SF, das in dieser Zeichenebene in schematischer Weise strichpunktiert angedeutet ist, tritt mit seinem Lichtfleck nahezu tangential in den Kern des gekrümmt geführten Lichtwellenleiters LW1 am Einkoppelort im Bereich des strichpunktiert eingezeichneten Einkoppel-Abschnittes TC1 fokussiert ein. Der Einkoppel-Abschnitt TC1 wird dabei zweckmäßigerweise bis zu etwa 1 mm längs des Lichtwellenleiters LW1 durch den Lichtfleck beleuchtet. Gegebenenfalls kann der Lichtfleck jeweils auch direkt die offene Stirnseite z.B. des Lichtwellenleiters LW1 beleuchten, falls diese zugänglich ist.

Figur 10 zeigt eine schematische Ansicht des Lichtfleckes zusammen mit der Bandleitung BL1 in einer Schnittebene, die man durch einen Schnitt senkrecht zur Zeichenebene von Figur 9 entlang der Schnittlinie S1, S2 am Einkoppelort des Sende-Strahlungsfeldes SF in den Lichtwellenleiter LW1 erhält. Figur 10 stellt dort zur besseren Veranschaulichung der räumlichen Form bzw. Gestalt des Lichtfleckes LF eine gedachte Einkoppel-Ebene mit den Koordinatenachsen y und z senkrecht zur Ausbreitungs- bzw. Strahlrichtung x des Sende-Strahlungsfeldes SF dar. Die Lichtwellenleiter LW1 bis LWn weisen voneinander verschiedene Durchmesser auf und sind in der Bandleitung BL1 zusammengefaßt. Die Kerne C1 bis Cn der Lichtwellenleiter LW1 bis LWn sind dabei am jeweiligen Einkoppelort nicht exakt entlang einer Geraden parallel zur Abtastrichtung y angeordnet, sondern liegen etwas versetzt zueinander in verschiedenen Raumlagen in der äußeren Umhüllung AH1 der Bandleitung BL1. Die Kerne C1 bis Cn weisen zudem gegebenenfalls in Abtastrichtung y nichtäquidistante Abstände zueinander auf. Ursache für die in z- und/oder in y-Richtung von der Idealverteilung abweichende Positionierung der Kerne kann z.B. sein, daß die Kerne C1 bis Cn jeweils in ihrer äußeren Beschichtungshülle (Coating) CT1 bis CTn exzentrisch, d.h. nicht mittig liegen (z.B. bei Monomode-Lichtwellenleitern liegen die Kern-Exzentrizitäten in der Größenordnung von ca. 2 bis 3 μm). Zudem können sich insbesondere beim Zusammenfassen der unterschiedlich dicken Lichtwellenleiter LW1 bis LWn zu dem Bändchen BL1 Schwankungen in der Auftragsstärke ihrer gemeinsamen Außenhülle AH1 ergeben, so daß die Lichtwellenleiter LW1 bis LWn in ihr unterschiedliche Raumpositionen, vorzugsweise in z-Richtung, einnehmen. Der Lichtfleck LF wird nun vorteilhaft bezüglich seiner Raumform derart gestaltet, daß er während der Bewegung des Sende-Strahlungsfeldes in Abtastrichtung y jeweils nur einen der Kerne C1 bis Cn der Lichtwellenleiter LW1 bis LWn beleuchtet, wobei jeweils eine Lichtüberkopplung in benachbarte Lichtwellenleiter weitgehend vermieden ist.

In Figur 10 ist für den Lichtfleck LF in der Einkoppelebene y, z am Einkoppelort des Lichtwellenleiters LW1 vorteilhaft z.B. eine etwa schlank ovale bzw. ellipsenförmige, näherungsweise streifenförmige bzw. linienförmige Querschnittsform mit Ausrichtung seiner Längsachse in z-Richtung gewählt. Der Lichtfleck LF weist also eine ungleichmäßige Querschnittsform auf, die am Einkoppelort senkrecht zur Ausbreitrichtung x eine Vorzugsrichtung in z-Richtung zeigt. Seine räumliche Ausdehnung in z-Richtung, das heißt senkrecht zur Ausbreitungsrichtung x, ist vorteilhaft größer als in Scan- bzw. Abtastrichtung y gewählt. Das Sende-Strahlungsfeld SF ist in Figur 10 beispielsweise auf den Kern C1 des Lichtwellenleiters LW1 ausgerichtet, so daß der zugehörige Lichtfleck LF den Kern C1 näherungsweise symmetrisch zu dessem Zentrum beleuchtet. Er weist in z-Richtung eine räumliche Ausdehnung auf, die sicherstellt, daß die Kerne C1 bis Cn auch bei einer Anordnung in verschiedenen z-Raumlagen in der Bandleitung BL1 durch den Lichtfleck LF des in y-Richtung wandernden Sende-Strahlungsfeldes SF abgetastet und zuverlässig in z-Richtung beleuchtet werden. Die räumliche Ausdehnung des Lichtflecks LF in z-Richtung am Einkoppelort wird zweckmäßigerweise so gewählt, daß zu erwartende Lagetoleranzen der Lichtwellenleiter-Kerne Cl bis Cn, die insbesondere auch durch die Verwendung unterschiedlich dicker Bändchen im Biegekoppler BK1 zustande kommen können, damit ausgeglichen sind. In der Praxis kann mit Bändchen-Toleranzen gerechnet werden, die in ihrer Summe vorzugsweise etwa ± 50 µm erreichen. Auf diese Weise kann die Lichteinkopplung von Schwankungen bzw. Toleranzen der Lichtwellenleiter-Bändchendicke (wie zum Beispiel der ungleichmäßig dicken bzw. inhomogenen Auftragsstärke der äußeren Umhüllung AH1), sowie der Fasergeometrien der Lichtwellenleiter LW1 bis LWn (wie zum Beispiel der Kern-Exzentrizitäten sowie unterschiedliche Lichtwellenleiter-Durchmesser aufgrund verschiedener Fertigungschargen), der voneinander abweichenden Krümmungsradien der Lichtwellenleiter LW1 bis LWn der Lichtfleck-Abbildung selbst, usw. vorteilhaft unabhängig gemacht werden. Wird eine dünne, d.h. nicht stark auf den äußeren Umhüllungen CT1 bis CTn auftragende, Außenhülle AH1 gewählt, weist der Lichtfleck LF in z-Richtung zweckmäßigerweise am Einkoppelort eine räumliche Ausdehnung auf, die mindestens der halben Lichtwellenleiter-Bändchendicke bzw. ungefähr dem halben Außendurchmesser des jeweiligen Lichtwellenleiters, vorzugsweise zwischen 100 µm und 200 µm, entspricht. Bei dicken Lichtwellenleiter-Bändchen bzw. bei Lichtwellenleitern mit größeren Außendurchmessern wird die Länge des Lichtflecks LF in z-Richtung zweckmäßigerweise entsprechend größer gewählt. Es genügt dabei im allgemeinen eine Ausdehnung des Lichtflecks LF in z-Richtung am Einkoppelort jeweils in der Größenordnung der Dicke bzw. Außendurchmesser des jeweiligen Lichtwellenleiters bzw. der jeweiligen Dicke des Lichtwellenleiter-Bändchens BL1. Die Längsausdehnung des Lichtfleckes LF wird somit zweckmäßigerweise jeweils derart in z-Richtung angepaßt, daß während der Abtastbewegung des Sende-Strahlungsfeldes SF eine fokussierte Einkopplung in die Kerne C1 bis Cn der Lichtwellenleiter LW1 bis LWn mit dem Lichtfleck LF auch dann noch weitgehend sichergestellt ist, wenn die Kerne C1 bis Cn in z-Richtung unterschiedliche Raumlagen bzw. Raumpositionen am Einkoppelort in der Bandleitung BL1 einnehmen.

Das Sende-Strahlungsfeld SF wird insbesondere durch eine Strahl-Ablenkvorrichtung, wie z.B. den schwenkbaren Spiegel BS von Figur 2, lateral in y-Richtung, d.h. quer, zur Längsausdehnung (axialen Erstreckung) der Bandleitung BL1 bzw. zu den Lichtwellenleitern LW1 bis LWn geführt, so daß es zeitlich nacheinander, d.h. sukzessive, jeweils auf die gekrümmt geführten Lichtwellenleitern LW1 bis LWn am jeweiligen Einkoppelort im Koppelbereich KB1 (vgl. Figur 1) gelenkt wird. Die Bewegung des Sende-Strahlungsfeldes SF kann vorteilhaft auf verschiedene Weise durchgeführt werden:

A1) Das Sende-Strahlungsfeld SF wird stetig, d.h. kontinuierlich insbesondere linear, über den Koppelbereich KB1 (vgl. Figur 1) verfahren, so daß der Koppelbereich KB1 und damit die Einkoppelorte der Lichtwellenleiter LW1 bis LWn kontinuierlich überstrichen werden.

A2) Das Sende-Strahlungsfeld SF wird schrittweise bzw. gerastert, d.h. in Abtastschritten bzw. Sprüngen in Einkoppel-Positionen gebracht, die den zu messenden Lichtwellenleitern jeweils zugeordnet sind. Ausgerichtet auf die jeweiligen Einkoppelorte der Lichtwellenleiter-Kerne C1 bis Cn steht es dort jeweilst fest.

Unabhängig von der Strahlungsfeld-Bewegungsart kann das Sende-Strahlungsfeld SF vorteilhaft unterschiedlich aktiviert bzw. geschaltet werden:

B1) Das Sende-Strahlungsfeld SF wird kontinuierlich abgestrahlt, so daß ein kontinuierlich leuchtender Lichtfleck LF in der Einkoppelebene y, z während der Strahlungsfeld-Bewegung gebildet wird.

B2) Das Sende-Strahlungsfeld SF wird in einer vorgebbaren Abfolge ein- und ausgeschaltet, d.h. getastet, bzw. pulsartig mit Einschalt- und Totzeiten betrieben, so daß ein gepulster bzw. getasteter Lichtfleck LF in der Einkoppelebene y, z für vorgebbare Einkoppel-Positionen des Sende-Strahlungsfeldes SF insbesondere im Bereich der Einkoppelorte der gekrümmt geführten Lichtwellenleiter LW1 bis LWn gebildet wird. Zum Beispiel kann eine Tastung des Sendepegels TP bzw. Verlaufs der Intensitätsverteilung des Sende-Strahlungsfeldes SF nach den Figuren 5, 6 oder 7 erfolgen.

Der Lichtfleck LF weist vorteilhaft in allen vier Betriebsarten A1, A2, B1, B2 in Abtast- bzw. Scan-Richtung y eine Strahl- bzw. Beleuchtungsfeldbreite LFB derart auf, daß während der translatorischen, lateralen Bewegung des Sende-Strahlungsfeldes SF in den zu messenden Lichtwellenleitern LW1 bis LWn zugeordnete Meßsignale I1 bis In (vgl. Figur 1) selektiv aktiviert werden und dabei jeweils eine Lichtüberkopplung in benachbarte Lichtwellenleiter möglichst vermieden wird. Dazu wird die Strahlbreite LFB des Lichtflecks LF in Abtastrichtung y vorteilhaft jeweils kleiner als der Abstand KB zweier benachbarter Lichtwellenleiterkerne (z.B. C1, C2) gewählt. Unter Berücksichtigung der Toleranzen der Fasergeometrien, insbesondere jeweils der Kernexzentrizitäten (z.B. KE1, KE2), zweier benachbarter Lichtwellenleiter (z.B. LW1, LW2) ergibt sich somit als obere Grenze für die Strahlbreite LFB, wobei die Kernradien mit KR1, KR2 bezeichnet sind:

$$OG = KB - (KR1 + KR2) - (KE1 + KE2) \geq LFB$$

Bei Monomode-Lichtwellenleitern in einem dichtgepackten Lichtwellenleiter-Bändchen gilt näherungsweise:

$KB = 250\ \mu m$, $KR1 = KR2 = 10\ \mu m$, $KE1 = KE2 = 2,5\ \mu m$ und somit $OG = 225\ \mu m$.

Auf diese Weise wird vorteilhaft sichergestellt, daß die empfangsseitig aufgenommenen Empfangs-Strahlungsfelder RF1 bis RFn weitgehend selektiv, d.h. getrennt voneinander, vorliegen, so daß eine selektive, individuelle Auswertung der zeitlichen Verteilung RP der Empfangs-Strahlungsfelder RF1 bis RFn möglich wird.

Die Strahlbreite bzw. räumliche Ausdehnung LFB des Lichtflecks LF in Abtastrichtung y kann zweckmäßigerweise am jeweiligen Einkoppelort für den zu messenden Lichtwellenleiter unter Berücksichtigung des jeweiligen Lichtwellenleiter-Kerndurchmessers KD folgendermaßen eingestellt werden:

a) LFB = KD
b) LFB > KD
c) LFB < KD

In Abhängigkeit von der jeweiligen Betriebsart des Sende-Strahlungsfeldes SF bzw. von Kombinationen der Betriebsarten A1, A2, B1, B2 wird die Strahlbreite LFB vorteilhaft entsprechend a), b) oder c) unter Berücksichtigung der oberen Grenze OG angepaßt:

I. Das Sende-Strahlungsfeld SF wird nach A2) und B2) betrieben, d.h.: das Sende-Strahlungsfeld SF wird schrittweise in seine lokalen Einkoppel-Positionen für die Einkoppelorte der gekrümmt geführten Lichtwellenleiter LW1 bis LWn bewegt, und ist dort auf die Kerne CI bis Cn der Lichtwellenleiter LW1 bis LWn ausgerichtet. Während das Sende-Strahlungsfeld SF dort feststeht, ist es für eine vorgebbare Zeitspanne bzw. Einkoppel-Zeitintervall eingeschaltet (z.B. T1 in Figur 5). Um in diesem Fall eines jeweils am Einkoppelort feststehenden Lichtflecks LF eine zuverlässige Lichteinkopplung sicherstellen zu können, wird die Strahlbreite LFB für den Lichtfleck LF zweckmäßigerweise entsprechend a) oder b) gewählt.

Bei einer gewählten Strahlbreite nach c) wäre ein zielgenaues Treffen des jeweiligen Kerns aufgrund der geringen Ausdehnung des Lichtflecks LF in Abtastrichtung y unter den gegebenen Toleranzen des Bewegungsvorgangs unter Umständen erschwert. Im Fall a), d.h. LFB = KD, ist eine im Vergleich zum Fall c) weit weniger exakte Ausrichtung erforderlich, um den jeweiligen Lichtwellenleiter-Kern zu treffen, d.h. den Lichtfleck LF und den jeweiligen Kern jeweils in etwa zur Deckung zu bringen. Besonders vorteilhaft ist Fall b), d.h. LFB > KD, da dann auch bei einer nicht exakten Ausrichtung des Sende-Strahlungsfeldes SF auf den jeweiligen Kern in y-Richtung dieser Kern vom Lichtfleck LF vollständig ausgeleuchtet werden kann. Indem als untere Schranke UG für die Strahlbreite LFB zweckmäßigerweise mindestens gleich der Kerndurchmesser KD plus die Summe aller y-Toleranzen des jeweiligen Lichtwellenleiters gewählt wird, kann die Lichteinkopplung auch in Abtastrichtung y unabhängig von Toleranzen und Schwankungen während des Abtastvorgangs gemacht werden, wie z.B. von Kernexzentrizitäten, nichtäquidistant angeordneten Lichtwellenleitern in y-Richtung, ungenauer Führung und Ausrichtung des Sende-Strahlungsfeldes SF, usw. ... Für die Strahlbreite LFB gilt also:

$$OG > LFB > UG$$

II. Das Sende-Strahlungsfeld SF wird nach A2) und B1) betrieben, d.h.: das Sende-Strahlungsfeld SF springt "punktweise" von Einkoppel-Position zu Einkoppel-Position der Lichtwellenleiter LW1 bis LWn und steht dort für ein vorgebbares Einkoppel-Zeitintervall fest. Während dieser Raster-Bewegung über den gesamten Koppelbereich KB1 bleibt das Sende-Strahlungsfeld SF ständig eingeschaltet. Die Strahlbreite LFB wird dann zweckmäßig entsprechend (I) gewählt.

III. Das Sende-Strahlungsfeld SF wird nach A1) und B1) betrieben, d.h. die gekrümmt geführten Lichtwellenleiter LW1 bis LWn werden kontinuierlich vom Sende-Strahlungsfeld SF überstrichen, wobei der Lichtfleck LF kontinuierlich (ununterbrochen) leuchtet. Für eine zuverlässige Lichteinkopplung kann die Strahlbreite LFB des Lichtflecks LF zweckmäßigerweise entsprechend c) gewählt werden, d.h. der Lichtfleck LF wird besonders vorteilhaft in der Einkoppelebene y, z möglichst linienförmig abgebildet. Die Strahlbreite LFB ist also kleiner als der jeweilige Kerndurchmesser KD gewählt, so daß LFB < KD gilt. Dadurch kann Licht in den jeweiligen Kern optimal und mit besonders hoher Zeitauflösung (Figur 4) fokussiert in den jeweiligen Lichtwellenleiter bzw. dessen Kern eingekoppelt werden. Indem der linienförmige Lichtfleck LF kontinuierlich über den Kern des jeweiligen Lichtwellenleiters am Einkoppelort wandert, wird zuverlässig sichergestellt, daß der jeweilige Kern unabhängig von Toleranzen und Schwankungen in Abtastrichtung y getroffen wird. Für die Überstreichzeit UT, die der Lichtfleck LF mit einer Geschwindigkeit LFV für das Überstreichen des jeweiligen Einkoppelortes, insbesondere dem Lichtwellenleiter-Kerndurchmesser KD, benötigt, gilt annähernd

$$UT = \frac{KD}{LFV} \ .$$

Bei einer Scan-Frequenz von 20 Hz für den gesamten Koppelbereich KB1 mit vier zu einer Bandleitung zusammengefaßten Lichtleitfasern ergibt sich somit näherungsweise eine Überstreichzeit von UT = 500 μsec für den jeweiligen Lichtwellenleiterkern. Empfangsseitig ergibt sich unter Vernachlässigung der Ansprechzeit des optischen Empfängers ORI und/ oder der Auswerteeinrichtung AE1 ein etwa rechteckförmiger Impuls näherungsweise der Dauer UT für den jeweiligen Lichtwellenleiter.

IV. Das Sende-Strahlungsfeld SF wird nach A1) und B2) betrieben, d.h. das Sende-Strahlungsfeld SF wird kontinuierlich über den Koppelbereich KB1 bewegt, wobei es in einer vorgebbaren Abfolge ein- und ausgeschaltet, d.h. getastet, wird. Zum Beispiel kann es entsprechend einer der Figuren 5 mit 7 gepulst werden. Das Sende-Strahlungsfeld SF wird also in der jeweiligen Koppelposition, d.h. während der Sender aktiviert ist - T1 bis T4 in Figur 5 - nicht angehalten, sondern kontinuierlich weiterbewegt. Zweckmäßigerweise wird das Sende-Strahlungsfeld SF vor Erreichen des jeweiligen Einkoppelortes eingeschaltet, so daß der Lichtfleck LF über den jeweiligen Lichtwellenleiter-Kern laufen kann, und nach Verlassen des Einkoppelortes bzw. Lichtwellenleiter-Kerns wieder ausgeschaltet. Der jeweilige Lichtwellenleiter-Kern C1 bis Cn wird dabei vorteilhaft mit einem Lichtfleck LF entsprechend III. abgescannt, dessen räumliche Ausdehnung LFB in Abtastrichtung y kleiner als der jeweilige Kerndurchmesser KD gewählt werden kann. Es wird somit vorteilhaft für die Strahlbreite LFB < KD entsprechend Fall c) gewählt.

Die Einkoppel-Zeitintervalle für eine selektive Einkopplung von Meßsignalen in den Fällen I. bzw. II. werden weitgehend durch die Ansprechzeiten bzw. Einschwingzeiten der Elemente im optischen Empfänger OR1 (z.B. des gemeinsamen lichtempfindlichen Elementes GLE) und/oder in der empfangsseitigen Auswerteeinrichtung AE1 (z.B. des Digitalisiergliedes SUH) bestimmt.

In praktisch gelagerten Fällen kann die empfangsseitige Auswertung der bereitgestellten zeitlichen Verteilung der Empfangs-Strahlungsfelder mehrerer zu messender Lichtwellenleiter gegebenenfalls erschwert sein. Beispielsweise kann es empfangsseitig durch Empfänger-Rauschen zu Meßungenauigkeiten der aus den Empfangs-Strahlungsfeldern erzeugten Empfangssignale kommen. Weiterhin können z.B. geringfügige Unregelmäßigkeiten in der Bewegung des sendeseitigen Sende-Strahlungsfelds empfangsseitig zu Schwankungen in der zeitlichen Lage der erfaßten Empfangs-Strahlungsfelder führen, insbesondere bei Mehrfach-Durchläufen (Mehrfach-Scans) des Sende-Strahlungsfeldes, d.h. eine Art "Jitter-Effekt" hervorrufen.

Einer Weiterbildung der Erfindung liegt deshalb die Aufgabe zugrunde, einen Weg aufzuzeigen, wie die Auswertung der bereitgestellten zeitlichen Verteilung der Empfangs-Strahlungsfelder mehrerer zu messender Lichtwellenleiter in einfacher Weise verbessert werden kann. Diese Aufgabe wird dadurch gelöst, daß in mindestens einem ersten sendeseitigen Durchlauf des Sende-Strahlungsfeldes die zeitliche Verteilung der Empfangs-Strahlungsfelder registriert und festgehalten wird, und daß aufgrund dieser Registrierung bei nachfolgenden Messungen empfangsseitige Steuervorgänge ausgelöst werden.

Diese Weiterbildung zeichnet sich vor allem dadurch aus, daß zunächst in einem ersten sendeseitigen Durchlauf des Sende-Strahlungsfeldes die zeitliche Verteilung der Empfangs-Strahlungsfelder der zu messenden Lichtwellenleiter registriert und festgehalten. Erst dann werden aufgrund dieser Registrierung empfangsseitige Steuervorgänge für nachfolgende, eigentliche Messungen ausgelöst. Mit Hilfe des ersten sendeseitigen Durchlaufs können somit zunächst wesentliche Meßinformationen über die zu messenden Lichtwellenleiter gewonnen werden und damit die Koppelverhältnisse sende- und/oder empfangsseitig für die eigentlichen, nachfolgenden Messungen in definierter Weise eingestellt werden. Dadurch ist bei nachfolgenden Messungen eine weitgehend exakte Auswertung der bereitgestellten Fülle von Meßinformationen aus der zeitlichen Verteilung der aufgenommenen Empfangs-Strahlungsfelder in einfacher sowie reproduzierbarer Weise ermöglicht.

Insbesondere können in mindestens einem ersten sendeseitigen Durchlauf die die zeitlichen Lagen (Zeitlagen), d.h. die Einkoppelzeitdauern, der Empfangs-Strahlungsfelder registriert werden und dann in mindestens einem zweiten sendeseitigen Durchlauf die gemessenen Empfangssignale der Empfangs-Strahlungsfelder jeweils über diese Zeitlagen hinweg integriert werden. Auf diese Weise stehen die Lichtleistungen der Empfangs-Strahlungsfelder zur weiteren Auswertung zur Verfügung, insbesondere zur Steuerung der Sendeleistung des Sende-Strahlungsfeldes individuell für jeden zu messenden Lichtwellenleiter.

Eine Weiterbildung der Erfindung betrifft auch eine Einrichtung für Messungen an mehreren Lichtwellenleitern mit einer optischen Sende-/Koppeleinrichtung, die an die jeweils zu messenden Lichtwellenleiter ankoppelbar ist, sowie mit einem optischen Empfänger, der mindestens ein Empfangselement aufweist, dem eine Auswerteeinrichtung zugeordnet ist, wobei die Sende-/Koppeleinrichtung derart ausgebildet ist, daß sendeseitig jeweils ein Sende-Strahlungsfeld mit seinem Lichtfleck über Einkoppel-Abschnitte der zu messenden Lichtwellenleiter zeitlich nacheinander bewegbar und in diese einkoppelbar ist, und wobei im optischen Empfänger das Empfangselement so ausgerichtet und ausgebildet ist, daß dieses jeweils der sendeseitigen Einkopplung zugeordnete Empfangs-Strahlungsfelder der zu messenden Lichtwellenleiter in ihrer zeitlichen Verteilung erfaßt, daraus Empfangssignale erzeugt, und diese einer Auswerteeinrichtung zuführt, welche dadurch gekennzeichnet ist, daß die Auswerteeinrichtung eine Recheneinheit mit zugehörigem Meßwertspeicher derart aufweist, daß die in mindestens einem ersten sendeseitigen Durchlauf des Sende-Strahlungsfeldes erzeugten Empfangssignale registrierbar und aufgrund dieser Registrierung bei nachfolgenden Messungen empfangsseitige Steuervorgänge mittels Steuermittel auslösbar sind.

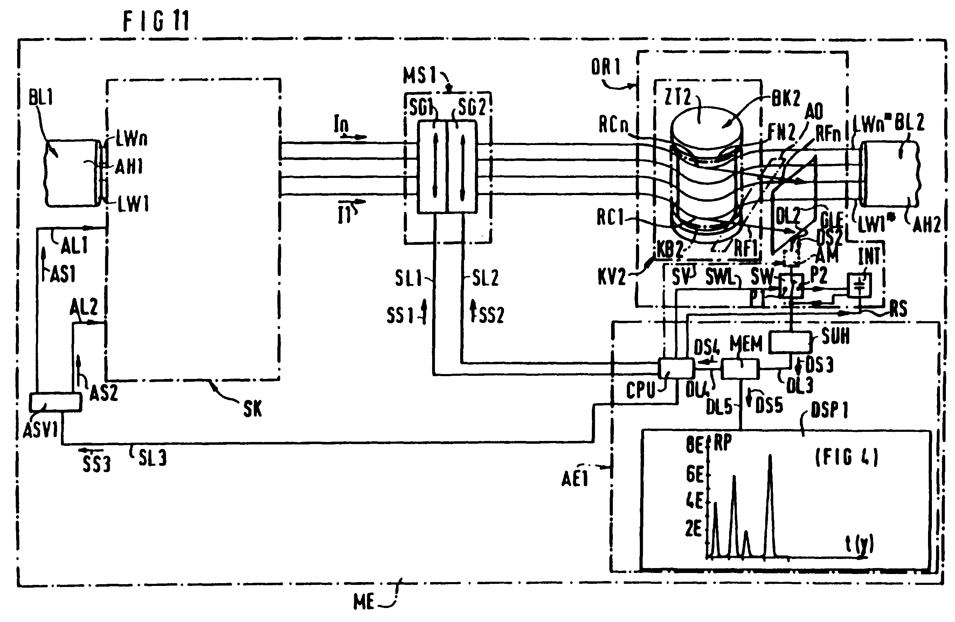

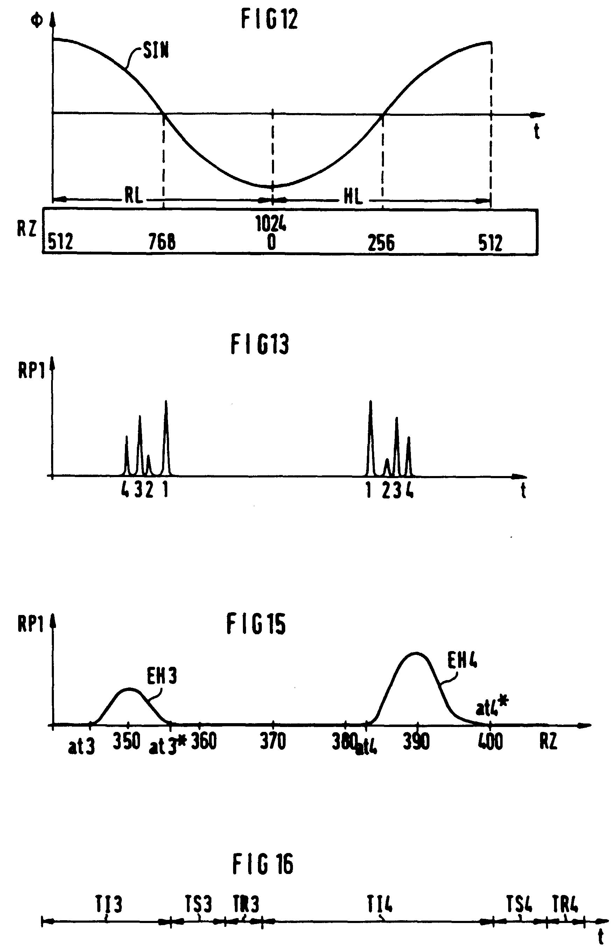

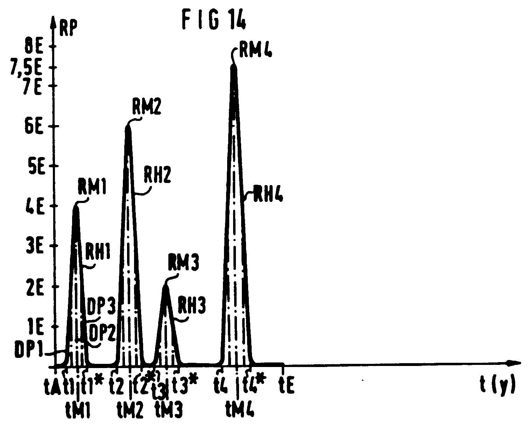

Figur 11 zeigt eine bevorzugte Ausführungsform der erfindungsgemäßen Meßeinrichtung ME von Fig. 1. Jeweils unverändert übernommene Elemente aus den Fig. 1 bis 10 sind in Fig. 11 (sowie in den nachfolgenden Figuren 12 bis 16) jeweils mit den gleichen Bezugszeichen versehen. Der optische Sender sowie die Koppelvorrichtung sind in der strichpunktiert angedeuteten Umrahmung der Sende-/Koppelvorrichtung SK der Übersichtlichkeit halber weggelassen worden. Diese Komponenten können zusammen mit der strichpunktiert eingerahmten Mehrfach-Spleißeinrichtung MS1 zweckmäßigerweise zu einem Meßkoffer, z.B. eines Lichtwellenleiter-Spleißgerätes oder eines Dämpfungsmeßgerätes, zusammengefaßt sein. Die Erfindung kann neben diesem besonders vorteilhaften Anwendungsgebiet auch zur selektiven Bestimmung weiterer optischer Übertragungskenngrößen wie z.B. von Phasenlaufzeiten, Impulsantworten, Streckendämpfungen, usw., sowie bei einer Vielzahl weiterer Problemstellungen der Mehrfasertechnik wie z.B. zur Lichtwellenleiter-Identifizierung, zur Fertigungssteuerung und Fertigungsüberwachung von Lichtwellenleiter-Bändchen, zur Qualitätskontrolle, zur Bestimmung von Fasergeometrien und optischen Güteeigenschaften, usw. eingesetzt werden. Für nachfolgende Ausführungen wird jeweils auf die Transmissions- bzw. Spleißdämpfungsmessung bei Lichtwellenleiter-Spleißgeräten Bezug genommen.

In Figur 11 stehen sich in der Mehrfach-Spleißeinrichtung MS1 die erste Bandleitung BL1 (Lichtwellenleiter-Bändchen) mit den Lichtwellenleitern LW1 bis LWn und die zweite, mit ihr zu verschweißende Bandleitung BL2 mit den Lichtwellenleitern LW1* bis LWn* gegenüber. Die Lichtwellenleiter LW1 bis LWn der Bandleitung BL1 sind nahezu parallel in einer flachen, im Querschnitt etwa rechteckförmigen, äußeren Umhüllung AH1 (aus Kunststoffmaterial) eingebettet, die im linken Teil von Figur 11 angedeutet und im übrigen Figurenteil zugunsten der Übersichtlichkeit weggelassen worden ist. Entsprechend dazu sind die Lichtwellenleiter LW1* bis LWn* der Bandleitung BL2 von einer ähnlich ausgebildeten äußeren Umhüllung AH2 umgeben, die im rechten Teil von Figur 11 andeutungsweise dargestellt und dann weggelassen worden ist. Zweckmäßigerweise ist für die äußeren Umhüllungen AH1 und AH2 ein zumindest teilweise optisch transparentes Material gewählt, um eine weitgehend dämpfungsarme Ein- und/oder Auskopplung von Licht zu gewährleisten.

Um sendeseitig Licht eines Sende-Strahlungsfeldes zeitlich nacheinander in die zu messenden Lichtwellenleiter LW1 bis LWn einzukoppeln, weist die Sende-/Koppelvorrichtung SK zweckmäßigerweise zum Beispiel eine Koppelvorrichtung nach dem Biegekopplerprinzip auf. Zur Lichteinkopplung werden dabei die Lichtwellenleiter LW1 bis LWn vorteilhaft jeweils entlang eines beliebig vorgebbaren Streckenabschnitts etwa bogenförmig bzw. gekrümmt um einen etwa zylinderförmigen Biegedorn eines Biegekopplers geführt. Die Koppelvorrichtung mit dem Biegekoppler ist in der strichpunktiert eingerahmten gezeichneten Sende-/Koppelvorrichtung SK von Figur 11 der Übesichtlichkeit halber weggelassen worden. (Eine beispielhafte Ausführungsform der Sende-/Koppelvorrichtung SK ist in Fig. 2 dargestellt.) Eine sendeseitige Lichteinkopplung ist auch in die offenen Stirnseiten der zu messenden Lichtwellenleiter bei freier Zugänglichkeit deren Enden zweckmäßig.

Der optische Sender der Sende-/Koppelvorrichtung SK weist zweckmäßigerweise zum Beispiel mindestens ein Sendeelement auf, beispielsweise eine Laserdiode oder einen Laser. Dieses Sendeelement sendet ein Sende-Strahlungsfeld in Richtung auf eine Strahlablenkvorrichtung, wie zum Beispiel einen drehbaren Spiegel. Dieser drehbare Spiegel wird vorteilhaft mittels eines Galvanometer-Scanners quer zur Hauptabstrahlungsrichtung des Sende-Strahlungsfeldes gedreht bzw. gekippt. Dadurch wird das Sende-Strahlungsfeld mit seinem Lichtfleck zeitlich nacheinander über Einkoppelabschnitte der zu messenden Lichtwellenleiter bewegt, so daß Meßsignale I1 bis In in die zu messenden Lichtwellenleiter LW1 bis LWn zeitlich nacheinander eingekoppelt werden.

In Figur 11 laufen die eingekoppelten Meßsignale I1 bis In in den zu messenden Lichtwellenleitern LW1 bis LWn über die Mehrfach-Spleißeinrichtung MS1 zur Empfangsseite. Dort wird ein Anteil von ihnen in einer zweiten Koppelvorrichtung KV2 (analog aufgebaut zur sendeseitigen Koppelvorrichtung) von dem optischen Empfänger OR1 z.B. mittels eines zweiten Biegekopplers BK2 in etwa tangentialer Richtung ausgekoppelt. Die Lichtwellenleiter LW1* bis LWn* der zweiten Bandleitung BL2 sind dazu in einer Führungsnut FN2 um einen Zylinder ZT2 (analog zur Sendeseite) gekrümmt herumgelegt. Dadurch treten den Sende-Strahlungsfeldern SF1 bis SFn zugeordnete Empfangs-Strahlungsfelder RF1 bis RFn, die jeweils individuell den zu messenden Lichtwellenleitern LW1 bis LWn zugeordnet sind, aus deren Kerne entlang vorzugsweise bogenförmiger Auskoppel-Abschnitte RC1 bis RCn in den Koppelbereich KB2 des Biegekopplers BK2 aus. Da durch die Verschiebebewegung des sendeseitigen Lichtflecks über die Einkoppelabschnitte der Lichtwellenleiter LW1 bis LWn zeitlich nacheinander die Meßsignale I1 bis In selektiv in den Kernen der Lichtwellenleiter LW1 bis LWn hervorgerufen werden, erscheinen auch deren zugeordnete Empfangs-Strahlungsfelder RF1 bis RFn in entsprechender zeitlicher Reihenfolge, d.h. hier:

Das Empfangs-Strahlungsfeld RF1 für den Lichtwellenleiter LW1 wird zuerst empfangen. Es folgen anschließend der Reihe nach die Empfangs-Strahlungsfelder RF2 bis RFn - 1, bis schließlich zuletzt das dem Lichtwellenleiter LWn zugeordnete Empfangs-Strahlungsfeld RFn im Koppelbereich KB2 eintrifft und dort austritt. Die Empfangs-Strahlungsfelder RF1 bis RFn werden zeitlich nacheinander, d.h. sequentiell, von einem gemeinsamen, vorzugsweise feststehend angeordneten, lichtempfindlichen Element GLE zumindest teilweise erfaßt bzw. aufgenommen und von diesem jeweils in ein elektrisches Meßsignal DS2 umgewandelt.

Bei digitaler Signalauswertung wird das Meßsignal DS2 über eine Signalleitung DL2 direkt an ein Digitalisierglied SUH einer Auswerteeinrichtung AE1 übertragen. Dieses Digitalisierglied SUH tastet die zeitlich nacheinander eintreffenden elektrischen Meßsignale DS2 in kurzen Zeitabständen ab, digitalisiert diese Abtastwerte und überträgt digitalisierte Meßsignale DS3 über eine Leitung DL3 an einen Meßwertspeicher MEM der Auswerteeinrichtung AE1. Aus diesem Meßwertspeicher MEM werden die aufgezeichneten, digitalisierten Meßdaten über eine Leitung DL5 als ein Signal DS5 an eine Anzeigeeinrichtung DSP1, z.B. einem Display, weitergeleitet und dort visuell dargestellt. Eine Recheneinheit CPU entnimmt jeweils die aufgezeichnete zeitliche Verteilung der Empfangs-Strahlungsfelder RF1 - RFn über eine Leitung DL4 als Signal DS4 aus dem Meßwertspeicher MEM und wertet die Meßinformation aus.

Bei Verwendung eines großflächigen Empfangselements GLE, wie z.B. einer Photodiode, das alle zu messenden Lichtwellenleiter erfaßt, ist es empfangsseitig nicht erforderlich, z.B. das Empfangselement GLE für eine selektive, unterscheidbare Aufnahme der Empfangs-Strahlungsfelder RF1 bis RFn entsprechend den zeitlich nacheinander aktivierten Lichtwellenleiter LW1 bis LWn zu verschieben. Ein individuelles Ausrichten des Empfangselementes GLE auf den jeweils aktivierten Lichtwellenleiter wie bei einem kleinflächigen Empfangselement, das jeweils nur einen Lichtwellenleiter erfaßt, entfällt somit. Auch kann es gegebenenfalls für eine weitergehende Ortsauflösung der Empfangs-Strahlungsfelder RF1 bis RFn vorteilhaft sein, mehrere Empfangselemente, insbesondere in Zeilen- oder Arrayform anstelle des gemeinsamen Empfangselementes GLE, vorzugsweise feststehend, anzubringen. Als Empfangselemente eignen sich z.B. herkömmliche Fotodioden, CCD-Elemente, Diodenarrays Diodenzeilen, usw.

Zur Bestimmung und Auswertung der Koppelverhältnisse in der Meßeinrichtung ME wird zunächst mindestens eine zeitliche Lageverteilung der empfangsseitig zu messenden Lichtwellenleiter LW1* bis LW11* bei mindestens einem ersten sendeseitigen Durchlauf des Sende-Strahlungsfeldes durchgeführt. Um empfangsseitig die zeitliche Verteilung der Empfangs-Strahlungsfelder RF1 bis RFn (der Lichtwellenleiterkombinationen LW1/LW1* bis LW11/LW11*) während dieses ersten sendeseitigen Durchlaufs aufzeichnen zu können, ist im optischen Empfänger OR1 in der Leitung DL2 ein Schalter SW in eine solche Schalterstellung gebracht, daß jeweils das Empfangssignal DS2 der nacheinander eintreffenden Empfangs-Strahlungsfelder RF1 bis RFn direkt an die Auswerteeinrichtung AE1 durchgeschaltet wird.

In der Anzeigeeinrichtung DSP1 der Auswerteeinrichtung AE1 von Figur 11 sowie in der zugehörigen vergrößerten Darstellung von Figur 14 ist die zeitliche Verteilung RP der Empfangs-Strahlungsfelder RF1 bis RFn mit n = 4 aufgetragen. Bei einem sendeseitigen Durchlauf des Sende-Strahlungsfeldes während der Zeitdauer tE - tA beginnend beim Lichtwellenleiter LW1 und endend beim Lichtwellenleiter LWn mit n = 4 erscheinen in der Anzeigevorrichtung DSP1 zeitlich nacheinander während der Zeitdauer tE - tA selektive, unterscheidbare Empfangspegel RH1 bis RH4, die jeweils individuell den Lichtwellenleitern LW1 bis LW4 eindeutig zugeordnet sind. Bei einer nahezu linearen Verschiebebewegung des sendeseitigen Lichtflecks entspricht dabei die zeitliche Verteilung RP der Empfangs-Strahlungsfelder RF1 bis RFn gemessen über die Zeit t annähernd der örtlichen Lage der Lichtwellenleiter, insbesondere der Lichtwellenleiter-Kerne. Die selektiven Empfangspegel RH1 bis RH4 stellen bei digitaler Signalauswertung jeweils Einhüllende bzw. Interpolierte für die digitalisierten, abgetasteten Meßsignale dar, d.h. sie entsprechen der zeitlichen Verteilung der Empfangs-Strahlungsfelder RF1 bis RF4 für den Fall einer kontinuierlichen bzw. stetigen sendeseitigen Einkopplung. Beispielsweise umgibt der dem Lichtwellenleiter LW1 zugeordnete Empfangspegel RH1 drei diskrete, strichpunktiert eingezeichnete, Empfangswerte DP1, DP2 und DP3. Entsprechend den insgesamt vorgesehenen vier Lichtwellenleitern LW1 bis LW4 bzw. LW1* bis LW4* in den Bandleitungen BL1 bzw. BL2 ergeben sich die gegebenenfalls vier unterschiedlichen Einhüllenden RH1 bis RH4 mit jeweils drei diskreten Empfangswerten. Deren Maxima sind mit RM1 bis RM4 bezeichnet und Zeitpunkten tM1 bis tM4 zugeordnet.

Die vier Einhüllenden bzw. Empfangspegel RH1 bis RH4 unterscheiden sich in ihrer zeitlichen Lage (Zeitlage), d.h. in ihrer zeitlichen Position zueinander. Es wird also nicht zu allen Zeiten t im Zeitintervall tE - tA während des ersten sendeseitigen Durchlaufs des Sende-Strahlungsfeldes Licht in die Kerne der zu messenden Lichtwellenleiter LW1 bis LW4 eingekoppelt und dort geführt, sondern nur zu den Zeiten, zu denen in der Sende-/ Koppeleinrichtung (Sendekoppler) SK der Lichtfleck einen Faser- bzw. Lichtwellenleiter-Kern trifft. Es wird somit Lichtleistung in den Lichtwellenleiter-Kernen nur zu bestimmten Einkoppel-Zeitdauern sowie in bestimmten Zeitabständen geführt.

Zur Ermittlung der sendeseitigen Einkoppelzeiten des Sende-Strahlungsfeldes werden deshalb während mindestens eines ersten sendeseitigen Durchlaufs empfangsseitig die Zeitlagen der Empfangs-Strahlungsfelder RF1 bis RF4 bzw. deren zugehöriger Empfangspegel RH1 bis RH4 ermittelt. Dazu wird für den jeweiligen Empfangspegel jeweils der Zeitpunkt seiner ansteigenden Pegelflanke und/oder der Zeitpunkt seiner abfallenden Pegelflanke mit Hilfe der Recheneinheit CPU der Auswerteeinrichtung AE1 bestimmt und festgehalten. Durch diese beiden Zeitpunkte jedes Empfangspegels RH1 bis RH4 ist dessen Zeitlage in eindeutiger Weise festgelegt. Die Zeitpunkte t1, t2, t3 und t4 ansteigender Pegelflanken kennzeichnen somit diejenigen Einkoppelzeiten, ab denen tatsächlich Licht in die Kerne der Lichtwellenleiter LW1 bis LW4 eingekoppelt wird. Die Zeitpunkte t1*, t2*, t3* und t4* legen hingegen diejenigen Zeitpunkte (Totzeiten) fest, ab denen kein Licht in den Kernen der Lichtwellenleiter LW1 bis LW4 geführt wird. Die Zeitlagen t1 bis t1*, t2 bis t2*, t3 bis t3* und t4 bis t4* der Empfangspegel RH1 bis RH4 kennzeichnen somit die zeitliche Abfolge sowie die Zeitdauer der tatsächlichen Lichtführung in den zu messenden Lichtwellenleiter-Kombinationen LW1/ LW1* bis LW4/LW4*. Dadurch ist für die sendeseitige Einkopplung nachfolgender, eigentlicher Messungen ein definierter Zeitrahmen mit Sendezeiten (und zwar zwischen den Zeitpunkten t1 bis t1*, t2 bis t2*, t3 bis t3* und t4 bis t4*) sowie von Sendepausen ("Totzeiten") (und zwar zwischen den Zeitpunkten tA bis t1, t1* bis t2, t2* bis t3, t3* bis t4 und t4* bis tE) eindeutig vorgegeben.

In Figur 11 übermittelt die empfangsseitige Recheneinheit CPU der Auswerteeinrichtung AE1 diesen Zeitrahmen, d.h. die Zeitpunkte (t1/t1* bis t4/t4*) der aus dem ersten sendeseitigen Durchlauf gewonnenen Empfangspegel RH1 bis RH4, mittels Steuersignale SS3 über die Leitung SL3 an die Ansteuervorrichtung ASV1 der Sende-/Koppelvorrichtung SK auf der Sendeseite. Die Ansteuervorrichtung ASV1 setzt diese Steuersignale SS3 in Steuersignale AS1 um und steuert damit vorzugsweise das Sendeelement des optischen Senders über eine Leitung AL1 entsprechend dem vorgegebenen Zeitrahmen vorzugsweise in einer Art "Pulsbetrieb". Das Sendeelement wird also entsprechend dem vorgegebenen Zeitrahmen jeweils zu den Zeitpunkten t1, t2, t3 und t4 aktiviert und jeweils zu den Zeitpunkten t1*, t2*, t3* und t4* deaktiviert.

Der Pulsbetrieb kann vorteilhaft auch dadurch realisiert werden, daß die Strahlablenkvorrichtung der Sende-/Koppelvorrichtung SK, zum Beispiel ein Ablenkspiegel mit einem Galvanometer-Scanner als Antriebselement sprunghaft (schrittweise) verdreht wird, so daß die Lichtwellenleiter-Kerne nur während der Sendezeiten t1 bis t1*, t2 bis t2*, t3 bis t3* und t4 bis t4* mit dem Lichtfleck des Sende-Strahlungsfeldes getastet bzw. überstrichen werden.

Dazu ist als Antriebselement für den Spiegel ein Element mit kontrollierbarer Bewegung wie z.B. ein Schrittmotor oder Motor mit Rückmeldung besonders zweckmäßig. Anstelle von Zeitintervallen werden dann in mindestens einem ersten Durchlauf zweckmäßigerweise Einkoppelpositionen des Spiegels aufgezeichnet. Der 1. Meßvorgang kann also so aussehen, daß anstelle der Zeitpunkte t1 bis t4 und t1* bis t4* die zugehörigen Motorpositionen gespeichert werden. Im 2. oder nachfolgenden Meßvorgängen werden dann vorteilhaft nur noch die zu den Empfangspegeln bzw. Einhüllenden RH1-RH4 von Figur 14 zugehörigen Motorpositionen angefahren. Dabei können vorteilhaft entweder jeweils die den Zeitbereichen t1 bis t1*, t2 bis t2* usw...zugeordneten Motorpositionen kontinuierlich bzw. stetig durchfahren werden, d.h. jeweils nur während der Zeitintervalle t1 bis t1*, t2 bis t2*, usw. werden die Kerne der zu messenden Lichtwellenleiter kontinuierlich mit dem Lichtfleck überstrichen. Dadurch brauchen die Anforderungen an die Portioniergenauigkeit des Lichtflecks auf die Faser-Kerne vorteilhaft nicht besonders hoch zu sein. Demgegenüber kann der Lichtfleck ausgelöst als empfangsseitiger Steuervorgang zweckmäßigerweise auch jeweils nur auf die einzelnen, den Maxima RM1 bis RM4 zugehörigen Motorpositionen eingestellt werden, so daß jeweils nur der Maximalwert der Leistungspegel empfangsseitig gemessen wird. Dies bietet den Vorteil einer verbesserten Ausnutzung des Sendeelementes, eine einfachere empfangsseitige Auswertung (nur jeweils 1 Meßwert pro Empfangspegel), erfordert aber eine höhere Positionsgenauigkeit, um jeweils reproduzierbare Messungen zu erhalten. Zweckmäßigerweise sind dann zusätzliche Regelelemente für das Antriebselement des beweglichen Spiegels vorzusehen, die eine kontrollierte, schrittweise (sprunghafte) Ablenkbewegung des Spiegels ermöglichen.

Nach dieser ersten Registrierung der Zeitlagen der Empfangspegel RH1 bis RH4 der Empfangs-Strahlungsfelder RF1 bis RF4 werden nun in Figur 11 aufgrund dieser Registrierung bei nachfolgenden Messungen empfangsseitige Steuervorgänge ausgelöst. Zur Bestimmung der Lichtleistungen der Empfangs-Strahlungsfelder RF1 bis RF4 wird der Schalter SW im optischen Empfänger OR1 von Figur 11 mittels der Recheneinheit CPU über eine Steuerleitung SWL entsprechend den vorgegebenen Zeitrahmen (mit den ermittelten Zeitlagen) aus der 1. Messung, d.h. entsprechend der zeitlichen Abfolge der vom lichtempfindlichen Element GLE erfaßten Empfangs-Strahlungsfelder, zwischen zwei Stellungen P1 und P2 geschaltet. Der Schalter SW befindet sich in der Stellung P2 während der Sendezeiten t1 bis t1*, t2 bis t2*, t3 bis t3* sowie t4 bis t4*. Dadurch werden in der Stellung P2 die zeitlich nacheinander eintreffenden Empfangssignale DS2 der Empfangs-Strahlungsfelder RF1 bis RFn mit n = 4 einem Integrator INT im optischen Empfänger OR1 zugeführt. Dieser integriert jeweils die Fläche unter den Einhüllenden RH1 bis RH4 von Figur 14 vom Zeitpunkt deren ansteigender Pegelflanke bis zum Zeitpunkt deren abfallender Pegelflanke. Während der Sendepausen bzw. "Totzeiten" tA bis t1, t1* bis t2, t2* bis t3, t3* bis t4 und t4* bis tE hingegen nimmt der Schalter SW die Stellung P1 ein. In dieser Stellung können Empfangssignale weder zur Auswerteeinrichtung AE1 noch zum Integrator INT gelangen, d.h. der Schalter SW koppelt in der Stellung P1 den optischen Empfänger OR1 von der Auswerteeinrichtung AE1 ab, d.h. er befindet sich in der "Luft". Der Schalter SW wird als empfangsseitiges Auslösemittel für den Integrator INT gemäß der zeitlichen Ablauffolge der zuvor registrierten Empfangs-Strahlungsfelder, d.h. synchron zu deren Zeitlagen, zwischen den beiden Stellungen P1 und P2 hin- und hergeschaltet. Dadurch wird sichergestellt, daß der Integrator INT als empfangsseitiges Steuermittel jeweils nur während der jeweiligen Sendedauer z.B. von t1 bis t1* das ankommende Empfangssignal DS2 aufintegriert. Der Integrator INT ermittelt somit jeweils selektiv die jeweilige Gesamt-Lichtleistung des momentan anliegenden Empfangs-Strahlungsfeldes und gibt diesen aufsummierten Meßwert an die Auswerteeinrichtung AE1 zur weiteren Auswertung weiter. Vor jeder neuen Integration wird dabei der Integrator INT über eine Steuerleitung RS von der Recheneinheit CPU auf Null rückgesetzt und der Meßvorgang für das nächste Empfangs-Strahlungsfeld wiederholt.

Gemäß dem in Figur 14 vorgegebenen Zeitrahmen steht der Schalter SW von Fig. 11 z.B. während der Zeitdauer tA bis t1 in der Stellung P1. Beim Eintreffen des Empfangs-Strahlungsfeldes RF1 wechselt der Schalter SW in die Stellung P2 über, so daß die Lichtleistung des Empfangs-Strahlungsfeldes RF1 während seiner Sendezeit t1 bis t1* aufsummiert wird. Nach der abfallenden Flanke zum Zeitpunkt t1* wird die Integration durch Umlegen des Schalters SW in die Stellung P1 gestoppt, seine Integrationssumme ausgelegt und dieser Integrationswert an die Auswerteeinrichtung AE1 übertragen. Der Integrator INT wird dann vor dem Eintreffen zum Zeitpunkt t2 des zweiten Empfangs-Strahlungsfeldes RH2 zurückgesetzt, so daß die Lichtleistungs-Messung für das nächste eintreffende, hier das zweite Empfangs-Strahlungsfeld von vorne beginnen kann. Besonders zweckmäßig kann der Integrator INT jeweils etwa in der Mitte zwischen zwei benachbarten Zeitlagen, z.B. zwischen den beiden Zeitlagen t1 bis t1* und t2 bis t2*, d. h. in der Mitte zwischen zwei Pegeln wie z.B. RH1 und RH2, ausgelesen und zurückgesetzt werden. Der Integrator bietet den Vorteil, daß höherfrequente Stör- oder Rauschanteile im optischen Empfänger OR1 für die eigentlichen Messungen keine Rolle mehr spielen, da jeweils über eine volle Zeitlage der Empfangs-Strahlungsfelder RF1-RFn mit n=4 integriert wird.

Gegebenenfalls können diese empfangsseitigen Steuervorgänge jeweils anstelle der Zeitpunkte ansteigender und/oder abfallender Flanken der Empfangspegel RH1 - RH4 jeweils auch zu den Zeitpunkten tM1-tM4 deren Maxima RM1-RM4 ausgelöst werden. Dazu werden zweckmäßigerweise jeweils nur die Maxima RM1-RM4 als einzelne Leistungsmeßwerte aufgezeichnet, so daß der Integrator INT vorteilhaft entfallen kann. Sendeseitig ist dafür eine besonders genaue ("punktweise") Positionierung des Lichtflecks auf die Lichtwellenleiter-Kerne zweckmäßig.

Mittels dieser selektiv gewonnenen Lichtleistungen der Empfangs-Strahlungsfelder RF bis RFn mit n= 4 läßt sich nun jeweils individuell für jeden zu messenden Lichtwellenleiter die Sendeleistung des Sendeelements der Sende/Koppelvorrichtung SK über mindestens eine Rückkopplungsschleife zur Sendeseite, wie z.B. gebildet durch SL3, steuern. Die Lichtleistungssteuerung wird mittels der Recheneinheit CPU zweckmäßigerweise so vorgenommen, daß sich annähernd gleich große Empfangspegel empfangsseitig für nachfolgende, eigentliche Messungen im 2. Meßvorgang an den Lichtwellenleitern ergeben. Pegelschwankungen, d.h. unterschiedlich große Maxima RM1 bis RM4 wie bei den Empfangspegeln RH1 bis RH4 von Figur 14 beim ersten sendeseitigen Durchlauf sind somit vermieden. Unterschiede in den Koppelfaktoren, zum Beispiel unterschiedliche Ein- und Auskoppeldämpfungen aufgrund unterschiedlicher Farbüberzüge der Lichtwellenleiter, können mittels der sendeseitigen Leistungssteuerung vorteilhaft ausgeglichen werden. Durch die Pegelanpassung der Empfangs-Strahlungsfelder aller zu messenden Lichtwellenleiter ergibt sich jeweils in etwa das gleiche Signal-/Rauschverhältnis und somit eine optimal gleichmäßige Ausnutzung des optischen Empfängers OR1 (keine Über- oder Untersteuerung).

Als weiterer empfangsseitiger Steuervorgang aufgrund der ersten Registrierung der zeitlichen Verteilung der Empfangs-Strahlungsfelder RF1 bis RFn kann es auch zweckmäßig sein, einen Verstärker individuell für jedes Empfangs-Strahlungsfeld RF1 bis RFn einzustellen. In Figur 11 ist dieser Verstärker in der Leitung DL2 zwischen dem Empfangselement GLE und dem Schalter SW strichpunktiert eingezeichnet und mit dem Bezugszeichen AM versehen. Er wird über eine ebenfalls strichpunktiert eingezeichnete Steuerleitung SV von der Recheneinheit CPU aus entsprechend der zeitlichen Abfolge der Empfangs-Strahlungsfelder RF1-RF4 aus der 1. Messung geschaltet. Auf diese Weise kann empfangsseitig für jeden einzelnen Lichtwellenleiter individuell ein Verstärkungsfaktor eingestellt werden, so daß sich jeweils eine optimale Aussteuerung des Integrators INT und der nachfolgenden Signalauswertung (SUH) ergibt, vorzugsweise sich also eine empfangsseitige Pegelanpassung erreichen läßt. Eine sendeseitige Leistungsanpassung zum Ausgleich der empfangsseitigen Pegelschwankungen kann dann ggf. entfallen. Allerdings kann dann eine Verbesserung des Signal/Rauschverhältnisses wie bei der sendeseitigen nicht Leistungsanpassung durch das Umschalten oder Verstärkung bewirkt werden.

Zur Verbesserung des Auskoppelverhältnisses kann zweckmäßigerweise eine Auskoppeloptik AO vorgesehen sein, die in Figur 1 strichpunktiert zwischen der Koppelvorrichtung KV2 und dem lichtempfindlichen Element GLE eingezeichnet ist. Zweckmäßigerweise läßt sich die Auskoppeloptik AO mittels der Recheneinheit CPU entsprechend der zeitlichen Abfolge aus dem ersten Meßvorgang als weiterer empfangsseitiger Steuervorgang individuell für jeden zu messenden Lichtwellenleiter über eine hier nicht eingezeichnete Signalleitung einstellen. Als Auskoppeloptik AO eignet sich vorzugsweise z.B. eine Kugellinse.

Gegebenenfalls kann es bei einem kleinflächigen Empfangselement, das jeweils nur ein zu messendes Strahlungsfeld erfaßt, auch zweckmäßig sein, dieses kleinflächige Empfangselement als empfangsseitigen Steuervorgang aufgrund der Registrierung der Zeitlagen aus dem ersten sendeseitigen Durchlauf entsprechend dieser zeitlichen Verteilung zu verschieben.

Weiterhin lassen sich aus der zeitlichen Verteilung RP des ersten Meßvorgangs auch Informationen zur Steuerung von Stellgliedern SG1, SG2 der Mehrfachspleißstelle MS1 gemäß Figur 11 gewinnen. Dazu wird zweckmäßigerweise eine Relativmessung durchgeführt, in der jeder Lichtwellenleiter zunächst auf maximale Transmission ausgerichtet wird und dann der zugehörige Pegel als Referenzwert benutzt wird. Aus Figur 14 bzw. aus dem Anzeigebild der Anzeigeeinrichtung DSP1 von Figur 11 geht hervor, daß das der Lichtwellenleiter-Kombination LW3/ LWS3 zugeordnete Empfangs-Strahlungsfeld RF3 den relativen Empfangspegel RH3 mit dem niedrigsten Maximum RM3 aufweist. Das dem Lichtwellenleiter LW4 zugeordnete Empfangs-Strahlungsfeld RF4 weist hingegen den am höchsten liegenden relativen EmpfangsPegel RH4 innerhalb der zu messenden Gruppe der vier Lichtwellenleiter LW1 bis LW4 auf. Während in der Lichtwellenleiter-Kombination LW4/LW4* Licht nahezu ideal, d.h. ohne Dämpfungsverluste, eingekoppelt, geführt und ausgekoppelt wird, weist das Lichtwellenleiter-Paar LW3/LW3* die größte Dämpfung auf. Über Steuerleitungen SL1, SL2 lassen sich mittels Steuersignale SS1, SS2 die Stellglieder SG1 und SG2 von der Recheneinheit CPU aus bedienen. Dadurch lassen sich die beiden Bändchen BL1 und BL2 vorzugsweise derart gegeneinander verschieben, daß sich für alle gemessenen Empfangspegel RH1 bis RH4 gemeinsam bzw. gleichzeitig jeweils ein maximaler relativer Empfangspegel vor dem Spleißvorgang ergibt.

Als empfangsseitiger Steuervorgang kann aufgrund der ersten Registrierung der zeitlichen Verteilung der Empfangspegel auch zweckmäßig die Steuerung des Spleiß- bzw. Schweißvorgangs für die beiden miteinander zu verbindenden Bändchen BL1 und BL2 ausgelöst werden. Dabei steuert die Recheneinheit CPU die Schweißzeit derart, daß sich für alle zu verbindenden Lichtwellenleiter-Kombinationen LW1/ LW1* bis LW4/LW4∗ jeweils empfangsseitig zusammen betrachtet, d.h. gleichzeitig der maximal mögliche Empfangspegel ergibt.

Besonders vorteilhaft arbeitet die Meßeinrichtung ME nach Figur 11 mit einer periodischen Ablenkung des Lichtstrahls des Sende-Strahlungsfeldes auf der Sendeseite, um eine quasi-kontinuierliche Messung zu ermöglichen. Diese periodische Ablenkung läßt sich beispielsweise dadurch erreichen, daß ein kippbarer Spiegel als Strahlablenkvorrichtung in der Sende-/Koppelvorrichtung SK durch einen Galvanometer-Scanner periodisch hin- und hergedreht wird. Diese Bewegung des Spiegels erfolgt wegen seines Massen-Trägheitsmoments sinusförmig, d.h. sein Drehwinkel hängt sinusförmig von der Zeit t ab. Es handelt sich somit um eine nichtlineare Abtastbewegung des Sendestrahls.

Figur 12 zeigt den sinusförmigen Verlauf SIN des Drehwinkels in Abhängigkeit von der Zeit t. Die Spiegeldrehung wird zweckmäßigerweise mit Hilfe eines optischen Systems, wie zum Beispiel einer Kugellinse in der Sende/Koppelvorrichtung SK in eine winkelproportionale Auslenkung des Lichtflecks des Sende-Strahlungsfeldes aus der Mittenlage umgesetzt, so daß die Position des Lichtflecks auf dem Bändchen beim sendeseitigen Durchlauf ebenfalls sinusförmig von der Zeit abhängt. Um eine feste zeitliche Zuordnung, d.h. einen definierten Zusammenhang, zwischen der sendeseitigen Einkopplung und der empfangsseitigen Auskopplung sicherzustellen, erfolgt die Steuerung der Scanner-Bewegung direkt durch die Recheneinheit CPU in der Auswerteeinrichtung AE1, vorzugsweise durch einen Prozessor. Dadurch läßt sich eine feste zeitliche Zuordnung aller Steuer- und Meßvorgänge in der Meßeinrichtung ME von Figur 11 zur aktuellen Position des Lichtflecks erreichen.

In einem zweckmäßigen Ausführungsbeispiel erzeugt der Prozessor beispielsweise ein Zeitraster von 50 µsec. Aus diesem Zeitraster wird ein Rechtecksignal erzeugt, das alle 512 Rasterpunkte des Zeitrasters den Pegel wechselt. Eine Periode des Zeitrasters hat also 1024 Rasterpunkte, was einer Frequenz von etwa 20 Hz entspricht. Die Periode von 1024 Rasterpunkten wird im Prozessor mit einem Zeitrasterzähler, der von 0 bis 1023 zählt, um dann wieder bei 0 zu beginnen, mitgezählt. Aus dem 20 Hz-Rechtecksignal wird in der Scanner-Steuerung ASV1 durch analoge Filterung das gewünschte sinusförmige Ansteuersignal AS2 für den Scanner gewonnen. Durch diese Synchronisation der Scanner-Bewegung mit dem erzeugten Zeitraster wird also erreicht, daß jedem Zählerstand des Zeitraster-Zählers, d.h. jedem Rasterpunkt reproduzierbar ein bestimmter Ort des Lichtflecks in der Sende-Koppelvorrichtung SK entspricht. Das Zeitraster ist in Figur 12 zur Veranschaulichung der Zuordnung zwischen den Rasterpunkten des Zeitrasterzählers und der sinusförmigen Scanner- bzw. Lichtfleckbewegung unterhalb der Zeitachse t eingezeichnet und mit RZ bezeichnet.

Während nachfolgender, eigentlicher Messungen wird der Lichtfleck bzw. Leuchtfleck periodisch mit sinusförmiger Zeitabhängigkeit über das zu messende Lichtwellenleiter-Bändchen gelenkt. Zu denjenigen Zeitpunkten, zu denen er einen Faserkern trifft, wird dort Licht eingekoppelt. Dieses Meßlicht wird auf der Empfängerseite wieder ausgekoppelt und erzeugt im zeitlichen Verlauf des Empfängerausgangssignals einen zugehörigen, spezifischen Empfangspegel. Ein solcher selektiver Empfangspegel entsteht jedesmal, wenn der Kern eines zu messenden Lichtwellenleiters vom Lichtfleck sendeseitig getroffen wird, also aufgrund der sinusförmigen Lichtfleck-Bewegung pro Lichtwellenleiter und Periode zweimal. Um im wesentlichen den linearen Teil der Sinus-Bewegung auszunutzen und alle zu messenden Lichtwellenleiter mit dem Lichtfleck sendeseitig sicher zu überstreichen, wird die Amplituae der Strahlauslenkung zweckmäßigerweise größer gewählt als die Breite des zu messenden Lichtwellenleiter-Bändchens. Dadurch ergeben sich empfangsseitig jeweils pro Periode zwei Gruppen von Empfangspegeln, und zwar eine für die ansteigende Flanke (1. Halbwelle) der Sinusfunktion (Strahl-Hinlauf HL in Figur 2) und eine für die abfallende Flanke (Strahl-Rücklauf RL in Figur 1). Figur 13 zeigt eine zeitliche Verteilung RP1 z.B. für vier zu messende Lichtwellenleiter der beiden Bändchen nach Figur 11 bei nichtlinearer Bewegung des Sende-Strahlungsfeldes. Die vier Pegel der ersten Gruppe sind dabei dem Strahl-Rücklauf RL (erste Halbwelle der Sinus-Funktion), die zweite Gruppe hingegen dem Strahl-Hinlauf HL (zweite Halbwelle der Sinus-Funktion) nach Figur 12 zugeordnet. Jedem Empfangspegel läßt sich eindeutigerweise einer der vier Lichtwellenleiter im zu messenden Bändchen zuordnen, wobei beim Rücklauf die Empfangspegel der zu messenden Lichtwellenleiter in umgekehrter zeitlicher Reihenfolge erscheinen. Dies ist in Figur 13 dadurch veranschaulicht, daß den beiden Gruppen von Empfangspegeln jeweils Fasernummern von 1 bis 4 zugeordnet sind. Während des Hinlaufs HL werden die Lichtwellenleiter mit den Nummern 1 bis 4 aufsteigend, währed des Rücklaufs RL die Lichtwellenleiter mit den Nummern 4 bis 1 absteigend gemessen. Zur Vereinfachung für weitere Überlegungen wird im folgenden nur der Hinlauf H1 betrachtet.

Um im zeitlichen Verlauf des Empfängerausgangssignals die einzelnen Faserkerne der Lichtwellenleiter zu erkennen sowie aus der Höhe und/oder der Fläche der Empfangspegel auf die relative, über die Spleißstelle MS1 von Figur 11 transmittierte Lichtleistung zu schließen, werden im vorliegenden exemplarischen Ausführungsbeispiel folgende zwei Meßvorgänge zweckmäßigerweise ausgeführt:

Erster Meßvorgang:

In mindestens einem ersten sendeseitigen Durchlauf des Sende-Strahlungsfeldes wird dieses vorzugsweise mit konstanter Sendeleistung betrieben. Empfangsseitig tastet das Digitalisierglied SUH die erzeugten Empfangssignale DS2 pro Rasterpunkt, d.h. im Beispiel alle 50 µsec, ab und speichert den so gewonnenen Abtastwert digitalisiert in dem der Recheneinheit CPU zugeordneten Meßwertspeicher MEM ab. Dabei liefert der Zeitrasterzähler des Prozessors vorzugsweise die Speicheradresse für den jeweiligen Abtastwert. Dieser Vorgang wird während des gesamten Hinlaufs HL, im Ausführungsbeispiel also für 512 Rasterpunkte, wiederholt, so daß 512 Abtastwerte im Speicher MEM für einen Hinlauf stehen. Diese 512 Abtastwerte repräsentieren den zeitlichen Verlauf des Empfängerausgangssignals. Wegen der zeitlich äquidistanten Abtastung entspricht die Position der Abtastwerte im Speicher (Speicheradresse) der Zeit. Wegen der Synchronisation der Scanner-Bewegung mit dem Zeitrasterzähler der Recheneinheit CPU, insbesondere dem Prozessor, läßt sich auch jeder Speicheradresse ein Ort des Lichtflecks im Koppelbereich der Sende-/Koppelvorrichtung SK zuordnen, obwohl es sich um eine nichtlineare sendeseitige Abtastbewegung handelt. Zweckmäßigerweise wird die Zahl der Abtastungen wesentlich höher als die Zahl der zu messenden Lichtwellenleiter gewählt, so daß auf jeden Empfangspegel zugehörige jeweils mehrere Abtastwerte entfallen. Figur 15 zeigt die zeitliche Verteilung RP1 der Einhüllenden EH3 und EH4 der Abtastwerte für die Empfangspegel der Lichtwellenleiter 3 und 4 aus Figur 13 in vergrößerter Darstellung über dem Zeitraster RZ. Die Zeitlagen dieser beiden Einhüllenden EH3 und EH4 werden mittels der Auswerteeinrichtung AE1 ermittelt. Der Einhüllenden EH3 wird die Zeitlage zwischen ihrer ansteigenden und ihrer abfallenden Flanke, also zwischen den Zeitpunkten at3 und at3* zugeordnet. Die Einhüllende EH4 weist entsprechend dazu ihre Zeitlage zwischen den Zeitpunkten at4 und at4* auf. Für die weitere Signalverarbeitung werden diese Zeitpunkte, zu denen die Einhüllenden beginnen sowie enden, mittels der Recheneinheit CPU abgespeichert. Dies bedeutet bei digitaler Signalverarbeitung, daß für jeden zu messenden Lichtwellenleiter die Adressen der Abtastwerte im Speicher MEM, zu denen die jeweilige Einhüllende beginnt sowie endet, gespeichert wird. Diese Adressen entsprechen dabei dem zugehörigen Zählerstand des Zeitrasterzählers der Recheneinheit CPU. Auf diese Weise ist eine Zeitabfolge mit Zeiträumen festgelegt, zu denen gesendet wird, zum Beispiel zwischen at3 und at3* und zu denen eine Sendepause eingelegt wird, zum Beispiel zwischen at3* und at4. Gegebenenfalls wird dieser erste Meßvorgang noch mindestens einmal wiederholt, um alle Empfangs-Strahlungsfelder der zu messenden Lichtwellenleiter bezüglich ihrer Zeitlagen möglichst exakt zu erfassen. Denn in der Praxis besteht die Schwierigkeit, daß das lichtempfindliche Element nur jeweils durch einen der zu messenden Lichtwellenleiter optimal ausgesteuert werden kann, so daß sich nur für diesen ein optimales Signal-/Rauschverhältnis ergibt. Ein Umschalten auf individuelle Verstärkungsfaktoren für jeden einzelnen Lichtwellenleiter läßt sich nun dadurch umgehen, daß sendeseitig die Sendeleistung variiert wird, so daß sich für jedes zu messende Empfangs-Strahlungsfeld empfangsseitig ein ausreichendes Signal-/Rauschverhältnis einstellen läßt.

Zweiter Meßvorgang:

Für den zweiten, eigentlichen Meßvorgang wird sendeseitig mindestens ein Durchlauf des Sende-/Strahlungsfeldes durchgeführt. Für eine quasi-kontinuierliche Meßwertaufnahme ist ein periodischer Durchlauf des Sende-Strahlungsfeldes zweckmäßig. Im zweiten Meßvorgang wird für jeden einzelnen Lichtwellenleiter die zwischen Sende- und Empfangsseite transmittierte Lichtleistung erfaßt. Aus der prozentualen Änderung im zeitlichen Verlauf der transmittierten Lichtleistung jedes einzelnen, zu messenden Lichtwellenleiters kann dann jeweils auf den zeitlichen Verlauf der Dämpfung im Lichtwellenleiter geschlossen werden. Es handelt sich somit um eine Relativmessung. Um den Einfluß von Störgrößen wie zum Beispiel Rauschen des optischen Empfängers OR1 so gering wie möglich zu halten, wird bei der Auswertung nicht die Höhe der Empfangspegel, d.h. deren Maxima erfaßt, sondern die Fläche unter deren Einhüllenden. Die Messung der Fläche unter den Einhüllenden wie zum Beispiel EH3 und EH4 erfolgt zum Beispiel zweckmäßig durch analoge Integration. In Figur 11 ist dazu der Integrator INT der Auswerteeinrichtung AE1 vorgeschaltet, wobei er durch die Recheneinheit CPU entsprechend den Zeitlagen der zuvor aufgenommenen Empfangs-Strahlungsfelder aktiviert bzw. deaktiviert wird. Die zeitlich exakte Steuerung des Integrators ist mittels des Schalters SW über die Steuerleitung SWL von der Recheneinheit CPU aus dadurch möglich, daß die zeitliche Lagen (Zeitlagen) der Einhüllenden der Empfangspegel aus dem ersten Meßvorgang bereits bekannt sind. Zur Steuerung des Integrators INT werden bei digitaler Signalauswertung jeweils die im ersten Meßvorgang gespeicherten Adressen für Anfang und Ende der Einhüllenden der Empfangspegel benutzt. Zunächst wird der Integrator INT über die Steuerleitung RS zurückgesetzt, wobei der Schalter SW in der Stellung P1 steht. Zum Zeitpunkt der ansteigenden Flanke der Empfangspegel-Einhüllenden des ersten Lichtwellenleiters wird der Integrator INT mittels des Schalters SW in die Betriebsart "Integrieren" geschaltet. Der Schalter SW steht dabei in der Stellung P2. Zum Zeitpunkt der abfallenden Flanke der Einhüllenden wird der Integrator INT gestoppt. Dazu wechselt der Schalter SW in die Stellung P1 zurück. Die Spannung am Integratorausgang ist jetzt proportional zur Fläche unter der gemessenen Einhüllenden. Dieser Wert wird der Recheneinheit CPU digitalisiert zur weiteren Auswertung übermittelt und dort festgehalten. Anschließend wird der Intgegrator INT zurückgesetzt, dann die Fläche unter der nächsten eintreffenden Einhüllenden integriert und ausgelesen, usw...

Um den Einfluß von "Jitter"-Effekten, d.h. Schwankungen der zeitlichen Lage der Empfangspegel bzw. deren Einhüllenden durch geringfügige Unregelmäßigkeiten in der Scanner-Bewegung, weitgehend auszuschließen, werden in der Praxis die Umschaltzeitpunkte für den Integrator INT nicht direkt jeweils zum Zeitpunkt der ansteigenden und der abfallenden Flanke festgesetzt, sondern vorzugsweise etwa in der Mitte, d.h. im Tal zwischen zwei Einhüllenden. Bei periodischer Messung erhält man in jeder Periode der Sinusfunktion für jede zu messende Faser einen Meßwert für die jeweilige Lichtleistung des zugehörigen Empfangs-Strahlungsfeldes. Bei vier Fasern und 20 Hz Widerholfrequenz erhält man somit 20 mal 4 Meßwerte pro Sekunde. Bei zusätzlicher Auswertung des Rücklaufs stehen sogar doppelt so viele Meßwerte zur Verfügung. Die aufgenommenen Empfangspegel stellen bei einem Spleißgerät Dämpfungsmeßwerte dar, die die Recheneinheit CPU zur Steuerung des Spleißvorgangs weiter auswertet.

Figur 16 zeigt den Zeitrahmen, mit dem der Integrator INT für die Empfangspegel bzw. deren Einhüllenden EH3 und EH4 aus Figur 15 arbeitet. Während der Zeitdauer TI3, die etwas größer als die Zeitdauer at3* - at3 der Einhüllenden EH3 nach Figur 15 gewählt ist, ist der Integrator INT auf die Betriebsart "Integrieren" gestellt. Während der nachfolgenden Zeitdauer TS3 wird der aufintegrierte Meßwert aus dem Integrator ausgelesen und an die Auswerteeinrichtung AE1 von Figur 11 weitergegeben. Nachfolgend wird der Integrator INT während der Zeitdauer TR3 zurückgesetzt, wobei der Zeitraum TR3 etwa in der Mitte zwischen den beiden Einhüllenden EH3 und EH4 von Figur 15 liegt. Der Integrator INT wird dann analog zu seinen drei Betriebszuständen für die Zeitdauern TI3, TS4 und TR4 für die zeitlich später folgende Einhüllende EH4 nach Figur 15 während der Zeitdauern TI4, TS4 und TR4 geschaltet.

In der Praxis führen insbesondere unterschiedliche Farbaufträge auf den zu messenden Lichtwellenleitern eines Bändchens beim Empfang zu unterschiedlich hohen Empfangspegeln, d.h. zu Pegelschwankungen. Da praktisch realisierbare Empfängerschaltungen meist nur für einen engen Arbeitsbereich hinsichtlich der verwertbaren Lichtleistung ausgelegt sind, führen zu hohe Empfangspegel zu einer Übersteuerung des optischen Empfängers sowie zu niedrige Empfangspegel zu Ungenauigkeiten (Untersteuern) z.B. aufgrund des Empfängerrauschens oder durch die schlechte Auflösung des AD-Wandlers im Digitalisierglied. Mit dem im ersten Meßvorgang gewonnenen Informationen über Lage und Höhe der Emfangspegel bzw. Einhüllenden kann die Sendeleistung individuell für jeden zu messenden Lichtwellenleiter vorteilhaft so eingestellt werden, daß die Empfangspegel im zweiten Meßvorgang, d.h. für die eigentlichen Messungen etwa alle die gleiche Höhe haben. Dadurch kann die erreichbare Genauigkeit der Signalaufbereitung für jeden zu messenden Lichtwellenleiter optimiert werden, da der optische Empfänger für alle zu messenden Lichtwellenleiter jeweils optimal ausgesteuert werden kann. Die sendeseitige Steuerung der Sendeleistung wird dabei mittels der Steuerleitung SL3 als eine Art "Rückkoppelschleife" von der Empfangsseite her durchgeführt. Die Umschaltung der individuell stellbaren Sendeleistungen für jeden zu messenden Lichtwellenleiter wird zweckmäßigerweise zu den gleichen Zeitpunkten durchgeführt, in denen auch empfangsseitig der Integrator INT umgeschaltet wird. Die Sendeseite wird also bezüglich der Sendeleistung entsprechend den im ersten Meßvorgang gewonnenen Zeitrahmen zeitlich gesteuert. Zweckmäßig kann es sein, die Sendeleistungen nach dem ersten Meßvorgang nur provisorisch festzulegen, dann mit diesen Leistungen einen "Probelauf" für den zweiten Meßvorgang durchzuführen und entsprechend der Meßwerte aus diesem Probelauf, die Sendeleistungen noch einmal für nachfolgende Messungen zu korrigieren und dadurch nochmals die Meßgenauigkeit zu verbessern.

Dadurch, daß das Sendeelement im optischen Sender der Sende- Voppelvorrichtung SK nach Figur 11 jeweils nur dann eingeschaltet wird, wenn empfangsseitig entsprechend dem Zeitrahmen ein Empfangspegel erwartet wird, wird eine unnötige Belastung des Sendeelements vorteilhaft vermieden. Auf diese Weise wird der Stromverbrauch für das Sendeelement gesenkt sowie seine Lebensdauer erhöht. Besonders zweckmäßig kann das Sendelement im Pulsbetrieb arbeiten, so daß höhere Lichtleistungen in die zu messenden Lichtwellenleiter eingekoppelt werden können.

Die zu den Figuren 11 mit 16 getroffenen Aussagen sind zusätzlich oder unabhängig von den Figuren 1 mit 10 gültig.

In der Praxis kann es gegebenenfalls erschwert sein, Licht eines Sende-Strahlungsfeldes nach dem Biegekopplerprinzip in den Kern mindestnes eines zu messenden Lichtwellenleiters entlang eines gekrümmt verlaufenden Einkoppel-Abschnitts einzukoppeln. Einer Weiterbildung der Erfindung liegt deshalb die Aufgabe zugrunde, einen Weg aufzuzeigen, wie die Einkopplung entlang eines gekrümmt verlaufenden Einkoppel-Abschnitts des zu messenden Lichtwellenleiters besser den praktischen Gegebenheiten angepaßt werden kann. Diese Aufgabe wird dadurch gelöst, daß die Fokussierungsfläche des Sende-Strahlungsfeldes gegenüber einer senkrecht zur Strahlungsrichtung gedachten Ebene in Richtung auf die Einkoppelfläche des Einkoppel-Abschnitts geneigt wird.

Indem die Fokussierungsfläche des Sende-Strahlungsfeldes gegenüber einer senkrecht zur Strahlungsrichtung gedachten Ebene in Richtung auf die Einkoppelflache des Einkoppel-Abschnitts schräg gestellt wird, wird das Licht des Sende-Strahlungsfeldes nahezu entlang des gesamten Einkoppel-Abschnitts des zu messenden Lichtwellenleiters im wesentlichen scharf abgebildet. Ein Überstrahlen des Lichtwellenleiter-Kerns ist dort weitgehend vermieden, so daß der Einkoppel-Wirkungsgrad wesentlich verbessert ist.

Eine Weiterbildung der Erfindung betrifft weiterhin eine Einrichtung zum Einkoppeln von Licht eines Sende-Strahlungsfledes in den Einkoppel-Abschnitt mindestens eines zu messenden Lichtwellenleiters nach dem Biegekopplerprinzip, welche dadurch gekennzeichnet ist, daß mindestens ein Abbildungsmittel vorgesehen ist, das die Fokussierungsfläche des Sende-Strahlungsfeldes gegenüber einer senkrecht zur Strahlungsrichtung gedachten Ebene in Richtung auf die Einkoppelflache des Einkoppel-Abschnitts neigt.

Eine Weiterbildung der Erfindung betrifft zudem auch ein Verfahren zum Einkoppeln von Licht eines Sende-Strahlungfeldes in den Einkoppel-Abschnitt mindestens eines zu messenden Lichtwellenleiters nach dem Biegekopplerprinzip, welches dadurch gekennzeichnet ist, daß der Lichtfleck des Sende-Strahlungsfeldes entlang der Längsachse des zu messenden Lichtwellenleiters hin- und herbewegt wird.

In diesem Zusammenhang betrifft eine Weiterbildung der Erfindung auch eine Einrichtung, welche dadurch gekennzeichnet ist, daß eine Ablenkeinrichtung vorgesehen ist, die den Lichtfleck des Sende-Strahlungsfeldes entlang der Längsachse des zu messenden Lichtwellenleiters hin- und herbewegt.

Unverändert übernommene Elemente aus den Figuren 1 mit 16 sind im folgenden jeweils mit den gleichen Bezugzeichen versehen.

Um sendeseitig Licht in einen oder mehrere zu messende Lichtwellenleiter LW1 bis LWn einkoppeln zu können, werden diese gemäß Figur 2 mittels der Koppelvorrichtung KV1 entlang eines beliebig vorgebbaren Streckenabschnitts ihrer Längserstreckung nach dem Biegekopplerprinzip angekoppelt. Bei mehreren zu messenden Lichtwellenleitern LW1 bis LWn wie in Figur 2 können diese zweckmäßigerweise zu einer etwa rechteckförmigen Bandleitung BL1 mechanisch zusammengefaßt sein. Deren äußere Umhüllung ist im rechten Teil von Figur 2 strichpunktiert angedeutet und im übrigen Figurenteil zu Gunsten der Übersichtlichkeit weggelassen worden. Der Einfachheit halber sind auch die Lichtwellenleiter LW1 bis LWn in Figur 2 nur im Bereich der Koppelvorrichtung KV1 gezeichnet und sonst weggelassen werden.

Gegebenenfalls kann die Tastung mit dem Lichtfleck LF in Figur 2 auch so durchgeführt werden, daß er jeweils zumindest im Bereich des jeweiligen Einkoppelortes, d.h. bei Überstreichen des jeweiligen Lichtwellenleiters-Kerns, in y-Richtung etwa hin- und herbewegt wird, d.h. in der Art einer "Jitter" Bewegung gewobbelt wird. Vorzugsweise bei einer stufenweisen Abtastbewegung in y-Richtung kann dieser eine derartige zusätzliche, ihr gegenüber schnellere Rotationsbewegung während der Beleuchtung des jeweiligen Lichtwellenleiters überlagert sein. Zweckmäßigerweise wird der Lichtfleck zwischen 4 und 10 mal, bevorzugt 5 mal, hin- und herverfahren, während er auf den Kern des jeweiligen Lichtwellenleiters ausgerichtet ist.

Geht man bei der sendeseitigen Lichteinkopplung nach Figur 2 beispielsweise davon aus, daß das Strahlungsfeld SF in einem Brenn- bzw. Fokussierpunkt FP fokussiert, würden die Lichtstrahlen LS1 - LSk des Strahlungsfeldes SF bei Abwesenheit der Koppelvorrichtung KV1 in der Spitze eines Strahlenkegels zusammenlaufen und dann nach diesem Brennpunkt wieder sich strahlenförmig verbreiternd auseinander laufen.

In Figur 2 wird das Strahlungsfeld SF mit seinem Fokussierpunkt FP jeweils möglichst auf den Krümmungsabschnitt des jeweiligen Lichtwellenleiters wie z. B. LW1 projiziert. Aufgrund der Krümmung des Lichtwellenleiters LW1 wird dieser jedoch nicht punktuell scharf beleuchtet, sondern es treffen Lichtstrahlen des Strahlenkegels auch an Orten vor und nach dem Fokussierpunkt FP auf den Lichtwellenleiter LW1 entlang dessen Längsachse. An diesen Stellen ist das Strahlungsfeld SF insbesondere gegenüber dem Kerndurchmesser des Lichtwellenleiters LW1 verbreitert, d.h. nicht fokussiert, so daß es dort unscharf abgebildet wird, und Lichtanteile durch "Überstrahlen" des Lichtwellenleiter-Kerns verlorengehen. Verlaufen z.B. die Lichtstrahlen LS1 - LSk in Figur 2 in der x,z-Einkoppelebene, so legt z.B. der Lichtstrahl LSk aufgrund der Lichtwellenleiterkrümmung einen kürzeren Weg von der Einkoppeloptik EO bis zu seinem Auftreffpunkt beim Lichtwellenleiter LW1 als z.B. der Lichtstrahl LS1 zurück. Dadurch wird der Lichtwellenleiter LW1 auch vor und nach dem eigentlichen Fokussierpunkt FP entlang seiner Krümmung vom Strahlungskegel getroffen und aufgrund der dort vorliegenden Unschärfe mit einer weitaus geringeren Licht- bzw. Leuchtdichte beleuchtet.

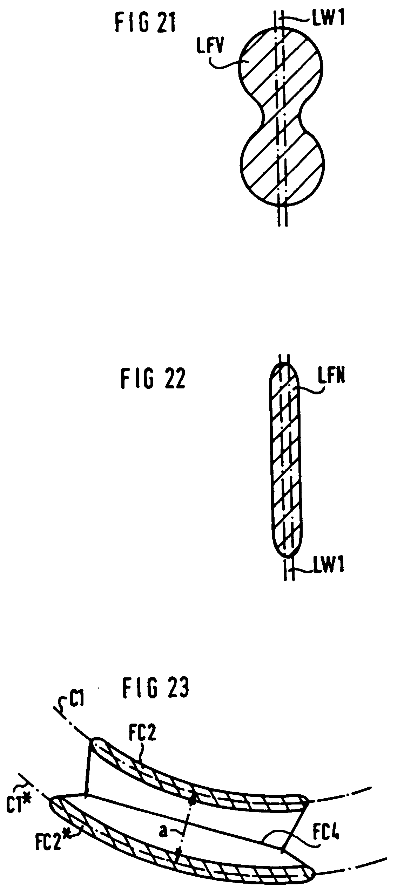

Auf diese Weise wird ein sich entlang der Längsachse des Lichtwellenleiters LW1 erstreckender Einkoppel-Abschnitt z.B. mit einem Lichtfleck LFV beleuchtet, wie er in Figur 21 schematisch schraffiert dargestellt ist. Der Lichtfleck LFV weist dort entlang der Längsachse des strichpunktiert angedeuteten Lichtwellenleiters LW1 etwa die Form einer "Acht" auf. Während er etwa in seiner Mitte weitgehend fokussiert auf den Lichtwellenleiter LW1 abgebildet ist, verbreitert er sich vor und nach dieser Schärfezone entlang der Krümmung des Lichtwellenleiters LW1 betrachtet keulenartig, d.h. in y-Richtung, so daß dort der Lichtwellenleiter LW1 mit weitaus geringerer Lichtdichte als in der Mitte des Lichtflecks LFV bestrahlt wird. Im Bereich seiner beiden Verbreitungszonen ist der Lichtfleck LFV also unscharf auf den Lichtwellenleiter LW1 abgebildet. Es werden dort weniger Lichtstrahlen auf den Kern des Lichtwellenleiters projiziert und in diesen eingekoppelt. Der größte Teil der Lichtstrahlen trifft nicht auf den Lichtwellenleiter, sondern daneben. Insgesamt betrachtet ergibt sich entlang der Längsachse des Lichtwellenleiters LW1 also ein ungleichmäßig verbreiteter Lichtfleck LFV.

Dieses Unschärfeproblem kann insbesondere auch bei einem Lichtfleck gemäß den Figuren 9 und 10 auftreten, der eine größere räumliche Ausdehnung in z-Richtung als in Abtastrichtung y aufweist.

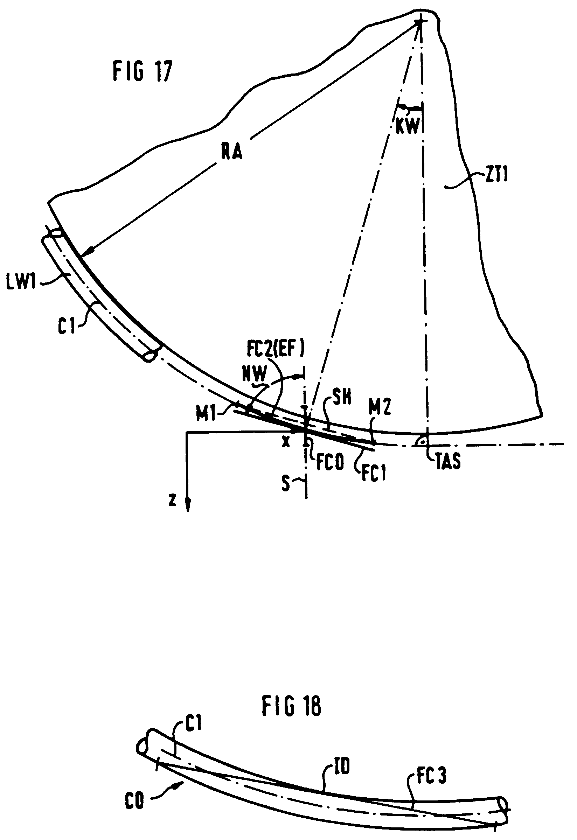

Um in den jeweils zu messenden Lichtwellenleiter wie z.B. LW1 von Figur 2 möglichst viel Lichtanteile des zur Verfügung stehenden Sende-Strahlungsfeldes einkoppeln zu können, d.h. den Koppelwirkungsgrad verbessern zu können, wird für das Sende-Strahlungsfeld SF von Figur 2 eine Fokussierungsfläche erzeugt, die gegenüber einer senkrecht zur Strahlungsrichtung x gedachten Ebene y,z in Richtung auf die Einkoppelfläche des Einkoppelabschnitts geneigt ist. Figur 17 zeigt beispielhaft eine derartig geneigte Fokussierungsfläche, die mit dem Bezugszeichen FC1 versehen ist.

In Figur 17 ist ein Ausschnitt der x,z-Einkoppelebene gezeichnet, in der der Krümmungsabschnitt des Lichtwellenleiters LW1 verläuft. Die x,z-Ebene entspricht somit einer Schnittebene quer zur Längserstreckung des zylinderförmigen Biegedorns ZT1 (vergleiche Figur 2) beim Lichtwellenleiter LW1, so daß die Fokussierungsfläche FC1 in einer zur Abtatsrichtung y des Sende-Strahlungsfeldes SF senkrechten Ebene betrachtet wird. Der Lichtwellenleiter LW1 liegt in Figur 17 am Außenumfang des Zylinders ZT1 an. Im linken Teil von Figur 17 ist er mit seiner Beschichtungshülle (primäres und sekundäres Coating) gezeichnet, die im übrigen Figurentei. der Übersichtlichkeit halber weggelassen worden ist. Die Lage seiner Kernmitte ist strichpunktiert angedeutet und mit dem Bezugszeichen C1 versehen. Das Strahlungsfeld SF wird nun derart abgebildet, daß seine Fokussierungsfläche FC1 in der x,z-Einkoppelebene als geradlinige Bild- bzw. Fokussierungslinie erscheint. Diese Fokussierungslinie ist gegenüber einer gedachten, strichpunktierten angedeuteten, senkrechten Hilfslinie S, die parallel zur z-Achse verläuft, in Richtung auf die Kernlage C1 des Lichtwellenleiters LW1 schräg gestellt. Die Fokussierungsfläche FC1 erstreckt sich in der x,z-Ebene mit ihrer Bildlinie (Fokussierungslinie) etwa parallel zur Sehne SH eines vom Licht getroffenen Einkoppel-Abschnitts, dessen Anfang und Ende durch zwei Markierungen M1 und M2 gekennzeichnet ist. Vorzugsweise etwa in der Mitte dieses Einkoppel-Abschnitts ist die Fokussierungslinie (der Fokussierungsfläche FC1) möglichst tangential an die Kernlage C1 angelegt.

Zweckmäßigerweise entspricht die Längserstreckung der Fokussierungsfläche FC1 etwa der Sehnenlänge von SH. Zweckmäßigerweise weist die Fokussierungslinie eine Längserstreckung zwischen 600 und 2000 µm, insbesondere zwischen 800 und 1600 µm, bevorzugt etwa von 800 µm auf. Derjenige Punkt, bei dem die Fokussierungslinie eine Tangente an die Kernlage C1 bildet, ist vorzugsweise einem Krümmungswinkel KW zugeordnet. Der Krümmungswinkel KW ergibt sich zwischen dem Tangentenpunkt und derjenigen Stelle TAS des Lichtwellenleiters LW1, an der dieser vom Zylinderförmigen Biegedorn ZT1 abhebt und diesen geradlinig verläßt. Der Lichtwellenleiter LW1 wird bevorzugt im Endbereich seiner Krümmung am Übergang zu seinem geradlinigen Streckenabschnitt beleuchtet, so daß Abstrahlverluste bzw. eine unerwünschte Lichtauskopplung aufgrund des weiteren gekrümmten Verlaufs des Lichtwellenleiters weitgehend vermieden sind. Bei einem Krümmungsradius RA von etwa 3 mm ist der Krümmungswinkel KW zweckmäßigerweise zwischen 6 und 12 °, vorzugsweise um etwa 8°, gewählt.

Die schräg gestellte Fokussierungsfläche FC1 von Figur 17 weist vorzugsweise eine größere räumliche Ausdehnung entlang der Längsachse des gekrümmten Lichtwellenleiter-Abschnitts als in Abtastrichtung y des Strahlungsfelds SF auf. Sie bildet im Projektionsraum insbesondere eine geneigte Fokussierungs-Ebene mit etwa linien-bzw. streifenförmiger oder schlank ovaler Form bzw. Gestalt.

Insbesondere ist bei einer feststehenden Ausrichtung des Strahlungsfelds SF auf den Kern des jeweils zu messenden Lichtwellenleiters wie z.B. LW1 die Fokussierungs-Feldbreite der geneigten Fokussierungsfläche FC1 in Abtastrichtung y kleiner als der Kernabstand zweier benachbarter Lichtwellenleiter wie z.B. LW1, LW2 gewählt, was einer allgemein gültigen Obergrenze für die Feldbreite entspricht. Die Feldbreite wird bevorzugt höchstens gleich dem Lichtwellenleiter-Außendurchmesser (insbesondere z.B. unter etwa 250 µm) und mindestens gleich dem Kerndurchmesser (z. B. zwischen 10 und 50 µm) gewählt, um den jeweiligen Kern möglichst zuverlässig treffen und in diesen möglichst viel Licht einkoppeln zu können.

Bei einem stetig in Abtastrichtung y wandernden Strahlungsfeld SF wird der Kern des jeweiligen Lichtwellenleiters wie z.B. LW1 vorzugsweise mit einem möglichst in y-Richtung dünnen, linienförmigen Lichtfleck konzentriert beleuchtet. Die Feldbreite der Fokussierungsfläche FC1 in y-Richtung wird dabei vorteilhaft gleich dem oder kleiner als der Kerndurchmesser des jeweiligen Lichtwellenleiters wie z.B. LW1 gewählt. Bevorzugt weist die Fokussierungsfläche FC1 bei Monomode-Lichtwellenleitern eine Strahlbreite in y-Richtung zwischen 10 und 80 µm, bevorzugt zwischen 10 und 20 µm auf.

Da in Figur 17 die Fokussierungsfläche FC1 möglichst tangential etwa in der Mitte des gekrümmt verlaufenden Einkoppel-Abschnitts dem Kernverlauf C1 angenähert ist, gelangt vorteilhaft der größte Teil der Lichtstrahlen des Strahlungsfelds SF auf die Einkoppelfläche EF des Einkoppel-Abschnitts zwischen den beiden Markierungen M1 und M2. Dabei ist die zur Verfügung stehende Einkoppelfläche EF des Einkoppel-Abschnitts insbesondere durch seine Längserstreckung zwischen den beiden Markierungen M1 und M2 sowie durch den Kerndurchmesser bestimmt. Es ergibt sich somit als Einkoppelfläche EF eine streifenförmige Krümmungsfläche als Ausschnitt einer gedachten Kugeloberfläche. Dadurch, daß in der y,z-Ebene von Figur 17 die Fokussierungslinie der Fokussierungsfläche FC1 vorzugsweise im Nahbereich der Kernlage C1 eingestellt ist, wird das Licht des Strahlungsfelds SF weit mehr oder nahezu vollständig auf die Einkoppelfläche EF des Einkoppel-Abschnitts konzentriert abgebildet, d.h. bündelprojiziert. Es ergibt sich somit ein optimierter Einkoppel-Wirkungsgrad und damit eine hohe Lichtausbeute der durch das Sende-Element (TE von Figur 2) bereit gestellten Lichtmenge. Durch die schräg gestellte Fokussierungsfläche FC1 wird etwa der gesamte Einkoppel-Abschnitt mit einem im wesentlichen scharfen Lichtfleck entlang seiner Krümmung zwischen den beiden Markierungen M1 und M2 beleuchtet, so daß Lichtleistungsverluste durch "Überstrahlen" des Lichtwellenleiter-Kerns weitgehend vermieden sind. Es werden also gegenüber den Einkoppelverhältnissen von Figur 21 weit mehr Lichtstrahlen in den Kern des Lichtwellenleiters LW1 eingekoppelt.

Figur 22 zeigt entlang der Längsachse des gekrümmt geführten, strichpunktiert angedeuteten Lichtwellenleiters LW1 betrachtet einen Lichtfleck LFn, wie er sich im wesentlichen bei einer erfindungsgemäßen, geneigt eingestellten Fokussierungsfläche wie z.B. FC1 gemäß Figur 17 ergibt. Der Lichtfleck FLn weist in Längsrichtung des Lichtwellenleiters LW1 betrachtet eine etwa schlank ovale bzw. streifenförmige Form auf. Seine Beleuchtungsfeldbreite (in y-Richtung) ist entlang der Krümmung des Lichtwellenleiters LW1 bevorzugt etwa konstant. Dadurch wird die Einkoppelfläche des Einkoppel-Abschnitts in Längsrichtung mit etwa gleicher Beleuchtungsfeldstärke, d.h. mit etwa konstanter Leucht- bzw. Leuchtdichte, ausgeleuchtet. Im Unterschied zum ungleichförmigen, unscharfen Lichtfleck LFV von Figur 21 ist beim erfindungsgemäßen Lichtfleck LFN von Figur 22 das Licht des Strahlungsfelds SF entlang der Krümmung des Einkoppel-Abschnitts homogen bzw. gleichmäßig verteilt, so daß sich ein verbesserter Einkoppelfaktor ergibt. Da die Lichtfleckform an die Form des Einkoppel-Abschnitts weitgehend angepaßt ist, trifft weit weniger Licht an den Lichtwellenleiter LW1. Der Lichtwellenleiter LW1 wird also mit einem auf einen vorgebbaren Einkoppel-Abschnitt im wesentlichen scharf eingestellten Lichtfleck LFn beleuchtet. In Figur 2 ist diese gewünschte schlank ovale Form für den Lichtfleck LF1 strichpunktiert angedeutet, der den gekrümmt verlaufenden Einkoppel-Abschnitt TC1 mit hoher Tiefenschärfe beleuchtet.

Eine weitere Verbesserung der sendeseitigen Lichteinkopplung, insbesondere bezüglich des Einkoppelwirkungsgrades, kann dadurch erreicht erreicht, daß die Fokussierungsfläche hinsichtlich ihrer Form im wesentlichen der gekrümmt verlaufenden Einkoppelfläche EF des Einkoppel-Abschnitts von Figur 17 angepaßt wird. Die Fokussierungsfläche wird vorzugsweise als streifenförmige Krümmungsfläche ausgebildet, die in ihrer Dimensionierung etwa der Einkoppelfläche EF entspricht. In Figur 17 ist diese der Krümmung der Kernlage C1 nachfolgende Fokussierungsfläche mit dem Bezugszeichen FC2 versehen und in der x,z-Ebene durch eine ausgezogene Linie zwischen den beiden Markierungen M1 und M2 angedeutet. Die Fokussierungsfläche FC2 bildet dann in der x,z-Ebene von Figur 17 betrachtet eine gekrümmt verlaufende Bildlinie, wobei deren Krümmung der Bildlinie der Einkoppelfläche EF nachfolgt. Sie ist besonders bevorzugt möglichst exakt mit der Einkoppelfläche EF des Einkoppelabschnitts zur Deckung gebracht, so daß sie möglichst mit der Einkoppelfläche EF zusammenfällt und ihr Abstand zur Kernmitte C1 minimal wird. Gegenüber der tangentialen Annäherung der Fokussierungsfläche FC1 an die Einkoppelfläche EF ist somit eine weiter verbesserte Lichteinkopplung erreicht, da der Lichtfleck entlang dem gekrümmten Verlauf der Kernlage C1 besonders scharf abgebildet wird.

Figur 18 zeigt eine Fokussierungsfläche FC3 in der x,z-Ebene betrachtet, die möglichst im Kern CO des Lichtwellenleiters LW1 verläuft. Im Unterschied zu Figur 17, wo die Bildlinie der Fokussierungsfläche FC1 tangential an die gekrümmt verlaufende Kernmitte C1 angelegt ist, bildet hier die Bildlinie der Fokussierungsfläche FC3 eine Tangente an den gekrümmt verlaufenden Innendurchmesser ID des Kerns CO. Die beiden Schnittpunkte dieser Bildlinie mit dem Außendurchmesser des Kerns CO definieren vorzugsweise die Grenzen des beleuchteten Einkoppel-Abschnitts. Auf diese Weise werden die Lichtstrahlen des Strahlungsfelds SF direkt in den Kern CO projiziert, so daß sich vorteilhaft eine fokussierte Lichteinkopplung mit weiter optimierten Einkoppel-Wirkungsgrad entlang der Krümmung des Einkoppel-Abschnitts ergibt.

In Figur 23 ist zusätzlich zur ersten, inneren Kernlage C1 von Figur 17 eine zweite, am Außenumfang des zylinderförmigen Biegedorns ZT1 von Figur 2 radial weiter außen liegende Kernlage C1* strichpunktiert in der x,z-Ebene eingezeichnet. Der Kernlage C1 ist also ein kleinerer Krümmungsradius als der Kernlage C1* zugeordnet, so daß die beiden Kernlagen C1 und C1* einen Abstand a voneinander aufweisen. Die beiden Kernlagen C1 und C2 können dabei eine innere und eine äußere Grenze für den Bereich möglicher Kernverlaufe aufgrund von Lagetoleranzen zu messender Lichtwellenleiter am Außenumfang des Biegezylinders ZT1 (vgl. Figur 2) darstellen. Das Licht des Strahlungsfeldes SF wird auf eine Fokussierungslinie einer Fokussierungsfläche FC4 konzentriert, die etwa in der Mitte zwischen den beiden Kernlagen C1 und C1* verläuft. Die Fokussierungsfläche FC4 ergibt sich vorzugsweise aus der Fokussierungsfläche FC2 von Figur 17 dadurch, daß deren Fokuslinie um etwa a/2 radial nach außen auf die Kernlage C1* zu parallel verschoben wird. Dadurch wird eine weitgehend gleichmäßige Fokussierung des Strahlungsfelds FS auf beide möglichen Kernlagen C1 und C1* erreicht. Es ergibt sich somit vorzugsweise eine symmetrische Strahlungsfeldverteilung bezüglich der Fokuslinie der Fokussierungsfläche FC4.

Diese Feldverteilung ist in Figur 23 zusätzlich schematisch in perspektivischer Darstellung bei Blickrichtung senkrecht zur schräg gestellten Fokussierungsfläche FC4 angedeutet. Die Lichtstrahlen des Sende-Strahlungsfelds SF verlaufen V-förmig auf die Fokuslinie der Fokussierungsfläche FC4 zu. Dabei werden sie im Bereich der Kernlage C1 in Form der Fokussierungsfläche FC2 von Figur 17 konzentriert abgebildet, die in Figur 23 geschnitten dargestellt ist. Entsprechend dazu wird die Einkoppelfläche der Kernlage C1* einer Fokussierungsfläche FC2* zugeordnet, die analog zur Fokussierungsfläche FC2 als streifenförmige, der Krümmung der Kernlage C1* folgende Krümmungsfläche ausgebildet ist. Dabei verläuft die Fokuslinie von FC4 bezüglich der Ausbreitungsrichtung x zweckmäßiger jeweils "hinter" den Kernlagen C1 und C1*.

Auf diese Weise ist weitgehend sichergestellt, daß für jede Kernlage wie z.B. C1, C1* Licht mit etwa der gleichen Leuchtstärke fokussiert in den jeweiligen Lichtwellenleiter-Kern eingekoppelt werden kann und trotzdem mindestens zwei möglichen, verschiedenen Kernlage kann der jeweilige Einkoppel-Abschnitt jeweils von einem scharf eingestellten Lichtfleck, vorzugsweise entsprechend LFn von Figur 22, beleuchtet werden.

Zur Erzeugung der erfindungsgemäß schräg gestellten Fokussierungsfläche wie z.B. FC1 mit FC4 gemäß den Figuren 2, 3 sowie Figur 23 ist in der Sende-Koppeleinrichtung SK von Figur 2 mindestens ein Abbildungsmittel, insbesondere ein Glaskeil GKE, vorgesehen. Dieser Glaskeil GKE ist in Figur 2 vorzugsweise zwischen der Einkoppeloptik EO und der Koppelvorrichtung KV1 positioniert, wo er strichpunktiert angedeutet ist. Der Glaskeil GKE ist quer zu den Lichtstrahlen LS1 bis LSk des Sende-Strahlungsfelds SF ausgerichtet, wobei sich sein verjüngendes Ende in die negative z-Richtung zeigt. Dadurch durchlaufen die Lichtstrahlen LS1 bis LSK des Strahlungsfelds SF im Glaskeil GKE unterschiedliche optische Wege. In der x,z-Ebene von Figur 2 betrachtet, werden diejenigen Lichtstrahlen wie z.B. LSk, die einen kürzeren Weg von der Einkoppeloptik EO zum Einkoppel-Abschnitt TC1 zurücklegen, im Glaskeil GKE entlang eines optisch kürzeren Wegs wie z.B. KW geführt. Diejenigen Lichtstrahlen hingegen wie z.B. LS1, die einen längeren Weg von der Einkoppeloptik EO bis zum Einkoppel-Abschnitt TC1 zurücklegen, werden im Glaskeil GKE auch entlang eines längeren optischen Wegs wie z.B. LW geführt. Durch den Glaskeitl GKE läßt sich somit überhaupt erst die Schräglage einer erfindungsgemäßen Fokussierungsfläche wie z. B. FC1 von Figur 17 auf optischem Wege hervorrufen und ganz gezielt einstellen. Es ergibt sich dann entlang der Krümmung des jeweiligen Einkoppel-Abschnitts ein scharf eingestellter, ovaler Lichtfleck, wie er bereits in Figur 2 strichpunktiert angedeutet ist.

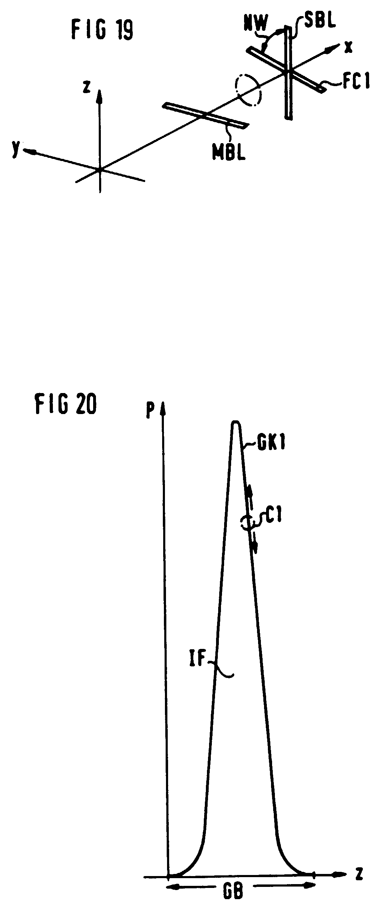

Gleichzeitig können mit Hilfe des Glaskeils GKE gegebenenfalls auch zwei sogenannte astigmatische Bildflächen erzeugt werden, die vorteilhaft als Fokussierflächen zur Lichteinkopplung herangezogen werden können. Figur 19 zeigt in perspektivischer Darstellung eine durch eine etwaigen Astigmatismus des Glaskeils GKE hervorgerufene meridionale Fokussierfläche MBL, die sich etwa parallel zur Abtastrichtung y erstreckt sowie eine sich in z-Richtung ausdehnende saggitale Fokussierfläche SBL. Beide astigmatischen Fokussierungsflächen MBL und SBL stehen somit aufeinander senkrecht. Die Fokussierungsfläche SBL ist in der y,z-Ebene sowie die Fokussierungsfläche MBL in der z,y-Ebene linien- bzw. streifenförmig oder schlank oval ausgebildet. Das Licht des Sende-Strahlungsfelds SF konzentriert sich somit entlang seines Ausbreitungswegs in x-Richtung in Form der meridionalen Bildlinie MBL und geht ausgehend von dieser schließlich kontinuierlich in die Form der saggitalen Bildlinie SBL über. Etwa in der Mitte zwischen den beiden Bildlinien MBL und SBL nimmt dabei das Sende-Strahlungsfeld SF von Figur 2 eine örtliche Feldverteilung an, die in der y,z-Ebene etwa kreisflächig ausgebildet ist, was in Figur 19 strichpunktiert angedeutet ist. Da nun den Lichtstrahlen LS1 bis LSk zum Beispiel in der x,z-Ebene von Figur 2 unterschiedliche optische Wege im Glaskeil GKE zugeordnet sind, wird die saggitale Bildlinie SBL in der x,z-Ebene in Richtung auf die x-Achse zu um den Winkel NW geneigt, d.h. die saggitale Bildlinie SBL wird um die y-Achse um den Winkel NW gedreht, so daß sich besonders einfach die gewünschte Fokussierungsfläche FC1 von Figur 17 unter gleichzeitiger Ausnutzung eines etwaigen Astigmatismuses des Glaskeils GKE praktisch erzeugen läßt.

Mit Hilfe des Glaskeils GKE kann gegebenenfalls z. B. auch die unabhängig davon erzeugte Fokuslinie einer Fokussierungsfläche FC0, die entsprechend den Figuren 9 und 10 vorzugsweise eine größere räumliche Ausdehnung in z-Richtung als in Abtastrichtung y aufweist, in der x,z-Ebene um den Neigungswinkel NW in Richtung auf die Einkoppelfläche des Einkoppel-Abschnitts zu geneigt bzw. schräg gestellt werden (vgl. Figur 17). Es ergibt sich so z.B. die schräg gestellte Fokussierungsfläche FC1 von Figur 17. Die Fokussierungsfläche FC1 weist dann vorteilhaft eine Steigungshöhe in z-Richtung auf, die etwa der Längserstreckung der Fokuslinie der Fokussierungsfläche FC0 entlang der z-Achse entspricht. Die Längsausdehnung der Fokuslinie der Fokussierungsfläche FC0 und damit die Steigungshöhe der Fokussierungsfläche FC1 ist dabei zweckmäßigerweise gleich oder größer der maximal möglichen Kernlagetoleranz der jeweils zu messenden Lichtwellenleiter gewählt, um Lagetoleranzen der Lichtwellenleiter-Kerne ausgleichen zu können. Bevorzugt ist die Steigungshöhe von FC1 etwa der zweifachen Kernlagetoleranz gewählt.

Beispielsweise sind folgende Dimensionierungen zweckmäßig, um Licht möglichst fokussiert in den Kern des Lichtwellenleiters mit z.B. 230 µm-Außendurchmesser und zugleich den Kern eines Lichtwellenleiters z.B. 400 µm-Außendurchmesser einkoppeln zu können (vgl. dazu die Bezugsgrößen in Figur 17):

Krümmungswinkel KW: 6°bis 12°, vorzugsweise etwa 8°
Krümmungsradius RA für die Kernachse der 230 µm-Faser: ca. 2,43 mm
Krümmungsradius RA für die Kernachse der 400 µm-Faser: ca. 2,885 mm
Steigungshöhe der Fokussierungsfläche FC1: 170 bis 200 µm Neigungswinkel NW: ca. 83°
Längserstreckung der Fokussierungsfläche FC1: ca. 1400 µm

Durch die erfindungsgemäße, geneigte Fokussierungsfläche ist es vorteilhaft ermöglicht, das Licht des Sende-Strahlungsfelds entlang der Krümmung des Lichtwellenleiter-Kerns auf die Einkoppel-Fläche eines definierten Einkoppel-Abschnitts zu fokussieren bzw. zu bündeln. Die Einkoppelfläche des Einkoppelabschnitts ist somit entlang dessen Längsachse betrachtet mit einem scharf eingestellten Lichtfleck weitgehend homogener Licht feldstärke, d.h. etwa konstanter Lichtdichte, gleichmäßig beleuchtet. Dadurch können die Abstrahlverluste aufgrund nicht in den Kern eingekoppelter Lichtstrahlen minimiert, d.h. der Einkoppelfaktor optimiert werden. Weiterhin ist die sendeseitige Einkopplung durch die Schrägstellung der Fokussierungsfläche relativ unempfindlich gegenüber Schwankungen und Toleranzen, die sich zwischen der Zuordnung des Sende-Strahlungsfelds und dem jeweiligen Einkoppelort beim Lichtwellenleiter-Kern ergeben. Insbesondere wird die Lichteinkopplung weitgehend unabhängig von Lagetoleranzen der Lichtwellenleiter-Kerne, wie z.B. durch unterschiedliche Bändchendicken oder unterschiedlich große Lichtwellenleiterdurchmesser vorgegeben sein können. Dies spielt insbesondere bereits auch dann eine Rolle, wenn die Beschichtung des jeweils in den Biegekoppler eingelegten Lichtwellenleiters aufgrund eines auf ihn ausgeübten Haltedrucks zu fließen beginnt und sich dadurch die Lage seines Kerns ändert. Durch die Steigungshöhe der schräg gestellten Fokussierungsfläche ist jedoch sichergestellt, daß auch noch Kerne in verschiedenen z-"Höhenlagen" der x,z-Einkoppelebene mit einem scharf eingestellten Lichtfleck beleuchtet werden können. Durch die vergleichmäßigte Beleuchtung der Einkoppel-Fläche des Einkoppel-Abschnitts ist zudem eine wesentlich bessere Ausnutzung der durch das Sendeelement des optischen Senders bereit gestellten Lichtmenge ermöglicht. Messungen an Lichtwellenleitern können somit besonders exakt sowie reproduzierbar durchgeführt werden.

Die erfindungsgemäße, sendeseitige Lichteinkopplung läßt sich zwar besonders bevorzugt zusammen mit den Aussagen zu den Figuren 1 mit 10 verwerten. Sie kann jedoch auch völlig unabhängig hiervon eingesetzt werden.

Zusätzlich oder unabhängig hiervon kann schließlich auch eine Verbesserung der sendeseitigen Lichteinkopplung dadurch erreicht werden, daß in Figur 2 vorzugsweise ein möglichst punktförmig fokussierter (Fokussierpunkt FP) oder sonstig lokal auf den Kern des Lichtwellenleiters begrenzter Lichtfleck LF des Strahlungsfeld SF entlang der Längsachse des jeweils zu messenden Lichtwellenleiter wie z.B. LW1 hin- und herbewegt wird. Um den Lichtfleck LF des Strahlungsfelds SF entlang der gekrümmten Längsachse des zu messenden Lichtwellenleiters LW1 in Figur 2 hin- und herzuverfahren, ist in Figur 2 als Ablenkeinrichtung ein kippbarer bzw. drehbarer Spiegel ULS vorgesehen. Er ist um eine Drehachse DL drehbar, die strichpunktiert angedeutet ist und sich vorzugsweise in y-Richtung erstreckt. Dadurch erfahren die Lichtstrahlen LS1 bis LSk des Strahlungsfelds SF zusätzlich zu ihrer Abtastbewegung in y-Richtung durch den Ablenkspiegel BS auch eine Ablenkbewegung vorzugsweise in z-Richtung, d.h. das Strahlungsfeld SF wird entlang einer Verschiebelinie in z-Richtung senkrecht zur Ausbreitungsrichtung x des Strahlungsfelds SF sowie senkrecht zu dessen Abtastrichtung Y hin und herbewegt. Dabei erfolgt die Hin- und Herbewegung des Strahlungsfelds SF zweckmäßigerweise kontinuierlich sowie stetig, so daß es unterschiedliche z-"Höhenlagen" gleichmäßig durchfährt. Durch den Abtasthub des Strahlungsfelds in z-Richtung wandert dessen Lichtfleck LF entlang der Krümmung des Lichtwellenleiters LW1 hin und her. Mit Hilfe der Ablenkeinrichtung durchscannt der Lichtfleck LF einen vorgebbaren, gekrümmten Einkoppel-Abschnitt des zu messenden Lichtwellenleiters in der Art einer "Jitterbewegung", d.h. der Lichtfleck LF wird entlang der Krümmung des Einkoppel-Abschnitts gewobbelt. Durch die Hin- und Herbewegung (Oszillationsbewegung) des Strahlungsfelds SF in Figur 2 im wesentlichen in z-Richtung wird bei einem Durchlauf in der y,z-Ebene betrachtet insgesamt ein Lichtfleck mit einer größeren räumlichen Ausdehnung in z-Richtung als in Abtastrichtung y erzeugt. Die "Jitter"-Bewegung bewirkt eine Vergleichmäßigung bzw. "Verschmierung" des vorzugsweise punktförmig fokussierten Lichtflecks in z-Richtung, so daß sich insgesamt betrachtet ein etwa linien- bzw. streifenförmiges oder schlank ovales Beleuchtungsfeld in der y,z-Ebene mit Vorzugsrichtung in z-Richtung ergibt. Durch die Längsbewegung des Strahlungsfelds in z-Richtung wird die von seinem Lichtfleck jeweils beleuchtete Einkoppelfläche entlang deren Krümmung "künstlich" verlängert. Denn während eines Durchlaufs entsteht in der y,z-Ebene gesehen ein Beleuchtungsfeld mit Vorzugsrichtung in z-Richtung. Dadurch kann die Lichteinkopplung vorteilhaft weitgehend unabhängig von Schwankungen bzw. Toleranzen in z-Richtung in der Einkoppeleinrichtung gemacht werden. Dies können beispielsweise Lagetoleranzen der Faserkerne sein, die z.B. auf ungleichmäßig dicke bzw. inhomogene Auftragsstärken der Lichtwellenleiterbeschichtung, Kernexzentrizitäten, unterschiedliche Lichtwellenleiterdurchmessern, usw. zurückzuführen sind, oder z.B. auch Schwankungen in der Geometrie des Strahlungsfelds sein. Eine eindeutige Zuordnung zwischen dem Strahlungsfeld und dem jeweiligen Einkoppelort beim Lichtwellenleiter-Kern ist somit in z-Richtung nicht mehr erforderlich.

Bei einer Abtastbewegung des Strahlungsfeldes SF in y-Richtung wird sein Lichtfleck LF entlang der Längsachse des jeweiligen Lichtwellenleiters wie z.B. LW1 zweckmäßigerweise schneller hin und herbewegt als er in Abtastrichtung y verfahren wird. Solange der Lichtfleck LF der beiden Kerne des jeweils zu messenden Lichtwellenleiters wie z.B. LW1 beleuchtet, wird er vorzugsweise zwischen 5 und 10 mal hin- und herbewegt. Vorzugsweise ergibt sich somit ein etwa schlank ovales Beleuchtungsfeld, wie es in Figur 2 für den Lichtfleck LF1 strichpunktiert angedeutet ist.

Zweckmäßigerweise wird der Lichtfleck entlang einer Scann-Strecke in z-Richtung verfahren, die mindestens der Lagetoleranz der Lichtwellenleiter-Kerne entspricht. Insbesondere durchläuft der Lichtfleck einer Scann-Strecke in z-Richtung vom 2-fachen der maximal möglichen Kernelagetoleranz. Durch die Scann-Bewegung des Strahlungsfelds SF in z-Richtung sind somit vorteilhaft Lichtflecke einer vorgebbaren, beliebigen Längserstreckung in z-Richtung (in der z,y-Ebene betrachtet) erzeugbar. Gegenüber der astigmatisch erzeugten Bildlinie SBL von Figur 19 oder auch FC0 von Figur 17 sind insbesondere Lichtflecke einer vorgebbaren, beliebigen Längserstreckung in z-Richtung (in der z,y-Ebene betrachtet) erzeugbar. Gegenüber der astigmatisch erzeugten Bildlinie SBL von Figur 19 oder auch FC0 von Figur 17 sind insbesondere Lichtflecke ermöglicht, die ihr gegenüber in der z,y-Ebene betrachtet eine wesentlich größere Ausdehnung in z-Richtung aufweisen.

Vorzugsweise mit Hilfe des Glaskeils GKE von Figur 2 ist dann wiederum auf optischem Wege eine erfindungsgemäße Neigung der so erzeugten in der y,z-Ebene verlaufenden Fokussierungsfläche besonders einfach ermöglicht. Die schräg gestellte Fokussierungsfläche (wie z.B. FC1 von Figur 2) wird dadurch erzeugt, daß das Strahlungsfeld SF mit seinem vorzugsweise punktförmig fokussierten Lichtfleck entlang einer Verschiebelinie verfahren wird, die durch den Glaskeil GKE gegenüber einer senkrecht zur Strahlungsrichtung x gedachten Ebene y,z in Richtung auf die Einkoppelfläche EF des Einkoppelabschnitts TC1 geneigt ist.

Gegebenenfalls kann eine erfindungsgemäß geneigte Fokussierungsfläche wie z.B. FC1 von Figur 17 auch ohne Glaskeil dadurch erreicht werden, daß das Strahlungsfeld SF auf mechanischem Weg mit einem vorzugsweise punktförmig fokussierten oder sonstig lokal begrenzten Lichtfleck entlang einer schräg gestellten Verschiebelinie bewegt wird, wie sie z.B. für die Fokussierungsfläche FC1 in Figur 17 gezeichnet ist. Dies kann beispielsweise durch die entsprechend positionierte Ablenkspiegel im Strahlungsfeld des Sendeelements erfolgen.

Durch die Scann-Bewegung des Lichtflecks wie z. B. LF entlang der Längserstreckung des jeweils gekrümmt geführten Lichtwellenleiters wie z.B. LW1 kann zudem gegebenenfalls die Lichteinkopplung auch unabhängig von der Lichtdichte-Verteilung innerhalb des Beleuchtungsfeld des Lichtflecks am Einkoppelort entlang der Längsachse des jeweiligen Lichtwellenleiters gemacht werden.

Figur 20 zeigt beispielhaft eine ortsabhängige Leistungsverteilung P des Lichtflecks LF von Figur 2 in der y,z-Ebene gemessen in z-Richtung. Die z-ortsabhängige Leistungsverteilung P weist in Figur 20 z.B. etwa Gaußform auf. Würde nun beispielsweise der Kern C1 des Lichtwellenleiters LW1 am z-Ort des Leistungsmaximums liegen, so würde dort mehr Licht in ihn eingekoppelt werden wie z.B. bei einer z-Position des Kerns C1, die unterhalb der absteigenden Flanke der Gaußkurve liegt. Es würde somit je nach Kernlage unterschiedlich viel Licht in den Lichtwellenleiter-Kern während der Zeitdauer einer Messung eingekoppelt werden. Um nun zu erreichen, daß jeweils in kontrollierbarer Weise eine bestimmte, vorgebbare Lichtmenge in den jeweils zu messenden Lichtwellenleiter eingekoppelt und in dessen Kern somit jeweils ein über eine bestimmte Meßdauer etwa konstanter Leistungspegel erzeugt werden kann, wird die erfindungsgemäße "Jitter"-Bewegung des Lichtflecks LF entlang der Krümmung des jeweiligen Einkoppel-Abschnitts durchgeführt. Dazu führt das Strahlungsfeld SF von Figur 2 vorzugsweise eine Scann-Bewegung in z-Richtung mit mindestens einem Durchlauf aus. Wichtig dabei ist, daß eine Relativbewegung zwischen dem Kern C1 und der Leistungsverteilung P durchgeführt wird. Dadurch kann nahezu der größte Teil der durch das Sendelement des optischen Senders zur Verfügung gestellten Lichtmenge in den Kern wie z.B. C1 des jeweiligen Lichtwellenleiters wie z.B. LW1 eingekoppelt werden. Beim Durchfahren der z.B. gausförmigen Intensitätsverteilung P entlang der Gaußbreite GB in z-Richtung wird in den Kern C1 insgesamt eine Lichtmenge eingekoppelt, die etwa dem Integral der Leistungskurve P, d.h. der Fläche IF unter der Gauskurve von Figur 20, entspricht.

Auf diese Weise kann nahezu die gesamte bereitgestellte Lichtmenge in den jeweils zu messenden Lichtwellenleiter eingekoppelt werden. Die Lichteinkopplung wird dadurch vorteilhaft unabhängig von der speziellen, ortsabhängigen Abstrahlcharakteristik des Sendeelementes bzw. seines zugehörigen Strahlungsfelds. Weiterhin ist die Lichteinkopplung weit weniger empfindlich gegenüber mechanischen und temperaturabhängigen Veränderungen in der Einkoppeleinrichtung, insbesondere hinsichtlich der Zuordnung zwischen dem Strahlungsfeld und dem jeweiligen Einkoppelort beim Lichtwellenleiterkern.

Besonders geeignet ist die z-Scannbewegung des Lichtflecks in Kombination mit der y-Abtastbewegung nach dem erfindungsgemäßen Meßverfahren entsprechend den Figuren 1 mit 10, da Schwankungen des eingekoppelten Lichtleistungspegels weitgehend vermieden sind und somit ein Pulsbetrieb besonders zuverlässig ermöglicht ist.

Zusätzlich oder unabhängig hiervon kann die Lichteinkopplung gegebenenfalls von der ortsabhängigen Abstrahlcharakteristik innerhalb einer vorgegebenen Lichtfleckausdehnung auch dadurch unabhängig gemacht werden, daß im Strahlungsfeld spezielle Filter vorgesehen sind, die die ortsabhängige Intensitätsverteilung wie z.B. die z-abhängige Gauskurve in eine etwa rechteckförmige Intensitätsverteilung transformieren, so daß die Lichtleistung unabhängig vom Ort, insbesondere vom z-Ort, konstant ist. In Figur 2 ist solch ein Filter strichpunktiert im Strahlengang des Strahlungsfelds SF angedeutet und mit den Bezugszeichen FI versehen.

**Patentansprüche**

1. Verfahren für Messungen an mehreren Lichtwellenleitern (LW1 bis LWn), wobei Licht (LB) sendeseitig in die jeweils zu messenden Lichtwellenleiter (LW1 bis LWn) eingekoppelt wird und wobei jeweils empfangsseitig ein Teil dieses Lichtes (LB) ausgekoppelt und ausgewertet wird, wobei sendeseitig ein Sende-Strahlungsfeld (SF) mit seinem Lichtfleck (LF) über Einkoppel-Abschnitte (TC1 bis TCn) der zu messenden Lichtwellenleiter (LW1 bis LWn) zeitlich nacheinander bewegt und in diese eingekoppelt wird, wobei empfangsseitig der sendeseitigen Einkopplung zugeordnete Empfangs-Strahlungsfelder (RF1 bis RFn) der zu messenden Lichtwellenleiter (LW1 bis LWn) in ihrer zeitlichen Verteilung (RP) zueinander erfaßt werden, wobei diese zeitliche Verteilung (RP) zur Auswertung bereitgestellt wird, und wobei aufgrund dieser zeitlichen Verteilung (RP) der Empfangs-Strahlungsfelder (RF1 bis RFn) sendeseitig der Lichtfleck (LF) des Sende-Strahlungsfeldes (SF) derart gesteuert wird, daß aufgrund dieser zeitlichen Verteilung (RP) der Empfangs-Strahlungsfelder während der Bewegung des Lichtflecks (LF) über die Einkoppel- Abschnitte (TC1 mit TCn) der zu messenden Lichtwellenleiter (LW1 mit LWn) die Koppelverhältnisse sende- und/oder empfangsseitig weitgehend unabhängig von Lichtwellenleiter-Koppeleigenschaften gemacht werden.

2. Verfahren nach Anspruch 1, wobei
aus der zeitlichen Verteilung (RP) der Empfangs-Strahlungsfelder (RF1 bis RFn) die örtliche Lage der Lichtwellenleiter (LW1 bis LE2) bestimmt und zur Auswertung bereitgestellt wird.

3. Verfahren nach Anspruch 2, wobei
die örtliche Lage der Lichtwellenleiter (LW1 bis LWn) dargestellt und/oder aufgezeichnet wird.

4. Verfahren nach einem der vorhergehenden Ansprüche, wobei
aus der zeitlichen Verteilung (RP) der Empfangs-Strahlungsfelder (RF1 bis RFn) jeweils deren Lichtleistungen bestimmt und zur Auswertung bereitgestellt werden.

5. Verfahren nach Anspruch 4, wobei
mittels dieser Lichtleistungen sendeseitig der Lichtfleck (LF) des Sende-Strahlungsfeldes (SF) gesteuert wird.

6. Verfahren nach einem der Ansprüche 4 oder 5, wobei
die Lichtleistungen der einzelnen Lichtwellenleiter (LW1 bis LWn) dargestellt und/oder aufgezeichnet werden.

7. Verfahren nach einem der vorhergehenden Ansprüche, wobei
aus der zeitlichen Verteilung (RP) der Empfangsstrahlungsfelder (RF1 bis RFn) deren zeitliche Abfolge ermittelt wird.

8. Verfahren nach Anspruch 7, wobei
die sendeseitige zeitliche Abfolge der Einkoppel-Zeitintervalle (T1 bis T4) des Lichtflecks (LF) mit Hilfe der zuvor empfangsseitig aufgezeichneten, zeitlichen Abfolge von Empfangs-Strahlungsfeldern (RF1 bis RFn) gesteuert wird.

9. Verfahren nach einem der vorherghenden Ansprüche, wobei
in mindestens einer Referenzmessung die zeitliche Verteilung (RP)der Empfangs-Strahlungsfelder (RF1-RFn) erfaßt wird, wobei daraus die örtliche Lage der zu messenden Lichtwellenleiter (LW1 bis LWn) sowie die in ihnen geführten Lichtleistungen bestimmt werden, und wobei mittels dieser Steuergrößen sendeseitig jeweils Einkoppelzeit sowie Sendeleistung des Sende-Strahlungsfeldes (SF) während seiner Bewegung über die Einkoppel-Abschnitte (TC1-TCn) der zu messenden Lichtwellenleiter (LW1-LWn) für nachfolgende Messungen festgelegt werden.

10. Verfahren nach einem der vorhergehenden Ansprüche, wobei
das Sende-Strahlungsfeld (SF) während Einkoppelzeitintervalle zwischen 1 und 10 % der Dauer der Bewegung des Lichtfleckes in die zu messenden Lichtwellenleiter (LW1 - LWn) eingekoppelt wird, wobei für die Einkoppelzeiten des Sende-Strahlungsfeldes (SF) Zeitabstände zwischen 3 und 30 % der Dauer der Lichtfleck-Bewegung gewählt werden.

11. Verfahren nach einem der vorhergehenden Ansprüche, wobei
das Sende-Strahlungsfeld (SF) während seiner sendeseitigen Bewegung mit seinem Lichtfleck (LF) kontinuierlich auf die Einkoppel-Abschnitte (TC1 - TCn) der zu messenden Lichtwellenleiter (LW1 bis LWn) abgestrahlt wird.

12. Verfahren nach einem der Ansprüche 1 bis 10, wobei
das Sende-Strahlungsfeld (SF) während seiner sendeseitigen Bewegung mit seinem Lichtfleck (LF) auf die Einkoppel-Abschnitte (TC-TCn) der zu messenden Lichtwellenleiter (LW1 bis LWn) im Pulsbetrieb abgestrahlt wird.

13. Verfahren nach einem der vorhergehenden Ansprüche, wobei
das Sende-Strahlungsfeld (SF) mit seinem Lichtfleck (LF) (LF) stetig über die zu messenden Lichtwellenleiter (LW1 bis LWn) bewegt wird.

14. Verfahren nach einem der Ansprüche 1 bis 12, wobei
das Sende-Strahlungsfeld (SF) mit seinem Lichtfleck (LF) schrittweise über die zu messenden Lichtwellenleiter (LW1 bis LWn) bewegt wird.

15. Einrichtung (ME) für Messungen an mehreren Lichtwellenleitern (LW1 bis LWn) mit einer optischen Sende/Koppeleinrichtung (SK), die an die jeweils zu messenden Lichtwellenleiter (LW1 bis LWn) ankoppelbar ist, sowie mit einem optischen Empfänger (OR1), der mindestens ein Empfangselement (GLE) aufweist, dem eine Auswerteeinrichtung (AE1) zugeordnet ist, wobei die Sende-/Koppeleinrichtung (SK) derart ausgebildet ist, daß, insbesondere nach einem der vorhergehenden Verfahrensansprüche, sendeseitig jeweils ein Sende-Strahlungsfeld (SF) mit seinem Lichtfleck (LF) über Einkoppel-Abschnitte (TC1 bis TCn) der zu messenden Lichtwellenleiter (LW1 bis LWn) zeitlich nacheinander bewegbar und in diese einkoppelbar ist, wobei im optischen Empfänger (OR1) das Empfangselement (GLE) so ausgerichtet und ausgebildet ist, daß dieses jeweils der sendeseitigen Einkopplung zugeordnete Empfangs-Strahlungsfelder (RF1 bis RFn) der zu messenden Lichtwellenleiter (LW1 bis LWn) in ihrer zeitlichen Verteilung (RP) erfaßt, daraus Empfangssignale (DS2) erzeugt, und diese einer Auswerteeinrichtung (AE1) zuführt, und wobei mit der empfangsseitigen Auswerteeinrichtung (AE1) sendeseitig eine Ansteuervorrichtung (ASV1) für die Sende/Koppeleinrichtung (SK) derart verbunden und ausgebildet ist, daß mittels der zeitlichen Verteilung (RP) der Empfangs-Strahlungsfelder (RF1 bis RFn) sendeseitig der Lichtfleck (LF) des Sende-Strahlungsfeldes (SF) so gesteuert ist, daß aufgrund dieser zeitlichen Verteilung der Empfangs-Strahlungsfelder während der Bewegung des Lichtflecks (LF) über die Einkoppel-Abschnitte (TC1 mit TCn) der zu messenden Lichtwellenleiter (LW1 mit LWn) die Koppelverhältnisse sende- und/oder empfangsseitig weitgehend unabhängig von Lichtwellenleiter-Koppeleigenschaften gemacht werden.

16. Einrichtung nach Anspruch 15, worin
die zu messenden Lichtwellenleiter (LW1 bis LWn) mechanisch miteinander verbunden sind, vorzugsweise in Form eines Lichtwellenleiter-Bändchens (BL1, BL2).

17. Einrichtung nach einem der Ansprüche 15 oder 16, worin
in der Sende-/Koppelvorrichtung (SK) ein Biegekoppler (BK1) vorgesehen ist.

18. Einrichtung nach einem der Ansprüche 15 bis 17, worin
in der Auswerteeinrichtung (AE1) eine Recheneinheit (CPU) vorgesehen ist, die die zeitliche Verteilung (RP) der Empfangs-Strahlungsfelder (RF1 bis RFn) auswertet.

19. Einrichtung nach einem der Ansprüche 15 bis 18, worin
in der Sende-/Koppelvorrichtung (SK) eine Strahlablenkvorrichtung (BS) für die Bewegung des Sende-Strahlungsfeldes (SF) vorgesehen ist.

20. Einrichtung nach einem der Ansprüche 15 bis 19, worin
zwischen der optischen Sende-/Koppelvorrichtung (SK) und den zu messenden Lichtwellenleitern (LW1 bis LWn) eine Abbildungsoptik (EO) angeordnet ist.

21. Einrichtung nach einem der Ansprüche 15 bis 20, worin
Mittel (SG1, SG2) zum Ausrichten der zu messenden Lichtwellenleiter (LW1 bis LWn; LW1* bis LWn*) in einer Mehrfach-Spleißeinrichtung (MS1) vorgesehen sind.

22. Einrichtung nach einem der Ansprüche 15 bis 21, worin
die Einrichtung (ME) Bestandteil eines Lichtwellenleiter-Spleißgerätes oder Dämpfungsgerätes ist.

23. Verfahren für Messungen an mehreren Lichtwellenleitern (LW1 bis LWn), wobei Licht (LB) sendeseitig in die jeweils zu messenden Lichtwellenleiter (LW1 bis LWn) eingekoppelt wird und wobei jeweils empfangsseitig ein Teil dieses Lichtes (LB) ausgekoppelt und ausgewertet wird, wobei sendeseitig ein Sende-Strahlungsfeld (SF) mit seinem Lichtfleck (LF) über Einkoppel-Abschnitte (TC1 bis TCn) der zu messenden Lichtwellenleiter (LW1 bis LWn) zeitlich nacheinander bewegt und in diese eingekoppelt wird, wobei empfangsseitig der sendeseitigen Einkopplung zugeordnete Empfangs-Strahlungsfelder (RF1 bis RFn) der zu messenden Lichtwellenleiter (LW1 bis LWn) in ihrer zeitlichen Verteilung (RP) zueinander erfaßt werden, wobei diese zeitliche Verteilung (RP) zur Auswertung bereitgestellt wird, insbesondere nach einem der vorhergehenden Verfahrensansprüche, und wobei
der Lichtfleck (LF) des Sende-Strahlungsfeldes (SF) derart erzeugt wird, daß er am Einkoppelort eine größere räumliche Ausdehnung senkrecht zur Ausbreitungsrichtung (x) des Sende-Strahlungsfeldes (SF) als in seine Abtastrichtung (y) aufweist, sodaß aufgrund dieser räumlichen Abbildung des Lichtflecks (LF) während der Bewegung des Lichtflecks (LF) über die Einkoppel-Abschnitte (TC1 mit TCn) der zu messenden Lichtwellenleiter (LW1 mit LWn) die Koppelverhältnisse sende- und/oder empfangsseitig weitgehend unabhängig von Lichtwellenleiter-Koppeleigenschaften gemacht werden.

24. Verfahren nach Anspruch 23, wobei
das Sende-Strahlungsfeld (SF) derart abgebildet wird, daß ein etwa linienförmiger Lichtfleck (LF) senkrecht zur Ausbreitungsrichtung (x) des Sende-Strahlungsfeldes (SF) erzeugt wird.

25. Einrichtung (ME) für Messungen an mehreren Lichtwellenleitern (LW1 bis LWn) mit einer optischen Sende/Koppeleinrichtung (SK), die an die jeweils zu messenden Lichtwellenleiter (LW1 bis LWn) ankoppelbar ist, sowie mit einem optischen Empfänger (OR1), der mindestens ein Empfangselement (GLE) aufweist, dem eine Auswerteeinrichtung (AE1) zugeordnet ist, wobei die Sende-/Koppeleinrichtung (SK) derart ausgebildet ist, daß, insbesondere nach einem der vorhergehenden Verfahrensansprüche, sendeseitig jeweils ein Sende-Strahlungsfeld (SF) mit seinem Lichtfleck (LF) über Einkoppel-Abschnitte (TC1 bis TCn) der zu messenden Lichtwellenleiter (LW1 bis LWn) zeitlich nacheinander bewegbar und in diese einkoppelbar ist, wobei im optischen Empfänger (OR1) das Empfangselement (GLE) so ausgerichtet und ausgebildet ist, daß dieses jeweils der sendeseitigen Einkopplung zugeordnete Empfangs-Strahlungsfelder (RF1 bis RFn) der zu messenden Lichtwellenleiter (LW1 bis LWn) in ihrer zeitlichen Verteilung (RP) erfaßt, daraus Empfangssignale (DS2) erzeugt, und diese einer Auswerteeinrichtung (AE1) zuführt, und wobei

in der Sende-/Koppeleinrichtung (SK) Mittel zur Abbildung des Sende-Strahlungsfeldes (SF) derart vorgesehen sind, daß der von ihnen erzeugte Lichtfleck (LF) am Einkoppelort eine solche größere räumliche Ausdehnung senkrecht zur Ausbreitungsrichtung (x) des Sende-Strahlungsfeldes (SF) als in seine Abtastrichtung (y) aufweist, sodaß aufgrund dieser räumlichen Abbildung des Lichtflecks (LF) während der Bewegung des Lichtflecks (LF) über die Einkoppel- Abschnitte (TC1 mit TCn) der zu messenden Lichtwellenleiter (LW1 mit LWn) die Koppelverhältnisse sende- und/oder empfangsseitig weitgehend unabhängig von Lichtwellenleiter-Koppeleigenschaften gemacht werden.

26. Verfahren für Messungen an mehreren Lichtwellenleitern (LW1 bis LWn), wobei Licht (LB) sendeseitig in die jeweils zu messenden Lichtwellenleiter (LW1 bis LWn) eingekoppelt wird und wobei jeweils empfangsseitig ein Teil dieses Lichtes (LB) ausgekoppelt und ausgewertet wird, wobei sendeseitig ein Sende-Strahlungsfeld (SF) mit seinem Lichtfleck (LF) über Einkoppel-Abschnitte (TC1 bis TCn) der zu messenden Lichtwellenleiter (LW1 bis LWn) zeitlich nacheinander bewegt und in diese eingekoppelt wird, wobei empfangsseitig der sendeseitigen Einkopplung zugeordnete Empfangs-Strahlungsfelder (RF1 bis RFn) der zu messenden Lichtwellenleiter (LW1 bis LWn) in ihrer zeitlichen Verteilung (RP) zueinander erfaßt werden, wobei diese zeitliche Verteilung (RP) zur Auswertung bereitgestellt wird, insbesondere nach einem der vorhergehenden Verfahrensansprüche, und wobei

aufgrund dieser Registrierung der zeitlichen Verteilung der Empfangs- Strahlungsfelder bei nachfolgenden Messungen empfangsseitige Steuervorgänge derart ausgelöst werden, daß aufgrund dieser zeitlichen Verteilung der Empfangs-Strahlungsfelder während der Bewegung des Lichtflecks (LF) über die Einkoppel- Abschnitte (TC1 mit TCn) der zu messenden Lichtwellenleiter (LW1 mit LWn) die Koppelverhältnisse sende- und/oder empfangsseitig weitgehend unabhängig von Lichtwellenleiter-Koppeleigenschaften gemacht werden.

27. Verfahren nach Anspruch 26, wobei in mindestens einem ersten sendeseitigen Durchlauf des Sende-Strahlungsfeldes empfangsseitig die zeitliche Verteilung (RP) von der sendeseitigen Einkopplung zugeordneten Empfangs-Strahlungsfeldern (RF1 bis RFn) registriert und festgehalten wird.

28. Verfahren nach einem der Ansprüche 26 oder 27, wobei als empfangsseitiger Steuervorgang die Steuerung eines Integrators (INT) durchgeführt wird, mit dem jeweils die Lichtleistung der zeitlich nacheinander erfaßten Empfangs-Strahlungsfelder (RF1 bis RFn) selektiv bestimmt wird.

29. Verfahren nach Anspruch 26 mit 28, wobei als empfangsseitiger Steuervorgang die Steuerung eines Verstärkers (AM) durchgeführt wird, mit dem jeweils die zeitlich nacheinander erfaßten Empfangs-Strahlungsfelder (RF1 bis RFn) selektiv verstärkt werden.

30. Einrichtung (ME) für Messungen an mehreren Lichtwellenleitern (LW1 bis LWn) mit einer optischen Sende/Koppeleinrichtung (SK), die an die jeweils zu messenden Lichtwellenleiter (LW1 bis LWn) ankoppelbar ist, sowie mit einem optischen Empfänger (OR1), der mindestens ein Empfangselement (GLE) aufweist, dem eine Auswerteeinrichtung (AE1) zugeordnet ist, wobei die Sende-/Koppeleinrichtung (SK) derart ausgebildet ist, daß, insbesondere nach einem der vorhergehenden Verfahrensansprüche, sendeseitig jeweils ein Sende-Strahlungsfeld (SF) mit seinem Lichtfleck (LF) über Einkoppel-Abschnitte (TC1 bis TCn) der zu messenden Lichtwellenleiter (LW1 bis LWn) zeitlich nacheinander bewegbar und in diese einkoppelbar ist, wobei im optischen Empfänger (OR1) das Empfangselement (GLE) so ausgerichtet und ausgebildet ist, daß dieses jeweils der sendeseitigen Einkopplung zugeordnete Empfangs-Strahlungsfelder (RF1 bis RFn) der zu messenden Lichtwellenleiter (LW1 bis LWn) in ihrer zeitlichen Verteilung (RP) erfaßt, daraus Empfangssignale (DS2) erzeugt, und diese einer Auswerteeinrichtung (AE1) zuführt, und wobei

Steuermittel (INT) vorgesehen sind, die aufgrund dieser Registrierung der zeitlichen Verteilung der Empfangs-Strahlungsfelder (RF1 mit RFn) bei nachfolgenden Messungen empfangsseitige Steuervorgänge derart auslösen, daß aufgrund dieser zeitlichen Verteilung der Empfangs-Strahlungsfelder während der Bewegung des Lichtflecks (LF) über die Einkoppel-Abschnitte (TC1 mit TCn) der zu messenden Lichtwellenleiter (LW1 mit LWn) die Koppelverhältnisse sende- und/oder empfangsseitig weitgehend unabhängig von Lichtwellenleiter-Koppeleigenschaften gemacht werden.

31. Einrichtung nach Anspruch 30, worin
die Auswerteeinrichtung (AE1) eine Recheneinheit (CPU) mit zugehörigem Meßwertspeicher (MEM) derart aufweist, daß die in mindestens einem ersten sendeseitigen Durchlauf eines Sende-Strahlunsfeldes empfangsseitig erzeugten Empfangssignale (DS) registrierbar sind.

32. Einrichtung nach einem der Ansprüche 30 oder 31, worin
dem optischen Empfänger (OR1) und/oder der Auswerteeinrichtung (AE1) empfangsseitige Steuermittel zugeordnet sind.

33. Einrichtung nach Anspruch 32, worin
als empfangsseitiges Steuermittel ein Integrator (INT) zur selektiven Bestimmung der Lichtleistungen der Empfangs-Strahlungsfelder (RF1 bis RFn) vorgesehen ist.

34. Einrichtung nach einem der Ansprüche 30 bis 33, worin
dem optischen Empfänger (OR1) und/oder der Auswerteeinrichtung (AE1) empfangsseitige Auslösemittel (z.B. SW) zugeordnet sind.

35. Einrichtung nach Anspruch 34, worin
als Auslösemittel ein Schalter (SW) vorgesehen ist.

36. Einrichtung nach einem der Ansprüche 30 bis 35, worin
als empfangsseitiges Steuermittel ein Verstärker (AM) vorgesehen ist, mit dem ein Verstärkungsfaktor für jedes zu messende Empfangs-Strahlungsfeld (RF1-RFn) individuell einstellbar ist.

37. Verfahren für Messungen an mehreren Lichtwellenleitern (LW1 bis LWn), wobei Licht (LB) sendeseitig in die jeweils zu messenden Lichtwellenleiter (LW1 bis LWn) eingekoppelt wird und wobei jeweils empfangsseitig ein Teil dieses Lichtes (LB) ausgekoppelt und ausgewertet wird, wobei sendeseitig ein Sende-Strahlungsfeld (SF) mit seinem Lichtfleck (LF) über Einkoppel-Abschnitte (TC1 bis TCn) der zu messenden Lichtwellenleiter (LW1 bis LWn) zeitlich nacheinander bewegt und in diese eingekoppelt wird, wobei empfangsseitig der sendeseitigen Einkopplung zugeordnete Empfangs-Strahlungsfelder (RF1 bis RFn) der zu messenden Lichtwellenleiter (LW1 bis LWn) in ihrer zeitlichen Verteilung (RP) zueinander erfaßt werden, wobei diese zeitliche Verteilung (RP) zur Auswertung bereitgestellt wird, insbesondere nach einem der vorhergehenden Verfahrensansprüche, und wobei die Fokussierungsfläche (FC1) des Sende-Strahlungsfeldes (SF) gegenüber einer senkrecht zur Strahlungsrichtung (x) gedachten Ebene (y, z) in Richtung auf die Einkoppelfläche (EF) des Einkoppel-Abschnitts (TCl)derart geneigt wird, daß aufgrund dieser Neigung der Fokussierungsfläche (FC1) des Sende- Strahlungsfelds (SF) während der Bewegung des Lichtflecks (LF) über die Einkoppel- Abschnitte (TC1 mit TCn) der zu messenden Lichtwellenleiter (LW1 mit LWn) die Koppelverhältnisse sende- und/oder empfangsseitig weitgehend unabhängig von Lichtwellenleiter-Koppeleigenschaften gemacht werden.

38. Verfahren nach Anspruch 37, wobei
die Fokussierungsfläche (FC1) in einer Ebene (x, z) betrachtet, in der der Einkoppel-Abschnitt (TC1) des Lichtwellenleiters (LW1) verläuft, als Fokussierungslinie etwa parallel zur Sehne (SH) des Einkoppel-Abschnitts (TC1) geneigt abgebildet wird.

39. Verfahren nach Anspruch 38, wobei
in dieser Ebene (x, z) für die geneigte Fokussierungsfläche (FC1) eine Steigungshöhe eingestellt wird, die etwa gleich oder größer der maximal möglichen Kernlagetoleranz des jeweils zu messenden Lichtwellenleiters (LW1) gewählt wird.

40. Verfahren nach einem der Ansprüche 38 oder 39, wobei
in dieser Ebene (x, z)die Fokussierungslinie etwa in der Mitte des Einkoppel-Abschnitts (TC1) möglichst tangential angelegt wird.

41. Verfahren nach einem der Ansprüche 37 mit 40, wobei
die Fokussierungsfläche (FC2) bezüglich ihrer Form der Einkoppelfläche (EF)des Einkoppel-Abschnitts (TC1) angepaßt wird.

42. Verfahren nach einem der Ansprüche 37 mit 41, wobei
die Fokussierungsfläche (FC2) mit der Einkoppelfläche (EF) des Einkoppel-Abschnitts (TC1) zur Deckung gebracht wird.

43. Verfahren nach einem der Ansprüche 37 mit 42, wobei
das Sende-Strahlungsfeld (SF) derart räumlich abgebildet wird, daß seine Fokussierungsfläche (FC1) mit einer größeren räumlichen Ausdehnung in Längsrichtung des gekrümmten Lichtwellenleiter-Abschnitts (TC1) als in seine Abtastrichtung (y) erzeugt wird.

44. Verfahren nach einem der Ansprüche 37 mit 43, wobei
das Licht (LB) des Sende-Strahlungsfeldes (SF) entlang seines Strahlenweges zu zwei astigmatischen Bildflächen (MBL, SBL) konzentriert wird.

**45.** Einrichtung (ME) für Messungen an mehreren Lichtwellenleitern (LW1 bis LWn) mit einer optischen Sende/Koppeleinrichtung (SK), die an die jeweils zu messenden Lichtwellenleiter (LW1 bis LWn) ankoppelbar ist, sowie mit einem optischen Empfänger (OR1), der mindestens ein Empfangselement (GLE) aufweist, dem eine Auswerteeinrichtung (AE1) zugeordnet ist, wobei die Sende-/Koppeleinrichtung (SK) derart ausgebildet ist, daß, insbesondere nach einem der vorhergehenden Verfahrensansprüche, sendeseitig jeweils ein Sende-Strahlungsfeld (SF) mit seinem Lichtfleck (LF) über Einkoppel-Abschnitte (TC1 bis TCn) der zu messenden Lichtwellenleiter (LW1 bis LWn) zeitlich nacheinander bewegbar und in diese einkoppelbar ist, wobei im optischen Empfänger (OR1) das Empfangselement (GLE) so ausgerichtet und ausgebildet ist, daß dieses jeweils der sendeseitigen Einkopplung zugeordnete Empfangs-Strahlungsfelder (RF1 bis RFn) der zu messenden Lichtwellenleiter (LW1 bis LWn) in ihrer zeitlichen Verteilung (RP) erfaßt, daraus Empfangssignale (DS2) erzeugt, und diese einer Auswerteeinrichtung (AE1) zugeführt, und wobei mindestens ein Abbildungsmittel (GKE) vorgesehen ist, das die Fokussierungsfläche (FC1) des Sende-Strahlungsfeldes (SF) gegenüber einer senkrecht zur Strahlungsrichtung (x) gedachten Ebene (y,z) in Richtung auf die Einkoppelfläche (EF) des Einkoppel-Abschnitts (TC1) derart neigt, daß aufgrund dieser Neigung der Fokussierungsfläche (FC1) des Sende- Strahlungsfelds (SF) während der Bewegung des Lichtflecks (LF) über die Einkoppel-Abschnitte (TC1 mit TCn) der zu messenden Lichtwellenleiter (LW1 mit LWn) die Koppelverhältnisse sende- und/oder empfangsseitig weitgehend unabhängig von Lichtwellenleiter-Koppeleigenschaften gemacht werden.

**46.** Einrichtung nach Anspruch 45, worin im Sende-Strahlungsfeld (SF) als Abbildungsmittel ein Glaskeil (GKE) vorgesehen ist.

**47.** Verfahren für Messungen an mehreren Lichtwellenleitern (LW1 bis LWn), wobei Licht (LB) sendeseitig in die jeweils zu messenden Lichtwellenleiter (LW1 bis LWn) eingekoppelt wird und wobei jeweils empfangsseitig ein Teil dieses Lichtes (LB) ausgekoppelt und ausgewertet wird, wobei sendeseitig ein Sende-Strahlungsfeld (SF) mit seinem Lichtfleck (LF) über Einkoppel-Abschnitte (TC1 bis TCn) der zu messenden Lichtwellenleiter (LW1 bis LWn) zeitlich nacheinander bewegt und in diese eingekoppelt wird, wobei empfangsseitig der sendeseitigen Einkopplung zugeordnete Empfangs-Strahlungsfelder (RF1 bis RFn) der zu messenden Lichtwellenleiter (LW1 bis LWn) in ihrer zeitlichen Verteilung (RP) zueinander erfaßt werden, wobei diese zeitliche Verteilung (RP) zur Auswertung bereitgestellt wird, insbesondere nach einem der vorhergehenden Verfahrensansprüche, und wobei der Lichtfleck (LF) des Sende-Strahlungsfeldes (SF) entlang der Längsachse des zu messenden Lichtwellenleiters (LW1) derart hin- und herbewegt wird, daß aufgrund dieser Hin- und Herbewegung des Lichtflecks (LF) während der Bewegung des Lichtflecks (LF) über die Einkoppel- Abschnitte (TC1 mit TCn) der zu messenden Lichtwellenleiter (LW1 mit LWn) die Koppelverhältnisse sende- und/oder empfangsseitig weitgehend unabhängig von Lichtwellenleiter-Koppeleigenschaften gemacht werden.

**48.** Verfahren nach Anspruch 47, wobei das Sende-Strahlungsfeld (SF) entlang einer Verschiebelinie (z) senkrecht zur Ausbreitungsrichtung (x) des Sende-Strahlungsfeldes (SF) sowie senkrecht zu dessen Abtastrichtung (y) hin- und herbewegt wird.

**49.** Verfahren nach einem der Ansprüche 47 oder 48, wobei der Lichtfleck (LF) entlang der Längsachse des Lichtwellenleiters (LW1) schneller hin- und herbewegt wird, als er in seine Abtastrichtung (y) verfahren wird.

**50.** Einrichtung (ME) für Messungen an mehreren Lichtwellenleitern (LW1 bis LWn) mit einer optischen Sende/Koppeleinrichtung (SK), die an die jeweils zu messenden Lichtwellenleiter (LW1 bis LWn) ankoppelbar ist, sowie mit einem optischen Empfänger (OR1), der mindestens ein Empfangselement (GLE) aufweist, dem eine Auswerteeinrichtung (AE1) zugeordnet ist, wobei die Sende-/Koppeleinrichtung (SK) derart ausgebildet ist, daß, insbesondere nach einem der vorhergehenden Verfahrensansprüche, sendeseitig jeweils ein Sende-Strahlungsfeld (SF) mit seinem Lichtfleck (LF) über Einkoppel-Abschnitte (TC1 bis TCn) der zu messenden Lichtwellenleiter (LW1 bis LWn) zeitlich nacheinander bewegbar und in diese einkoppelbar ist, wobei im optischen Empfänger (OR1) das Empfangselement (GLE) so ausgerichtet und ausgebildet ist, daß dieses jeweils der sendeseitigen Einkopplung zugeordnete Empfangs-Strahlungsfelder (RF1 bis RFn) der zu messenden Lichtwellenleiter (LW1 bis LWn) in ihrer zeitlichen Verteilung (RP) erfaßt, daraus Empfangssignale (DS2) erzeugt, und diese einer Auswerteeinrichtung (AE1) zuführt, und wobei eine Ablenkeinrichtung (ULS) vorgesehen ist, die den Lichtfleck (LF) des Sende-Strahlungsfeldes (SF) entlang der Längsachse des zu messenden Lichtwellenleiters (LW1) derart hin- und herbewegt, daß aufgrund dieser Hin- und Herbewegung des Lichtflecks (LF) während der Bewegung des Lichtflecks (LF) über die Einkoppel- Abschnitte (TC1 mit TCn) der zu messenden Lichtwellenleiter (LW1 mit LWn) die Koppelverhältnisse sende- und/oder emp-fangsseitig weitgehend unabhängig von Lichtwel-lenleiter-Koppeleigenschaften gemacht werden.

## Claims

1. Method for taking measurements on a plurality of optical fibres (LW1 to LWn), light (LB) being launched at the transmitting end into the optical fibres (LW1 to LWn) respectively to be measured, and a part of this light (LB) being coupled out and evaluated in each case at the receiving end, a transmitting radiation field (SF) with its light spot (LF) being moved at the transmitting end chronologically sequentially over input sections (TC1 to TCn) of the optical fibres (LW1 to LWn) to be measured and being launched into the latter, the mutual temporal distribution (RP) of receiving radiation fields (RF1 to RFn) assigned to the input at the transmitting end being detected at the receiving end, this temporal distribution (RP) being provided for evaluation, and the light spot (LF) of the transmitting radiation field (SF) being controlled at the transmitting end on the basis of this temporal distribution (RP) of the receiving radiation fields (RF1 to RFn) in such a way that the coupling ratios are rendered substantially independent of optical fibre coupling characteristics at the transmitting and/or receiving ends during the movement of the light spot (LF) over the input sections (TC1 to TCn) of the optical fibres (LW1 to LWn) to be measured on the basis of this temporal distribution (RP) of the receiving radiation fields.

2. Method according to Claim 1, the spatial position of the optical fibres (LW1 to LWn) being determined from the temporal distribution (RP) of the receiving radiation fields (RF1 to RFn) and provided for evaluation.

3. Method according to Claim 2, the spatial position of the optical fibres (LW1 to LWn) being displayed and/ or recorded.

4. Method according to one of the preceding claims, the optical powers of the receiving radiation fields (RF1 to RFn) being determined in each case from their temporal distribution (RP) and provided for evaluation.

5. Method according to Claim 4, the light spot (LF) of the transmitting radiation field (SF) being controlled at the transmitting end by means of these optical powers.

6. Method according to one of Claims 4 or 5, the optical powers of the individual optical fibres (LW1 to LWn) being displayed and/or recorded.

7. Method according to one of the preceding claims, the temporal sequence of the receiving radiation fields (RF1 to RFn) being determined from their temporal distribution (RP).

8. Method according to Claim 7, the temporal sequence, at the transmitting end, of the input time intervals (T1 to T4) of the light spot (LF) being controlled with the aid of the temporal sequence, previously recorded at the receiving end, of the receiving radiation fields (RF1 to RFn).

9. Method according to one of the preceding claims, the temporal distribution (RP) of the receiving radiation fields (RF1-RFn) being detected in at least one reference measurement, the spatial position of the optical fibres (LW1 to LWn) to be measured and the optical powers guided in them being determined therefrom, and the input time and the transmitting power of the transmitting radiation field (SF) being determined, for subsequent measurements, in each case at the transmitting end by means of these controlled variables during the movement of said transmitting radiation field over the input sections (TC1-TCn) of the optical fibres (LW1-LWn) to be measured.

10. Method according to one of the preceding claims, the transmitting radiation field (SF) being launched into the optical fibres (LW1-LWn) to be measured during input time intervals of between 1 and 10% of the duration of the movement of the light spot, time intervals of between 3 and 30% of the duration of the light spot movement being selected for the input times of the transmitting radiation field (SF).

11. Method according to one of the preceding claims, the transmitting radiation field (SF) being emitted continuously onto the input sections (TCI-TCn) of the optical fibres (LW1 to LWn) to be measured during its movement with its light spot (LF) at the transmitting end.

12. Method according to one of Claims 1 to 10, the transmitting radiation field (SF) being emitted in pulse operation onto the input sections (TC1-TCn) of the optical fibres (LW1 to LWn) to be measured during its movement with its light spot (LF) at the transmitting end.

13. Method according to one of the preceding claims, the transmitting radiation field (LF) being moved continuously with its light spot (LS) over the optical fibres (LW1 to LWn) to be measured.

14. Method according to one of Claims 1 to 12, the transmitting radiation field (LF) being moved in steps with its light spot (LF) over the optical fibres (LW1 to LWn) to be measured.

15. Device (ME) for taking measurements on a plurality of optical fibres (LW1 to LWn), having an optical transmitting/coupling device (SK), which can be coupled to the optical fibres (LW1 to LWn) to be measured in each case, and having an optical receiver (OR1) which has at least one receiving element (GLE) to which an evaluation device (AE1) is assigned, the transmitting/coupling device (SK) being designed in such a way that, in particular according to one of the preceding method claims, in each case a transmitting radiation field (SF) with its light spot (LF) can be moved at the transmitting end chronologically sequentially over input sections (TC1 to TCn) of the optical fibres (LW1 to LWn) to be measured and can be launched into the latter, the receiving element (GLE) being aligned and constructed in the optical receiver (OR1) such that said element in each case detects the temporal distribution (RP) of the receiving radiation fields (RF1 to RFn), assigned to the input at the transmitting end, of the optical fibres (LW1 to LWn) to be measured, generates received signals (DS2) therefrom and feeds the latter to an evaluation device (AE1), and a drive device (ASV1) for the transmitting/coupling device (SK) being connected at the transmitting end to the evaluation device (AE1) at the receiving end, and being designed, in such a way that the light spot (LF) of the transmitting radiation field (SF) is controlled at the transmitting end by means of the temporal distribution (RP) of the receiving radiation fields (RF1 to RFn) such that the coupling ratios are rendered substantially independent of optical fibre coupling characteristics at the transmitting and/or receiving ends during the movement of the light spot (LF) over the input sections (TC1 to TCn) of the optical fibres (LW1 to LWn) to be measured on the basis of this temporal distribution (RP) of the receiving radiation fields.

16. Device according to Claim 15, in which the optical fibres (LW1 to LWn) to be measured are mechanically connected to one another, preferably in the form of an optical fibre ribbon (BL1, BL2).

17. Device according to one of Claims 15 or 16, in which a bending coupler (BK1) is provided in the transmitting/coupling device (SK).

18. Device according to one of Claims 15 to 17, in which a central processor unit (CPU) which evaluates the temporal distribution (RP) of the receiving radiation fields (RF1 to RFn) is provided in the evaluation device (AE1).

19. Device according to one of Claims 15 to 18, in which a beam deflecting device (BS) for moving the transmitting radiation field (SF) is provided in the transmitting/coupling device (SK).

20. Device according to one of Claims 15 to 19, in which an imaging optical system (EO) is arranged between the optical transmitting/coupling device (SK) and the optical fibres (LW1 to LWn) to be measured.

21. Device according to one of Claims 15 to 20, in which means (SG1, SG2) for aligning the optical fibres (LW1 to LWn; LW1* to LWn*) to be measured are provided in a multiple splicing device (MS1).

22. Device according to one of Claims 15 to 21, in which the device (ME) is a component part of an optical fibre splicer or an attenuator.

23. Method for taking measurements on a plurality of optical fibres (LW1 to LWn), light (LB) being launched at the transmitting end into the optical fibres (LW1 to LWn) respectively to be measured, and a part of this light (LB) being coupled out and evaluated in each case at the receiving end, a transmitting radiation field (SF) with its light spot (LF) being moved at the transmitting end chronologically sequentially over input sections (TC1 to TCn) of the optical fibres (LW1 to LWn) to be measured and being launched into the latter, the mutual temporal distribution (RP) of receiving radiation fields (RF1 to RFn) assigned to the input at the transmitting end being detected at the receiving end, this temporal distribution (RP) being provided for evaluation, in particular according to one of the preceding method claims, and the light spot (LF) of the transmitting radiation field (SF) being generated in such a way that at the input site it has a greater spatial extent perpendicular to the propagation direction (x) of the transmitting radiation field (SF) than in its scanning direction (y), with the result that the coupling ratios are rendered substantially independent of optical fibre coupling characteristics at the transmitting and/or receiving ends during the movement of the light spot (LF) over the input sections (TC1 to TCn) of the optical fibres (LW1 to LWn) to be measured on the basis of this spatial imaging of the light spot (LF).

24. Method according to Claim 23, the transmitting radiation field (SF) being imaged in such a way that an approximately linear light spot (LF) is generated perpendicular to the propagation direction (x) of the transmitting radiation field (SF).

25. Device (ME) for taking measurements on a plurality of optical fibres (LW1 to LWn), having an optical transmitting/coupling device (SK), which can be coupled to the optical fibres (LW1 to LWn) to be measured in each case, and having an optical receiver (OR1) which has at least one receiving element (GLE) to which an evaluation device (AE1) is assigned, the transmitting/coupling device (SK) being designed in such a way that, in particular according to one of the preceding method claims, in each case a transmitting radiation field (SF) with its light spot (LF) can be moved at the transmitting end chronologically sequentially over input sections (TC1 to TCn) of the optical fibres (LW1 to LWn) to be measured and can be launched into the latter, the receiving element (GLE) being aligned and constructed in the optical receiver (OR1) such that said element in each case detects the temporal distribution (RP) of the receiving radiation fields (RF1 to RFn), assigned to the input at the transmitting end, of the optical fibres (LW1 to LWn) to be measured, generates received signals (DS2) therefrom and feeds the latter to an evaluation device (AE1), and means for imaging the transmitting radiation field (SF) being provided in the transmitting/coupling device (SK) in such a way that the light spot (LF) generated by them at the input site has a spatial extent perpendicular to the propagation direction (x) of the transmitting radiation field (SF) which is so much larger than in its scanning direction (y) that the coupling ratios are rendered substantially independent of optical fibre coupling characteristics at the transmitting and/or receiving ends during the movement of the light spot (LF) over the input sections (TC1 to TCn) of the optical fibres (LW1 to LWn) to be measured on the basis of this spatial imaging of the light spot (LF).

26. Method for taking measurements on a plurality of optical fibres (LW1 to LWn), light (LB) being launched at the transmitting end into the optical fibres (LW1 to LWn) respectively to be measured, and a part of this light (LB) being coupled out and evaluated in each case at the receiving end, a transmitting radiation field (SF) with its light spot (LF) being moved at the transmitting end chronologically sequentially over input sections (TC1 to TCn) of the optical fibres (LW1 to LWn) to be measured and being launched into the latter, the mutual temporal distribution (RP) of receiving radiation fields (RF1 to RFn) assigned to the input at the transmitting end being detected at the receiving end, this temporal distribution (RP) being provided for evaluation, in particular according to one of the preceding method claims, and during subsequent measurements control operations being initiated at the receiving end on the basis of this recording of the temporal distribution of the receiving radiation fields in such a way that the coupling ratios are rendered substantially independent of optical fibre coupling characteristics at the transmitting and/or receiving ends during the movement of the light spot (LF) over the input sections (TC1 to TCn) of the optical fibres (LW1 to LWn) to be measured on the basis of this temporal distribution of the receiving radiation fields.

27. Method according to Claim 26, the temporal distribution (RP) of the receiving radiation fields (RF1 to RFn) assigned to the input at the transmitting end being recorded and stored at the receiving end in at least a first pass of the transmitting radiation field at the transmitting end.

28. Method according to one of Claims 26 or 27, the control operation at the receiving end being to control an integrator (INT) which is used in each case to determine selectively the optical power of the receiving radiation fields (RF1 to RFn) detected chronologically in sequence.

29. Method according to Claims 26 and 28, the control operation at the receiving end being to control an amplifier (AM) which is used in each case to amplify selectively the receiving radiation fields (RF1 to RFn) detected chronologically in sequence.

30. Device (ME) for taking measurements on a plurality of optical fibres (LW1 to LWn), having an optical transmitting/coupling device (SK), which can be coupled to the optical fibres (LW1 to LWn) to be measured in each case, and having an optical receiver (OR1) which has at least one receiving element (GLE) to which an evaluation device (AE1) is assigned, the transmitting/coupling device (SK) being designed in such a way that, in particular according to one of the preceding method claims, in each case a transmitting radiation field (SF) with its light spot (LF) can be moved at the transmitting end chronologically sequentially over input sections (TC1 to TCn) of the optical fibres (LW1 to LWn) to be measured and can be launched into the latter, the receiving element (GLE) being aligned and constructed in the optical receiver (OR1) such that said element in each case detects the temporal distribution (RP) of the receiving radiation fields (RF1 to RFn), assigned to the input at the transmitting end, of the optical fibres (LW1 to LWn) to be measured, generates received signals (DS2) therefrom and feeds the latter to an evaluation device (AE1), and control means (INT) being provided which during subsequent measurements initiate control processes at the receiving end on the basis of this recording of the temporal distribution of the receiving radiation fields (RF1 to RFn) in such a way that the coupling ratios are rendered substantially independent of optical fibre coupling characteristics at the transmitting and/or receiving ends during the movement of the light spot (LF) over the input sections (TC1 to TCn) of the optical fibres (LW1 to LWn) to be measured on the basis of this temporal distribution of the receiving radiation fields.

31. Device according to Claim 30, in which the evaluation device (AE1) has a central processor unit (CPU) with an associated measured value memory (MEM) in such a way that it is possible to record the received signals (DS) which are generated at the receiving end in at least one first pass, at the transmitting end, of a transmitting radiation field.

32. Device according to one of Claims 30 or 31, in which control means are assigned at the receiving end to the optical receiver (OR1) and/or the evaluation device (AE1).

33. Device according to Claim 32, in which the control means at the receiving end are provided as an integrator (INT) for selectively determining the optical powers of the receiving radiation fields (RF1 to RFn).

34. Device according to one of Claims 30 to 33, in which tripping means (for example SW) are assigned to the optical receiver (OR1) and/or the evaluation device (AE1).

35. Device according to Claim 34, in which a switch (SW) is provided as the tripping means.

36. Device according to one of Claims 30 to 35, in which the control means at the receiving end is provided as an amplifier (AM) by means of which a gain can be set individually for each receiving radiation field (RF1-RFn) to be measured.

37. Method for taking measurements on a plurality of optical fibres (LW1 to LWn), light (LB) being launched at the transmitting end into the optical fibres (LW1 to LWn) respectively to be measured, and a part of this light (LB) being coupled out and evaluated in each case at the receiving end, the transmitting radiation field (SF) with its light spot (LF) being moved at the transmitting end chronologically sequentially over input sections (TC1 to TCn) of the optical fibres (LW1 to LWn) to be measured and being launched into the latter, the mutual temporal distribution (RP) of receiving radiation fields (RF1 to RFn) assigned to the input at the transmitting end being detected at the receiving end, this temporal distribution (RP) being provided for evaluation, in particular according to one of the preceding method claims, and the focussing surface (FC1) of the transmitting radiation field (SF) being inclined with respect to a plane (y, z) imagined as being perpendicular to the radiation direction (x), in the direction of the input surface (EF) of the input section (TC1) in such a way that the coupling ratios are rendered substantially independent of optical fibre coupling characteristics at the transmitting and/or receiving ends during the movement of the light spot (LF) over the input sections (TC1 to TCn) of the optical fibres (LW1 to LWn) to be measured on the basis of this inclination of the focussing surface (FC1) of the transmitting radiation field (SF).

38. Method according to Claim 37, the focussing surface (FC1), regarded in a plane (x, z) in which the input section (TC1) of the optical fibre (LW1) extends, being imaged in an inclined fashion as a focussing line approximately parallel to the chord (SH) of the input section (TC1).

39. Method according to Claim 38, a slope height which is selected to be approximately equal to or greater than the maximum possible core position tolerance of the optical fibre (LW1) to be measured being set in this plane (x, z) for the inclined focussing surface (FC1).

40. Method according to one of Claims 38 or 39, the focussing line being laid in this plane (x, z) as tangentially as possible approximately in the middle of the input section (TC1).

41. Method according to one of Claims 37 to 40, the shape of the focussing surface (FC2) being matched to the input surface (EF) of the input section (TC1).

42. Method according to one of Claims 37 to 41, the focussing surface (FC2) being brought into coincidence with the input surface (EF) of the input section (TC1).

43. Method according to one of Claims 37 to 42, the transmitting radiation field (SF) being imaged spatially in such a way that its focussing surface (FC1) is generated with a larger spatial extent in the longitudinal direction of the curved optical fibre section (TC1) than in its scanning direction (y).

44. Method according to one of Claims 37 to 43, the light (LB) of the transmitting radiation field (SF) being concentrated along its beam path to two astigmatic image surfaces (MBL, SBL).

45. Device (ME) for taking measurements on a plurality of optical fibres (LW1 to LWn), having an optical transmitting/coupling device (SK), which can be coupled to the optical fibres (LW1 to LWn) to be measured in each case, and having an optical receiver (OR1) which has at least one receiving element (GLE) to which an evaluation device (AE1) is assigned, the transmitting/coupling device (SK) being designed in such a way that, in particular according to one of the preceding method claims, in each case a transmitting radiation field (SF) with its light spot (LF) can be moved at the transmitting end chronologically sequentially over input sections (TC1 to TCn) of the optical fibres (LW1 to LWn) to be measured and can be launched into the latter, the receiving element (GLE) being aligned and constructed in the optical receiver (OR1) such that said element in each case detects the temporal distribution (RP) of the receiving radiation fields (RF1 to RFn), assigned to the input at the transmitting end, of the optical fibres (LW1 to LWn) to be measured, generates received signals (DS2) therefrom and feeds the latter to an evaluation device (AE1), and at least one imaging means (GKE) being provided which inclines the focussing surface (FC1) of the transmitting radiation field (SF) with respect to a plane (y, z) imagined as being perpendicular to the radiation direction (x), in the direction of the input surface (EF) of the input section (TC1) in such a way that the coupling ratios are rendered substantially independent of optical fibre coupling characteristics at the transmitting and/or receiving ends during the movement of the light spot (LF) over the input sections (TC1 to TCn) of the optical fibres (LW1 to LWn) to be measured on the basis of this inclination of the focussing surface (FC1) of the transmitting radiation field (SF).

46. Device according to Claim 45, in which a glass wedge (GKE) is provided as imaging means in the transmitting radiation field (SF).

47. Method for taking measurements on a plurality of optical fibres (LW1 to LWn), light (LB) being launched at the transmitting end into the optical fibres (LW1 to LWn) respectively to be measured, and a part of this light (LB) being coupled out and evaluated in each case at the receiving end, the transmitting radiation field (SF) with its light spot (LF) being moved at the transmitting end chronologically sequentially over input sections (TC1 to TCn) of the optical fibres (LW1 to LWn) to be measured and being launched into the latter, the mutual temporal distribution (RP) of receiving radiation fields (RF1 to RFn) assigned to the input at the transmitting end being detected at the receiving end, this temporal distribution (RP) being provided for evaluation, in particular according to one of the preceding method claims, and the light spot (LF) of the transmitting radiation field (SF) being moved to and fro along the longitudinal axis of the optical fibre (LW1) to be measured in such a way that the coupling ratios are rendered substantially independent of optical fibre coupling characteristics at the transmitting and/or receiving ends during the movement of the light spot (LF) over the input sections (TC1 to TCn) of the optical fibres (LW1 to LWn) to be measured on the basis of this to-and-fro movement of the light spot (LF).

48. Method according to Claim 47, the transmitting radiation field (SF) being moved to and fro along a displacement line (z) perpendicular to the propagation direction (x) of the transmitting radiation field (SF) and perpendicular to the scanning direction (y) thereof.

49. Method according to one of Claims 47 or 48, the light spot (LF) being moved to and fro more quickly along the longitudinal axis of the optical fibre (LW1) than it is moved in its scanning direction (y).

50. Device (ME) for taking measurements on a plurality of optical fibres (LW1 to LWn), having an optical transmitting/coupling device (SK), which can be coupled to the optical fibres (LW1 to LWn) to be measured in each case, and having an optical receiver (OR1) which has at least one receiving element (GLE) to which an evaluation device (AE1) is assigned, the transmitting/coupling device (SK) being designed in such a way that, in particular according to one of the preceding method claims, in each case a transmitting radiation field (SF) with its light spot (LF) can be moved at the transmitting end chronologically sequentially over input sections (TC1 to TCn) of the optical fibres (LW1 to LWn) to be measured and can be launched into the latter, the receiving element (GLE) being aligned and constructed in the optical receiver (OR1) such that said element in each case detects the temporal distribution (RP) of the receiving radiation fields (RF1 to RFn), assigned to the input at the transmitting end, of the optical fibres (LW1 to LWn) to be measured, generates received signals (DS2) therefrom and feeds the latter to an evaluation device (AE1), and a deflecting device (ULS) being provided which moves the light spot (LF) of the transmitting radiation field (SF) to and fro along the longitudinal axis of the optical fibre (LW1) to be measured in such a way that the coupling ratios are rendered substantially independent of optical fibre coupling characteristics at the transmitting and/or receiving ends during the movement of the light spot (LF) over the input sections (TC1 to TCn) of the optical fibres (LW1 to LWn) to be measured on the basis of this to-and-fro movement of the light spot (LF).

**Revendications**

1. Procédé pour faire des mesures sur plusieurs fibres optiques (LW1 à LWn), dans lequel on introduit, côté émission, de la lumière (LB) dans la fibre optique à mesurer (LW1 à LWn), et on extrait, côté réception, une partie de cette lumière (LB) et on l'exploite, dans lequel on déplace successivement dans le temps, côté émission, un champ de rayonnement émis (SF) avec son spot lumineux (LF) au-dessus de tronçons d'entrée (TC1 à TCn) des fibres optiques à mesurer (LW1 à LWn) et on l'introduit dans celles-ci, et on détecte, côté réception, la répartition temporelle (RP) les uns par rapport aux autres des champs de rayonnement reçus (RF1 à RFn), associés à l'introduction côté émission, des fibres optiques à mesurer (LW1 à LWn), dans lequel on dispose de cette répartition temporelle (RP) pour l'exploitation, et dans lequel, sur la base de cette répartition temporelle (RP) des champs de rayonnement reçus (RF1 à RFn), on commande, côté émission, le spot lumineux (LF) du champ de rayonnement émis (SF) de telle sorte que, sur la base de cette répartition temporelle (RP) des champs de rayonnement reçus, pendant le déplacement du spot lumineux (LF) au-dessus des tronçons d'entrée (TC1 à TCn) des fibres optiques à mesurer (LW1 à LWn), on rende les conditions de connexion côté émission et/ou côté réception largement indépendantes des caractéristiques de connexion des fibres optiques.

2. Procédé selon la revendication 1, dans lequel on détermine à partir de la répartition temporelle (RP) des champs de rayonnement reçus (RF1 à RFn) la position dans l'espace des fibres optiques (LW1 à LWn) et on en dispose pour l'exploitation.

3. Procédé selon la revendication 2, dans lequel on représente et/ou on enregistre la position dans l'espace des fibres optiques (LW1 à LWn).

4. Procédé selon l'une des revendications précédentes, dans lequel on détermine à partir de la répartition temporelle (RP) des champs de rayonnement reçus (RF1 à RFn) respectivement leur puissance lumineuse et on en dispose pour l'exploitation.

5. Procédé selon la revendication 4, dans lequel, côté émission, on commande au moyen de ces puissances lumineuses le spot lumineux (LF) du champ de rayonnement émis (SF).

6. Procédé selon l'une des revendications 4 ou 5, dans lequel on représente et/ou on enregistre les puissances lumineuses des fibres optiques (LW1 à LWn).

7. Procédé selon l'une des revendications précédentes, dans lequel on détermine à partir de la répartition temporelle (RP) des champs de rayonnement reçus (RF1 à RFn) leur séquence temporelle.

8. Procédé selon la revendication 7, dans lequel on commande la séquence temporelle côté émission des intervalles de temps d'introduction (T1 à T4) du spot lumineux (LF) à l'aide de la séquence temporelle, enregistrée auparavant côté réception, de champs de rayonnement reçus (RF1 à RFn).

9. Procédé selon l'une des revendications précédentes, dans lequel on détecte, par au moins une mesure de référence, la répartition temporelle (RP) des champs de rayonnement reçus (RF1 à RFn), dans lequel on détermine ensuite la position dans l'espace des fibres optiques à mesurer (LW1 à LWn) ainsi que les puissances lumineuses qui passent dans ces fibres optiques, et dans lequel, au moyen de ces grandeurs de commande, on fixe, côté émission, pour des mesures suivantes, un temps d'introduction ainsi qu'une puissance d'émission du champ de rayonnement émis (SF) pendant son déplacement au-dessus des tronçons d'entrée (TC1 à TCn) des fibres optiques à mesurer (LW1 à LWn).

10. Procédé selon l'une des revendications précédentes, dans lequel on introduit dans les fibres optiques à mesurer (LW1 à LWn) le champ de rayonnement émis (SF) pendant des intervalles de temps d'introduction compris entre 1 et 10 % de la durée du déplacement du spot lumineux, et dans lequel pour les temps d'introduction du champ de rayonnement émis (SF) on choisit des intervalles de temps compris entre 3 et 30 % de la durée du déplacement du spot lumineux.

11. Procédé selon l'une des revendications précédentes, dans lequel on émet de façon continue le champ de rayonnement émis (SF) pendant son déplacement côté émission avec son spot lumineux (LF) sur les tronçons d'entrée (TC1 à TCn) des fibres optiques à mesurer (LW1 à LWn).

12. Procédé selon l'une des revendications 1 à 10, dans lequel on émet suivant un fonctionnement par impulsions le champ de rayonnement émis (SF) pendant son déplacement côté émission avec son spot lumineux (LF) sur les tronçons d'entrée (TC1 à TCn) des fibres optiques à mesurer (LW1 à LWn).

13. Procédé selon l'une des revendications précédentes, dans lequel on déplace le champ de rayonnement émis (SF) avec son spot lumineux (LF) de façon continue au-dessus des fibres optiques à mesurer (LW1 à LWn).

14. Procédé selon l'une des revendications 1 à 12, dans lequel on déplace le champ de rayonnement émis (SF) avec son spot lumineux (LF) pas à pas au-dessus des fibres optiques à mesurer (LW1 à LWn).

15. Dispositif (ME) pour faire des mesures sur plusieurs fibres optiques (LW1 à LWn), comprenant un dispositif de connexion et d'émission optique (SK), qui peut être raccordé à la fibre optique à mesurer (LW1 à LWn), ainsi qu'un récepteur optique (OR1) qui comporte au moins un élément récepteur (GLE) auquel est associé un dispositif d'exploitation (AE1), dans lequel le dispositif de connexion et d'émission (SK) est conçu de telle sorte que, notamment selon l'une des revendications de procédé précédentes, côté émission, un champ de rayonnement émis (SF) avec son spot lumineux (LF) peut être déplacé successivement dans le temps au-dessus des tronçons d'entrée (TC1 à TCn) des fibres optiques à mesurer (LW1 à LWn) et être introduit dans celles-ci, dans lequel l'élément récepteur (GLE) est conçu et dirigé dans le récepteur optique (OR1) de telle sorte qu'il détecte la répartition temporelle (RP) des champs de rayonnement reçus (RF1 à RFn), associés à l'introduction côté émission, des fibres optiques à mesurer (LW1 à LWn), et qu'il en produit des signaux de réception (DS2) qu'il envoie à un dispositif d'exploitation (AE1), et dans lequel un dispositif de commande (ASV1), côté émission pour le dispositif de connexion et d'émission (SK), est conçu et relié au dispositif d'exploitation (AE1) côté réception de telle sorte que, côté émission, le spot lumineux (LF) du champ de rayonnement émis (SF) est commandé au moyen de la répartition temporelle (RP) des champs de rayonnement reçus (RF1 à RFn) de telle sorte que, sur la base de cette répartition temporelle des champs de rayonnement reçus, pendant le déplacement du spot lumineux (LF) au-dessus des tronçons d'entrée (TC1 à TCn) des fibres optiques à mesurer (LW1 à LWn), les conditions de connexion sont rendues côté émission et/ou côté réception largement indépendantes des caractéristiques de connexion des fibres optiques.

16. Dispositif selon la revendication 15, dans lequel les fibres optiques à mesurer (LW1 à LWn) sont liées mécaniquement entre elles, de préférence sous la forme d'un ruban de fibres optiques (BL1, BL2).

17. Dispositif selon l'une des revendications 15 ou 16, dans lequel un coupleur à cintrage (BK1) est prévu dans le dispositif de connexion et d'émission (SK).

18. Dispositif selon l'une des revendications 15 à 17, dans lequel il est prévu dans le dispositif d'exploitation (AE1) une unité de calcul (CPU) qui exploite la répartition temporelle (RP) des champs de rayonnement reçus (RF1 à RFn).

19. Dispositif selon l'une des revendications 15 à 18, dans lequel il est prévu dans le dispositif de connexion et d'émission (SK) un dispositif de déviation de faisceau (BS) pour le déplacement du champ de rayonnement émis (SF).

20. Dispositif selon l'une des revendications 15 à 19, dans lequel une optique de reproduction (EO) est prévue entre le dispositif de connexion et d'émission optique (SK) et les fibres optiques à mesurer (LW1 à LWn).

21. Dispositif selon l'une des revendications 15 à 20, dans lequel il est prévu des moyens (SG1, SG2) pour aligner les fibres optiques à mesurer (LW1 à LWn ; LW1* à LWn*) dans un dispositif à épissures multiples (MS1).

22. Dispositif selon l'une des revendications 15 à 21, dans lequel le dispositif (ME) fait partie d'un appareil à épisser des fibres optiques ou d'un appareil de mesure d'affaiblissement.

23. Procédé pour faire des mesures sur plusieurs fibres optiques (LW1 à LWn), dans lequel on introduit, côté émission, de la lumière (LB) dans la fibre optique à mesurer (LW1 à LWn) considérée, et on extrait, côté réception, une partie de cette lumière (LB) et on l'exploite, dans lequel on déplace successivement dans le temps, côté émission, un champ de rayonnement émis (SF) avec son spot lumineux (LF) au-dessus de tronçons d'entrée (TC1 à TCn) des fibres optiques à mesurer (LW1 à LWn) et on l'introduit dans celles-ci, et on détecte, côté réception, la répartition temporelle (RP) les uns par rapport aux autres des champs de rayonnement reçus (RF1 à RFn), associés à l'introduction côté émission, des fibres optiques à mesurer (LW1 à LWn), dans lequel on dispose pour l'exploitation de cette répartition temporelle (RP), notamment selon l'une des revendications de procédé précédentes, et dans lequel on produit le spot lumineux (LF) du champ de rayonnement émis (SF) de telle sorte qu'il présente au point d'entrée une plus grande étendue spatiale perpendiculairement à la direction de propagation (x) du champ de rayonnement émis (SF) que dans sa direction de balayage (y) de telle sorte que, en raison de cette reproduction spatiale du spot lumineux (LF), on rend, pendant le déplacement du spot lumineux (LF) au-dessus des tronçons d'entrée (TC1 à TCn) des fibres optiques à mesurer (LW1 à LWn), les conditions de connexion côté émission et/ou côté réception largement indépendantes des caractéristiques de connexion des fibres optiques.

24. Procédé selon la revendication 23, dans lequel on reproduit le champ de rayonnement émis (SF) de telle sorte que l'on produit un spot lumineux (LF) sensiblement en forme de ligne perpendiculairement à la direction de propagation (x) du champ de rayonnement émis (SF).

25. Dispositif (ME) pour faire des mesures sur plusieurs fibres optiques (LW1 à LWn), comprenant un dispositif de connexion et d'émission optique (SK) qui peut être raccordé à la fibre optique à mesurer (LW1 à LWn), ainsi qu'un récepteur optique (OR1) qui comporte au moins un élément récepteur (GLE) auquel est associé un dispositif d'exploitation (AE1), dans lequel le dispositif de connexion et d'émission (SK) est conçu de telle sorte que, notamment selon l'une des revendications de procédé précédentes, côté émission, un champ de rayonnement émis (SF) avec son spot lumineux (LF) peut être déplacé successivement dans le temps au-dessus des tronçons d'entrée (TC1 à TCn) des fibres optiques à mesurer (LW1 à LWn) et être introduit dans celles-ci, dans lequel l'élément récepteur (GLE) est conçu et dirigé dans le récepteur optique (OR1), de telle sorte qu'il détecte la répartition temporelle (RP) des champs de rayonnement reçus (RF1 à RFn), associés à l'introduction côté émission, des fibres optiques à mesurer (LW1 à LWn), qu'il en produit des signaux de réception (DS2) qu'il envoie à un dispositif d'exploitation (AE1), et dans lequel il est prévu dans le dispositif de connexion et d'émission (SK) des moyens de reproduction du champ de rayonnement émis (SF) de telle sorte que le spot lumineux (LF) qui est produit par ces moyens présente au point d'introduction une plus grande étendue spatiale perpendiculairement à la direction de propagation (x) du champ de rayonnement émis (SF) que dans sa direction de balayage (y) de telle sorte que, en raison de cette reproduction spatiale du spot lumineux (LF), les conditions de connexion sont, pendant le déplacement du spot lumineux (LF) au-dessus des tronçons d'entrée (TC1 à TCn) des fibres optiques à mesurer (LW1 à LWn), rendues côté émission et/ou côté réception largement indépendantes des caractéristiques de connexion des fibres optiques.

26. Procédé pour faire des mesures sur plusieurs fibres optiques (LW1 à LWn), dans lequel on introduit, côté émission, de la lumière (LB) dans la fibre optique à mesurer (LW1 à LWn), et on extrait, côté réception, une partie de cette lumière (LB) et on l'exploite, dans lequel on déplace, côté émission, successivement dans le temps un champ de rayonnement émis (SF) avec son spot lumineux (LF) au-dessus de tronçons d'entrée (TC1 à TCn) des fibres optiques à mesurer (LW1 à LWn) et on l'introduit dans celles-ci, et on détecte, côté réception, la répartition temporelle (RP) les uns par rapport aux autres des champs de rayonnement reçus (RF1 à RFn), associés à l'introduction côté émission, des fibres optiques à mesurer (LW1 à LWn), dans lequel on dispose pour l'exploitation de cette répartition temporelle (RP), notamment selon l'une des revendications de procédé précédentes, et dans lequel sur la base de cet enregistrement de la répartition temporelle des champs de rayonnement reçus, on déclenche côté réception des opérations de commande lors de mesures suivantes de telle sorte que, sur la base de cette répartition temporelle des champs de rayonnement reçus, on rend, pendant le déplacement du spot lumineux (LF) au-dessus des tronçons d'entrée (TC1 à TCn) des fibres optiques à mesurer (LW1 à LWn), les conditions de connexion côté émission et/ou côté réception largement indépendantes des caractéristiques de connexion des fibres optiques.

27. Procédé selon la revendication 26, dans lequel, lors d'au moins un premier passage côté émission du champ de rayonnement émis, on enregistre et on conserve côté réception la répartition temporelle (RP) des champs de rayonnement reçus (RF1 à RFn) associés à l'introduction de lumière côté émission.

28. Procédé selon l'une des revendications 26 ou 27, dans lequel on met en oeuvre comme opération de commande, côté réception, la commande d'un intégrateur (INT) par lequel on détermine de manière sélective la puissance lumineuse respective des champs de rayonnement reçus (RF1 à RFn) détectés successivement dans le temps.

29. Procédé selon l'une des revendications 26 à 28, dans lequel on met en oeuvre comme opération de commande, côté réception, la commande d'un amplificateur (AM) par lequel on amplifie de manière sélective respectivement les champs de rayonnement reçus (RF1 à RFn) détectés successivement dans le temps.

30. Dispositif (ME) pour faire des mesures sur plusieurs fibres optiques (LW1 à LWn), comprenant un dispositif de connexion et d'émission optique (SK) qui peut être raccordé à la fibre optique à mesurer (LW1 à LWn), ainsi qu'un récepteur optique (OR1) qui comporte au moins un élément récepteur (GLE) auquel est associé un dispositif d'exploitation (AE1), dans lequel le dispositif de connexion et d'émission (SK) est conçu de telle sorte que, notamment selon l'une des revendications de procédé précédentes, côté émission, un champ de rayonnement émis (SF) avec son spot lumineux (LF) peut respectivement être déplacé successivement dans le temps au-dessus des tronçons d'entrée (TC1 à TCn) des fibres optiques à mesurer (LW1 à LWn) et être introduit dans celles-ci, dans lequel l'élément récepteur (GLE) est conçu et dirigé dans le récepteur optique (OR1) de telle sorte qu'il détecte la répartition temporelle (RP) des champs de rayonnement reçus (RF1 à RFn), associés à l'introduction côté émission, des fibres optiques à mesurer (LW1 à LWn), qu'il en produit des signaux de réception (DS2) qu'il envoie à un dispositif d'exploitation (AE1), et dans lequel il est prévu des moyens de commande (INT) qui déclenchent lors de mesures suivantes, sur la base de cet enregistrement de la répartition temporelle des champs de rayonnement reçus (RF1 à RFn), des opérations de commande côté réception de telle sorte que, sur la base de cette répartition temporelle des champs de rayonnement reçus, les conditions de connexion côté émission et/ou côté réception sont rendues, pendant le déplacement du spot lumineux (LF) au-dessus des tronçons d'entrée (TC1 à TCn) des fibres optiques à mesurer (LW1 à LWn), largement indépendantes des caractéristiques de connexion des fibres optiques.

31. Dispositif selon la revendication 30, dans lequel le dispositif d'exploitation (AE1) comporte une unité de calcul (CPU) ayant une mémoire de valeurs mesurées (MEM) associée de telle sorte que les signaux de réception (DS) produits côté réception peuvent être enregistrés dans au moins un premier passage côté émission d'un champ de rayonnement émis.

32. Dispositif selon l'une des revendications 30 ou 31, dans lequel des moyens de commande côté réception sont associés au récepteur optique (OR1) et/ ou au dispositif d'exploitation (AE1).

33. Dispositif selon la revendication 32, dans lequel il est prévu comme moyens de commande, côté réception, un intégrateur (INT) pour la détermination sélective des puissances lumineuses des champs de rayonnement reçus (RF1 à RFn).

34. Dispositif selon l'une des revendications 30 à 33, dans lequel des moyens de déclenchement (par exemple SW) côté réception sont associés au récepteur optique (OR1) et/ou au dispositif d'exploitation (AE1).

35. Dispositif selon la revendication 34, dans lequel il est prévu un interrupteur (SW) comme moyen de déclenchement.

36. Dispositif selon l'une des revendications 30 à 35, dans lequel il est prévu, comme moyens de commande côté réception, un amplificateur (AM) par lequel un facteur d'amplification peut être réglé individuellement pour chaque champ de rayonnement reçu (RF1 à RFn) à mesurer.

37. Procédé pour faire des mesures sur plusieurs fibres optiques (LW1 à LWn), dans lequel on introduit, côté émission, de la lumière (LB) dans la fibre optique à mesurer (LW1 à LWn), et on extrait, côté réception, une partie de cette lumière (LB) et on l'exploite, dans lequel on déplace, côté émission, successivement dans le temps un champ de rayonnement émis (SF) avec son spot lumineux (LF) au-dessus de tronçons d'entrée (TC1 à TCn) des fibres optiques à mesurer (LW1 à LWn) et on l'introduit dans celles-ci, et on détecte, côté réception, la répartition temporelle (RP) les uns par rapport aux autres des champs de rayonnement reçus (RF1 à RFn), associés à l'introduction côté émission, des fibres optiques à mesurer (LW1 à LWn), dans lequel on dispose pour l'exploitation de cette répartition temporelle (RP), notamment selon l'une des revendications de procédé précédentes, et dans lequel on incline la surface focale (FC1) du champ de rayonnement émis (SF) par rapport à un plan (y, z) imaginaire perpendiculaire à la direction de rayonnement (x) en direction de la surface d'entrée (EF) du tronçon d'entrée (TC1) de telle sorte que, en raison de cette inclinaison de la surface focale (FC1) du champ de rayonnement émis (SF), pendant le déplacement du spot lumineux (LF) au-dessus des tronçons d'entrée (TC1 à TCn) des fibres optiques à mesurer (LW1 à LWn), on rend les conditions de connexion côté émission et/ou côté réception largement indépendantes des caractéristiques de connexion des fibres optiques.

38. Procédé selon la revendication 37, dans lequel on reproduit obliquement la surface focale (FC1), considérée dans un plan (x, z) dans lequel s'étend le tronçon d'entrée (TC1) de la fibre optique (LW1), sous forme de ligne focale sensiblement parallèle à la corde (SH) du tronçon d'entrée (TC1).

39. Procédé selon la revendication 38, dans lequel dans ce plan (x, z), on règle pour la surface focale inclinée (FC1) une hauteur de pente que l'on choisit sensiblement égale ou supérieure à la tolérance maximale possible de la position du coeur de la fibre optique à mesurer (LW1).

40. Procédé selon l'une des revendications 38 ou 39, dans lequel dans ce plan (x, z), on place la ligne focale le plus tangentiellement possible sensiblement au milieu du tronçon d'entrée (TC1).

41. Procédé selon l'une des revendications 37 à 40, dans lequel on adapte la forme de la surface focale (FC2) à la surface d'entrée (EF) du tronçon d'entrée (TC1).

42. Procédé selon l'une des revendications 37 à 41, dans lequel on amène la surface focale (FC2) à coïncider avec la surface d'entrée (EF) du tronçon d'entrée (TC1).

43. Procédé selon l'une des revendications 37 à 42, dans lequel on reproduit dans l'espace le champ de rayonnement émis (SF) de telle sorte que sa surface focale (FC1) est produite en ayant une plus grande étendue spatiale dans la direction longitudinale du tronçon d'entrée courbe (TC1) que dans sa direction de balayage (y).

44. Procédé selon l'une des revendications 37 à 43, dans lequel on concentre la lumière (LB) du champ de rayonnement émis (SF) le long de son trajet de faisceau en deux surfaces d'image astigmates (MBL, SBL).

45. Dispositif (ME) pour faire des mesures sur plusieurs fibres optiques (LW1 à LWn), comprenant un dispositif de connexion et d'émission optique (SK) qui peut être raccordé à la fibre optique à mesurer (LW1 à LWn), ainsi qu'un récepteur optique (OR1) qui comporte au moins un élément récepteur (GLE) auquel est associé un dispositif d'exploitation (AE1), dans lequel le dispositif de connexion et d'émission (SK) est conçu de telle sorte que, notamment selon l'une des revendications de procédé précédentes, côté émission, un champ de rayonnement émis (SF) avec son spot lumineux (LF) peut être déplacé successivement dans le temps au-dessus des tronçons d'entrée (TC1 à TCn) des fibres optiques à mesurer (LW1 à LWn) et être introduit dans celles-ci, dans lequel l'élément récepteur (GLE) est conçu et dirigé dans le récepteur optique (OR1) de telle sorte qu'il détecte la répartition temporelle (RP) des champs de rayonnement reçus (RF1 à RFn), associés respectivement à l'introduction côté émission, des fibres optiques à mesurer (LW1 à LWn), qu'il en produit des signaux de réception (DS2) qu'il envoie à un dispositif d'exploitation (AE1), et dans lequel il est prévu au moins un moyen de reproduction (GKE) qui incline la surface focale (FC1) du champ de rayonnement émis (SF) par rapport à un plan (y, z) imaginaire perpendiculaire à la direction de rayonnement (x) en direction de la surface d'entrée (EF) du tronçon d'entrée (TC1) de telle sorte que, en raison de cette inclinaison de la surface focale (FC1) du champ de rayonnement émis (SF), les conditions de connexion sont rendues, pendant le déplacememt du spot lumineux (LF) au dessus des tronçons d'entrée (TC1 à TCn) des fibres optiques à mesurer (LW1 à LWn), côté émission et/ou côté réception largement indépendantes des caractéristiques de connexion des fibres optiques.

46. Dispositif selon la revendication 45, dans lequel un coin en verre (GKE) est prévu dans le champ de rayonnement émis (SF) comme moyen de reproduction.

47. Procédé pour faire des mesures sur plusieurs fibres optiques (LW1 à LWn), dans lequel on introduit, côté émission, de la lumière (LB) dans la fibre optique à mesurer (LW1 à LWn), et on extrait, côté réception, une partie de cette lumière (LB) et on l'exploite, dans lequel on déplace, côté émission, successivement dans le temps un champ de rayonnement émis (SF) avec son spot lumineux (LF) au-dessus de tronçons d'entrée (TC1 à TCn) des fibres optiques à mesurer (LW1 à LWn) et on l'introduit dans celles-ci, et on détecte, côté réception, la répartition temporelle (RP) les uns par rapport aux autres des champs de rayonnement reçus (RF1 à RFn), associés à l'introduction côté émission, des fibres optiques à mesurer (LW1 à LWn), dans lequel on dispose pour l'exploitation de cette répartition temporelle (RP), notamment selon l'une des revendications de procédé précédentes, et dans lequel on déplace en va-et-vient le spot lumineux (LF) du champ de rayonnement émis (SF) le long de l'axe longitudinal de la fibre optique à mesurer (LW1) de telle sorte que, en raison de ce déplacement en va-et-vient du spot lumineux (LF), on rend, pendant le déplacement du spot lumineux (LF) au-dessus des tronçons d'entrée (TC1 à TCn) des fibres optiques à mesurer (LW1 à LWn), les conditions de connexion côté émission et/ou côté réception largement indépendantes des caractéristiques de connexion des fibres optiques.

48. Procédé selon la revendication 47, dans lequel on déplace en va-et-vient le champ de rayonnement émis (SF) le long d'une ligne de déplacement (z) perpendiculairement à la direction de propagation (x) du champ de rayonnement émis (SF) et perpendiculairement à sa direction de balayage (y).

49. Procédé selon l'une des revendications 47 ou 48, dans lequel on déplace en va-et-vient le spot lumineux (LF) le long de l'axe longitudinal de la fibre optique (LW1) plus rapidement qu'il n'est déplacé dans sa direction de balayage (y).

50. Dispositif (ME) pour faire des mesures sur plusieurs fibres optiques (LW1 à LWn), comprenant un dispositif de connexion et d'émission optique (SK) qui peut être raccordé à la fibre optique à mesurer (LW1 à LWn), ainsi qu'un récepteur optique (OR1) qui comporte au moins un élément récepteur (GLE) auquel est associé un dispositif d'exploitation (AE1), dans lequel le dispositif de connexion et d'émission (SK) est conçu de telle sorte que, notamment selon l'une des revendications de procédé précédentes, côté émission, un champ de rayonnement émis (SF) avec son spot lumineux (LF) peut être déplacé successivement dans le temps au-dessus des tronçons d'entrée (TC1 à TCn) des fibres optiques à mesurer (LW1 à LWn) et être introduit dans celles-ci, dans lequel l'élément récepteur (GLE) est conçu et dirigé dans le récepteur optique (OR1) de telle sorte qu'il détecte la répartition temporelle (RP) des champs de rayonnement reçus (RF1 à RFn), associés respectivement à l'introduction côté émission, des fibres optiques à mesurer (LW1 à LWn), qu'il en produit des signaux de réception (DS2) qu'il envoie à un dispositif d'exploitation (AE1), et dans lequel il est prévu un dispositif de déviation (ULS) qui déplace en va-et-vient le spot lumineux (LF) du champ de rayonnement émis (SF) le long de l'axe longitudinal de la fibre optique à mesurer (LW1) de telle sorte que, en raison de ce déplacement en va-et-vient du spot lumineux (LF), les conditions de connexion sont rendues, pendant le déplacement du spot lumineux (LF) au-dessus des tronçons d'entrée (TC1 à TCn) des fibres optiques à mesurer (LW1 à LWn), côté émission et/ou côté réception largement indépendantes des caractéristiques de connexion des fibres optiques.

FIG 1

FIG 2

# FIG 3

# FIG 4

FIG 5

FIG 6

FIG 7

FIG 8

FIG 9

FIG 10

FIG 11

EP 0 593 980 B1

# FIG 12

# FIG 13

# FIG 15

# FIG 16

FIG 14

FIG 17

FIG 18

FIG 19

FIG 20

FIG 21

FIG 22

FIG 23